# EUROPEAN PATENT APPLICATION

(11) **EP 4 831 089 A2**
(43) Date of publication of application: **28.10.2026**
(21) Application number: 26195032.3
(22) Date of filing: 06.03.2025
(51) Int. Cl.: B65G 1/04

(54) **WAREHOUSING SYSTEM AND TRANSPORT DEVICE**

(30) Priority: 04.06.2024 CN 202410719067; 04.06.2024 CN 202410718478
(62) Document number(s) of the earlier application(s) in accordance with Art. 76 EPC: 25818773.1 / 4 825 755
(71) Applicant: Hangzhou Hikrobot Co., Ltd., Hangzhou, Zhejiang 310051 (CN)
(72) Inventor: WU, Chao, Hangzhou, Zhejiang 310051 (CN); ZHAO, Luhao, Hangzhou, Zhejiang 310051 (CN); WU, Yonghai, Hangzhou, Zhejiang 310051 (CN); LI, Biyong, Hangzhou, Zhejiang 310051 (CN); Duan, Jinchao, Hangzhou, Zhejiang 310051 (CN); LI, Qingwei, Hangzhou, Zhejiang 310051 (CN)
(74) Representative: Yang, Shu

(57) **Abstract**

A warehousing system and a transport device (1-10). The warehousing system comprises racks (1-20), track assemblies (1-21), and a transport device (1-10). Each track assembly (1-21) comprises at least a first track (1-211) and a second track (1-212) spaced apart in a height direction of the corresponding rack (1-20) and fixed around the periphery of the rack (1-20). The first track (1-211) comprises first longitudinal tracks (1-2112) and first transverse tracks (1-2111). The second track (1-212) comprises second longitudinal 0tracks (1-2122) and second transverse tracks (1-2121). The first transverse tracks (1-2111) and the second transverse tracks (1-2121) are used for switching aisles (1-22). The transport device (1-10) comprises a colunm assembly (1-100), and a lifting/lowering mechanism (1-400), a first driving mechanism (1-200), a second driving mechanism (1-300) and a goods pick-up mechanism (1-500) which are arranged on the column assembly (1-100). The lifting/lowering mechanism (1-400) is connected to the goods pick-up mechanism (1-500) and drives the goods pick-up mechanism (1-500) to move up and down along the column assembly (1-100). The first driving mechanism (1-200) and the second driving mechanism (1-300) are used for driving the transport device (1-10) to move along the track assembly (1-21) and traverse between two adjacent aisles (1-22), enabling the pickup and placement of goods on adjacent racks (1-20).

## Description

This application claims priority to Chinese Patent Application No. 202410719067.4 entitled "A Warehousing System and Transport Device" and Chinese Patent Application No. 202410718478.1 entitled "Warehousing System and Transport Device" filed with the China National Intellectual Property Administration on June 4, 2024, the entire contents of which are incorporated herein by reference.

### Technical Field

The present application relates to the technical field of warehousing and transport, and in particular to a warehousing system and a transport device.

### Background

With the continuous development of the logistics industry, intelligent warehousing has become an important development direction of the logistics industry. The application scope and advantages of automated three-dimensional warehouses are continuously expanding, becoming an effective means for logistics enterprises to improve warehousing efficiency and reduce costs. The advantage of a three-dimensional warehouse lies in its high space utilization, which can significantly reduce the logistics costs of enterprises. By stacking goods vertically and reducing the warehouse floor area, enterprises can save land rental and construction costs. In addition, the automated equipment for the three-dimensional warehouse can reduce the time and cost of manual transport, further reducing logistics costs.

Currently, a container transport robot which travels in an aisle by means of a mobile chassis, is generally used, occupying a large space and having a slow transport speed, failing to achieve flexible scheduling of the transport device and affecting the overall efficiency of picking and placing goods.

### Summary

The purpose of the embodiments of the present application is to provide a warehousing system and a transport device, wherein the transport device in the warehousing system can be flexibly scheduled to improve the overall efficiency of picking and placing goods. The specific technical solutions are as follows.

A first aspect of the present application provides a warehousing system, including: a plurality of goods shelves spaced apart along a first direction, wherein an aisle being formed between adjacent goods shelves, and the first direction being perpendicular to a height direction of the goods shelves; a track assembly at least including a first track and a second track, the first track and the second track being spaced apart in the height direction of the goods shelves and arranged on an outer side of at least one goods shelf of the goods shelves; the first track including a first longitudinal track provided between adjacent goods shelves and a first transverse track provided on an outer side of the at least one goods shelf in a direction perpendicular to the first direction, the second track including a second longitudinal track provided between adjacent goods shelves and a second transverse track provided on the outer side of the at least one goods shelf in a direction perpendicular to the first direction, the first transverse track and the second transverse track being configured for switching the aisle; a transport device including a column assembly, as well as a lifting mechanism, a first driving mechanism, a second driving mechanism and a goods pick-up mechanism provided at the column assembly, the lifting mechanism being connected to the goods pick-up mechanism and driving the goods pick-up mechanism to move up and down along the column assembly, the goods pick-up mechanism being configured for transporting goods at different heights on the goods shelves; wherein the first driving mechanism and the second driving mechanism are configured for driving the transport device to travel along the track assembly and traverse through two adjacent aisles, to enable pick-up and placement of goods on adjacent goods shelves.

A second aspect of the present application provides a transport device for traveling on a curved track, wherein the transport device includes a column assembly, as well as at least one set of lifting mechanism, at least one set of driving mechanism and at least one set of goods pick-up mechanism provided at the column assembly, the lifting mechanism being connected to the goods pick-up mechanism and driving the goods pick-up mechanism to move up and down along the column assembly, the goods pick-up mechanism being configured for transporting goods at different heights on goods shelves; the column assembly includes a first column and a second column extending along a height direction of the goods shelves and spaced apart in a direction perpendicular to the height direction; the driving mechanism includes a first roller rotatably connected to the first column and a second roller rotatably connected to the second column, the first roller and the second roller being configured for traveling on a curved track, at least one of the first roller and the second roller being connected to a first drive motor, so as to drive the first roller and the second roller to roll along the curved track and drive the column assembly to go straight or turn.

Beneficial effects of the embodiments of the present application:
In the warehousing system and the transport device provided by the embodiments of the present application, the first track and the second track are arranged on an outer side of the goods shelves, and the transport device can travel on the first track and the second track, realizing position change from one side of the goods shelf to the other side of the goods shelf, thereby being capable of picking-up and placing goods on both sides of the goods shelf. That is, the transport device can realize track switching by traveling along the first track and the second track, so that the number of transport devices can be reduced when the workload is low, and more transport devices can be scheduled in adjacent areas when the workload is high, thus improving transport efficiency and transport flexibility.

A third aspect of the present application provides a warehousing system, including: a plurality of goods shelves spaced apart, wherein an aisle being formed between adjacent goods shelves; a first track and a second track, the first track and the second track being spaced apart in a height direction of the goods shelves and arranged on an outer side of the goods shelves; wherein the first track includes a plurality of first goods shelf rails arranged along a first direction and located on at least one side of same one of the goods shelves respectively, at least one first transfer rail arranged along a second direction and located on at least one side of the goods shelves, and first connecting rails provided at at least one end of each of the first goods shelf rails or at at least one end of each of the at least one first transfer rail respectively, the first connecting rails being movably connected to the first goods shelf rails or the first connecting rails being movably connected to the first transfer rail, so that free ends of the first connecting rails can be connected to or disconnected from the first transfer rail or the first goods shelf rails; the second track includes a plurality of second goods shelf rails arranged along the first direction and located on at least one side of same one of goods shelves respectively, at least one second transfer rail arranged along the second direction and located on at least one side of the goods shelves, and second connecting rails provided at at least one end of each of the second goods shelf rails or at at least one end of each of the at least one second transfer rail respectively, the second connecting rails being movably connected to the second goods shelf rails or the second connecting rails being movably connected to the second transfer rail, so that free ends of the second connecting rails can be connected to or disconnected from the second transfer rail or the second goods shelf rails; wherein the first direction is an extending direction of the aisle, and the second direction intersects the first direction.

A fourth aspect of the present application provides a transport device, the transport device being capable of traveling with track switching, the transport device including a control component, a column assembly, as well as at least one set of lifting mechanism, at least one set of driving mechanism and at least one set of goods pick-up mechanism provided at the column assembly, the lifting mechanism being connected to the goods pick-up mechanism and driving the goods pick-up mechanism to move up and down along the column assembly, the goods pick-up mechanism being configured for transporting goods at different heights on goods shelves; the column assembly includes a first column and a second column extending along a height direction of the goods shelves and spaced apart in a direction perpendicular to the height direction; the driving mechanism includes a first roller rotatably connected to the first column, a second roller rotatably connected to the second column, and a telescopic assembly electrically connected to the control component, the first roller and the second roller being configured for traveling along tracks, at least one of the first roller and the second roller being connected to a first drive motor, so as to drive the first roller and the second roller to roll and drive the column assembly to go straight or turn; wherein the telescopic assembly is configured for changing a connection state of the tracks.

Beneficial effects of the embodiments of the present application:
In the warehousing system and the transport device provided by the embodiments of the present application, the first track and the second track are arranged on an outer side of the goods shelves, and the transport device can travel on the first track and the second track, realizing position change from one side of the goods shelf to the other side of the goods shelf, thereby being capable of picking-up and placing goods on both sides of the good shelve. That is, the transport device can realize track switching by traveling along the first track and the second track, so that the number of transport devices can be reduced when the workload is low, and more transport devices can be scheduled in adjacent areas when the workload is high,, thus improving transport efficiency and transport flexibility. Moreover, since the first track and the second track each have two states, namely connection state or disconnection state, the transport device traveling on the first track and the second track can achieve track switching through the connection or disconnection of the first connecting rail with the first transfer rail, so that the transport device can successfully travel between various aisles, rather than only between adjacent aisles, thus making scheduling more flexible. A small number of transport devices can cover the picking-up and placing needs when the workload is low; more transport devices can be scheduled in a demand area when the workload is high, improving transport efficiency. In addition, by providing two tracks one above the other, the transport device travels on both tracks simultaneously, and the first track and the second track arranged one above the other can mutually constrain the transport device, improving the traveling stability of the transport device. The first track and the second track are supported by a plurality of support frames.

Of course, implementing any product or method of the present application does not necessarily require achieving all the above advantages at the same time.

### Brief Description of the Drawings

The accompanying drawings described herein are used to provide a further understanding of the present application and constitute a part of the present application. The illustrative embodiments of the present application and the descriptions thereof are used to explain the present application and do not constitute an improper limitation on the present application.
Figure 1 is a schematic three-dimensional structural view of a warehousing system provided by an embodiment of the present application in an embodiment;
Figure 2a is a schematic structure view of cooperation of a transport device with a first track and a second track in Figure 1;
Figure 2b is a schematic structural view of a transport device provided in an embodiment of the present application;
Figure 3 is a schematic structural view of a first driving mechanism in Figure 1;
Figure 4 is a schematic structural view of a second driving mechanism in Figure 1;
Figure 5 is n schematic enlarged view of part A in Figure 1;
Figure 6 is a schematic enlarged view of part B in Figure 1;
Figure 7 is a schematic enlarged view of part C in Figure 2a;
Figure 8 is a schematic three-dimensional view of a goods shelf provided by an embodiment of the present application in an embodiment;
Figure 9 is a top view of a warehousing system provided by an embodiment of the present application in an embodiment;
Figure 10 is a top view of a warehousing system provided by an embodiment of the present application in another embodiment;
Figure 11 is a top view of a warehousing system provided by an embodiment of the present application in yet another embodiment;
Figure 12 is a schematic structural view of a transport device provided by an embodiment of the present application from another perspective;
Figure 13 is a schematic enlarged structural view of part D in Figure 12;
Figure 14 is a schematic partial structural view of a transport device provided by an embodiment of the present application in yet another embodiment;
Figure 15 is a first schematic state view of a warehousing system provided by an embodiment of the present application in another embodiment, wherein a second connecting rail is disconnected from a second transfer rail;
Figure 16 is a second schematic state view of the warehousing system provided by an embodiment of the present application in another embodiment, wherein the second connecting rail is connected to the second transfer rail;
Figure 17 is a schematic enlarged view of part A in Figure 15;
Figure 18 is a schematic enlarged view of part B in Figure 15;
Figure 19 is a schematic enlarged view of part C in Figure 15;
Figure 20 is a schematic enlarged view of part D in Figure 16;
Figure 21 is a schematic view of a cooperation between a transport device and tracks in Figure 15;
Figure 22 is a schematic enlarged view of part E in Figure 21;
Figure 23 is a schematic structural view of a first driving mechanism;
Figure 24 is a schematic structural view of a second driving mechanism;
Figure 25 is a third schematic state view of the warehousing system provided by an embodiment of the present application in another embodiment, wherein the transport device enters a second connecting rail from a second transfer rail;
Figure 26 is a schematic enlarged view of part F in Figure 25;
Figure 27 is a fourth schematic state view of the warehousing system provided by an embodiment of the present application in another embodiment, wherein the transport device travels straight in a negative direction of the second direction;
Figure 28 is a schematic enlarged view of part G in Figure 27;
Figure 29 is a schematic enlarged view of part H in Figure 27;
Figure 30a is a schematic structural view of a transport device;
Figure 30b is a schematic structural view of the transport device with a goods pick-up mechanism removed;
Figure 30c is a schematic structural view of the transport device from another perspective;
Figure 31a is a schematic enlarged view of part I in Figure 30a;
Figure 31b is a schematic enlarged view of part J in Figure 30c;
Figure 32 is a top view of a warehousing system provided by an embodiment of the present application in another embodiment, wherein a first connecting rail is disconnected from a first transfer rail;
Figure 33 is a top view of the warehousing system provided by an embodiment of the present application in another embodiment, wherein the first connecting rail is connected to the first transfer rail;
Figure 34 is a top view of a warehousing system provided by an embodiment of the present application in yet another embodiment;
Figure 35 is a schematic enlarged view of part L in Figure 15;
Figure 36 is a schematic three-dimensional structural view of a warehousing system provided by an embodiment of the present application in still another embodiment;
Figure 37 is a schematic enlarged view of part K in Figure 36;
Figure 38 is a schematic partial structural view of a warehousing system provided by an embodiment of the present application in an embodiment.

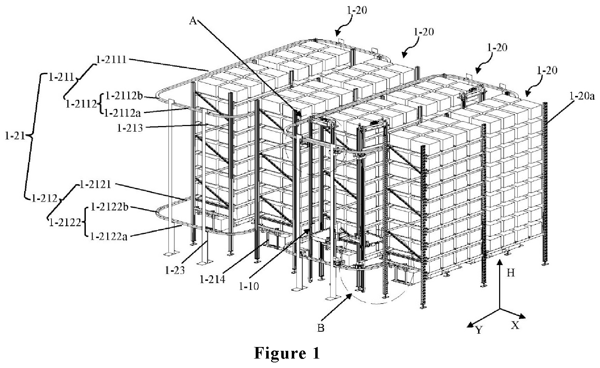

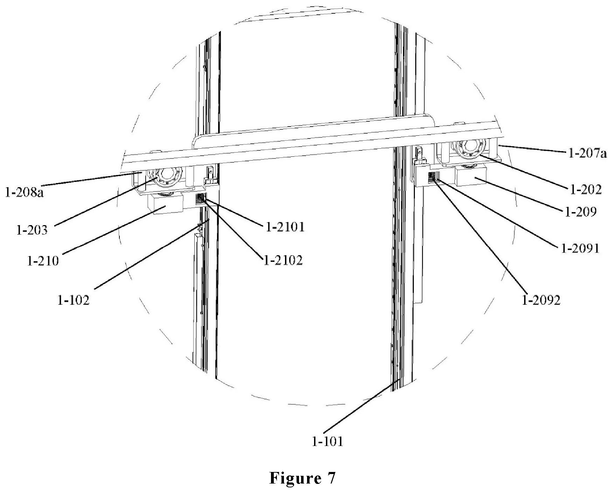

### List of reference signs in Figures 1-14:

Transport device 1-10;
Column assembly 1-100; First column 1-101; Second column 1-102; Third slide rail 1-103;
First driving mechanism 1-200; First drive motor 1-201; First roller 1-202; Second roller 1-203; First crossbeam 1-204; First side wall 1-2041; First slide rail 1-2041a; First limiting table 1-2041b; Second side wall 1-2042; Second slide rail 1-2042a; Second limiting table 1-2042b; First bottom wall 1-2043; First bracket 1-205; First connecting plate 1-2051; Second connecting plate 1-2052; Second bracket 1-206; Third connecting plate 1-2061; Fourth connecting plate 1-2062; First guide wheel 1-207; First rotary shaft 1-207a; Second guide wheel 1-208; Second rotary shaft 1-208a; First floating member 1-209; First accommodating groove 1-2091; First elastic member 1-2092; First slide groove 1-2093; Second floating member 1-210; Second accommodating groove 1-2101; Second elastic member 1-2102; Second slide groove 1-2103; First rotating shaft 1-220; Second rotating shaft 1-230;
Second driving mechanism 1-300; Second drive motor 1-301; Third roller 1-302; Fourth roller 1-303; Second crossbeam 1-304; Third side wall 1-3041; First segment 1-3041a; Fourth side wall 1-3042; Second segment 1-3042a; Second bottom wall 1-3043; Third bracket 1-305; Fifth connecting plate 1-3051; Sixth connecting plate 1-3052; Fourth bracket 1-306; Seventh connecting plate 1-3061; Eighth connecting plate 1-3062; Third guide wheel 1-307; Third rotary shaft 1-307a; Fourth guide wheel 1-308; Fourth rotary shaft 1-308a; Third rotating shaft 1-309; Fourth rotating shaft 1-310;
Lifting mechanism 1-400; Third drive motor 1-401; Reduction motor 1-402; First driven wheel 1-403; Second driven wheel 1-404; First synchronous belt 1-405; Third driven wheel 1-406; Fourth driven wheel 1-407; Second synchronous belt 1-408; Coupling 1-409; Goods pick-up mechanism 1-500; Hook-pull assembly 1-501; Support plate 1-502; Camera 1-503; Slider 1-504; Connecting side plate 1-505; Screw 1-506;
Power supply mechanism 1-600; Power supply line 1-601; Brush plate 1-602;
Goods shelf 1-20; Third column 1-20a; Third crossbeam 1-20b; Support beam 1-20c; Track assembly 1-21; First track 1-211; First transverse track 1-2111; First main body segment 1-2111a; First transition segment 1-2111b; First longitudinal track 1-2112; Second track 1-212; Second transverse track 1-2121; Second main body segment 1-2121a; Second transition segment 1-2121b; Second longitudinal track 1-2122; Storage position 1-213; Buffer position 1-214; Aisle 1-22;
Height direction H, first direction X; second direction Y;

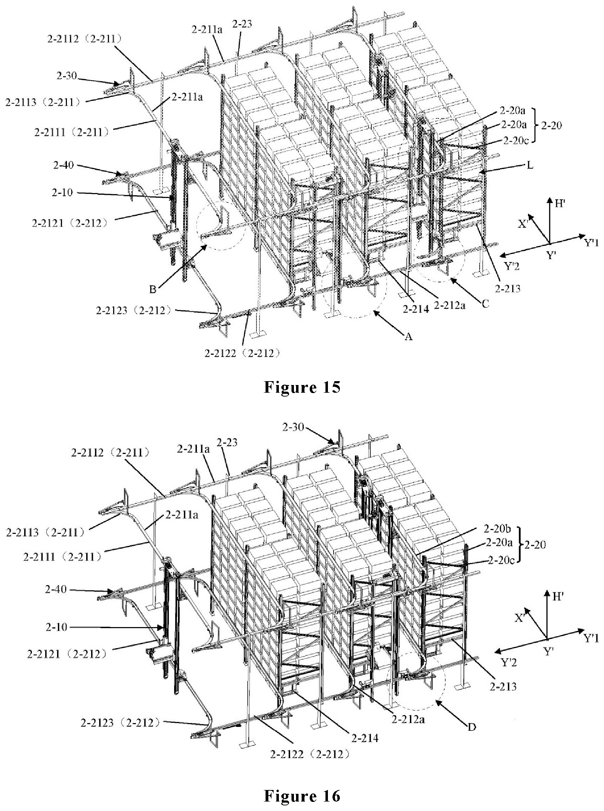

### List of reference signs in Figures 15-38:

Transport device 2-10; Column assembly 2-100; First column 2-101; Second column 2-102; Third slide rail 2-103;
First driving mechanism 2-200; First drive motor 2-201; First roller 2-202; Second roller 2-203; First crossbeam 2-204; First side portion 2-2041; First slide rail 2-2041a; First limiting table 2-2041b; Second side portion 2-2042; Second slide rail 2-2042a; Second limiting table 2-2042b; First transverse portion 2-2043; First bracket 2-205; First connecting plate 2-2051; Second connecting plate 2-2052; Second bracket 2-206; Third connecting plate 2-2061; Fourth connecting plate 2-2062; First guide wheel 2-207; First rotary shaft 2-207a; Second guide wheel 2-208; Second rotary shaft 2-208a; First floating member 2-209; First accommodating groove 2-2091; First elastic member 2-2092; First slide groove 2-2093; Second floating member 2-210; Second accommodating groove 22-101; Second elastic member 22-102; Second slide groove 22-103; First rotating shaft 2-220; Second rotating shaft 2-230; First telescopic assembly 2-240; First driving member 2-2401; First telescopic member 2-2402; First connecting rod 2-2402a; First rolling wheel 2-2402b;
Second driving mechanism 2-300; Second drive motor 2-301; Third roller 2-302; Fourth roller 2-303; Second crossbeam 2-304; Third side portion 2-3041; First segment 2-3041a; Fourth side portion 2-3042; Second segment 2-3042a; Second transverse portion 2-3043; Third bracket 2-305; Fifth connecting plate 2-3051; Sixth connecting plate 2-3052; Fourth bracket 2-306; Seventh connecting plate 2-3061; Eighth connecting plate 2-3062; Third guide wheel 2-307; Third rotary shaft 2-307a; Fourth guide wheel 2-308; Fourth rotary shaft 2-308a; Third rotating shaft 2-309; Fourth rotating shaft 2-310; Second telescopic assembly 2-311; Second driving member 2-3111; Second telescopic member 2-3112; Second connecting rod 2-3112a; Second rolling wheel 2-3112b;
Lifting mechanism 2-400; Third drive motor 2-401; Reduction motor 2-402; First driven wheel 2-403; Second driven wheel 2-404; First synchronous belt 2-405; Third driven wheel 2-406; Fourth driven wheel 2-407; Second synchronous belt 2-408; Coupling 2-409; Goods pick-up mechanism 2-500; Hook-pull assembly 2-501; Support plate 2-502; Camera 2-503; Slider 2-504; Connecting side plate 2-505; Screw 2-506;
Power supply mechanism 2-600; Power supply line 2-601; Brush plate 2-602;
Goods shelf 2-20; Third column 2-20a; Third crossbeam 2-20b; Support beam 2-20c; First track 2-211; First outer side wall 2-211a; First goods shelf rail 2-2111; First transfer rail 2-2112; First bearing surface 2-2112a; First side wall 2-2112b; Second side wall 2-2112c; First connecting rail 2-2113; Second track 2-212; Second outer side wall 2-212a; Second goods shelf rail 2-2121; Second transfer rail 2-2122; Second bearing surface 2-2122a; Third side wall 2-2122b; Second opening 2-2122b1; Second swinging member 2-2122b2; Fourth side wall 2-2122c; Second clearance portion 2-2122c1; Second mounting portion 2-2122c2; Second connecting rail 2-2123; Second protruding portion 2-2123a; Storage position 2-213; Buffer position 2-214; Aisle 2-22; Support frame 2-23; Fourth driving member 2-24;
First linkage mechanism 2-30; First sub-link 2-31; First inclined surface 2-31a; Second sub-link 2-32; First vertical segment 2-32a; First horizontal segment 2-32b; Second vertical segment 2-32c; Third reset member 2-33;
Second linkage mechanism 2-40; Third sub-link 2-41; Second inclined surface 2-41a; Fourth sub-link 2-42; Third vertical segment 2-42a; Second horizontal segment 2-42b; Fourth vertical segment 2-42c; Fourth reset member 2-43;
Third linkage mechanism 2-50; Fifth sub-link 2-51; Sixth sub-link 2-52; Seventh sub-link 2-53; First adapter 2-54;
Fourth linkage mechanism 2-60; Eighth sub-link 2-61; Second recessed portion 2-61a; Sixth inclined surface 2-61b; Seventh inclined surface 2-61c; Third guide surface 2-61d; Fourth guide surface 2-61e; Ninth sub-link 2-62; Tenth sub-link 2-63; Eighth inclined surface 2-63a; Second adapter 2-64;
Height direction H'; first direction X', second direction Y'; positive direction Y'1, negative direction Y'2.

### Detailed Description

To make the objectives, technical solutions, and advantages of the present invention clearer, the present invention is further described in detail below with reference to the accompanying drawings and embodiments. Apparently, the described embodiments are only some, not all, of embodiments of the present invention. All other embodiments obtained by a person of ordinary skill in the art based on the embodiments of the present invention fall within the protection scope of the present invention.

To solve the problem in the related art that a container transport robot occupies a large space, has a slow transport speed, fails to achieve flexible scheduling of the transport device, and affects the overall efficiency of goods picking and placing due to travelling in an aisle by means of a mobile chassis, embodiments of the present application provide a warehousing system, including a plurality of goods shelves, a track assembly, and a transport device. The track assembly at least includes a first track and a second track. The first track and the second track are spaced apart in a height direction of the goods shelves and arranged on an outer side of at least one of the goods shelves. The first track and the second track may be arranged on the outer side of the same goods shelf or adjacent goods shelves, so that the transport device can travel between adjacent aisles, achieving flexible scheduling of the transport device between adjacent aisles.

The first track and the second track may also be arranged on the outer side of a plurality of goods shelves, so that the transport device can travel between any aisles, achieving flexible scheduling of the transport device between any aisles. The difference between the two cases is that an extension length of transfer rails for the first track and the second track in a direction perpendicular to the aisles is different, and the transfer rails may be fixedly connected to goods shelf rails, or may be movably connected to goods shelf rails.

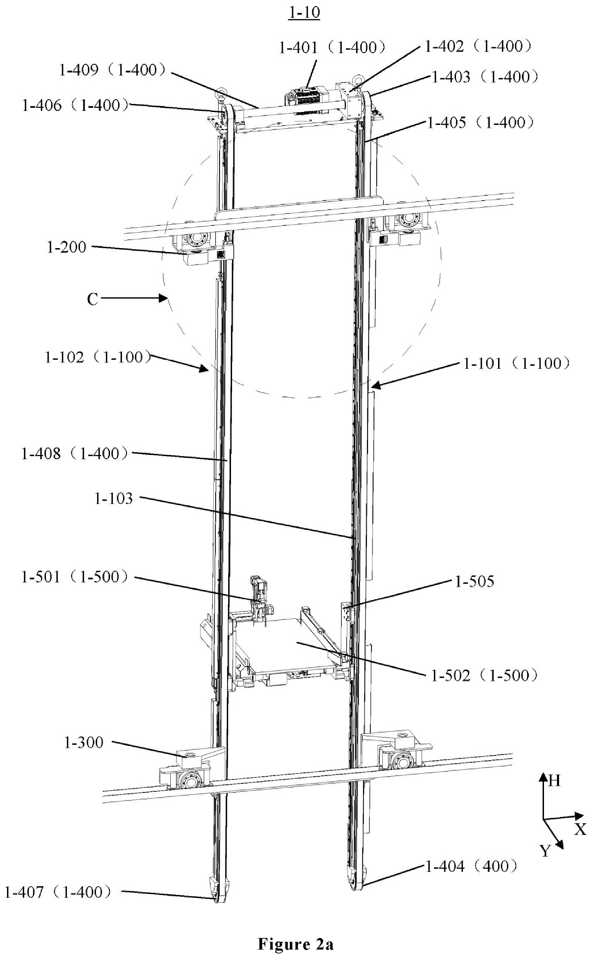

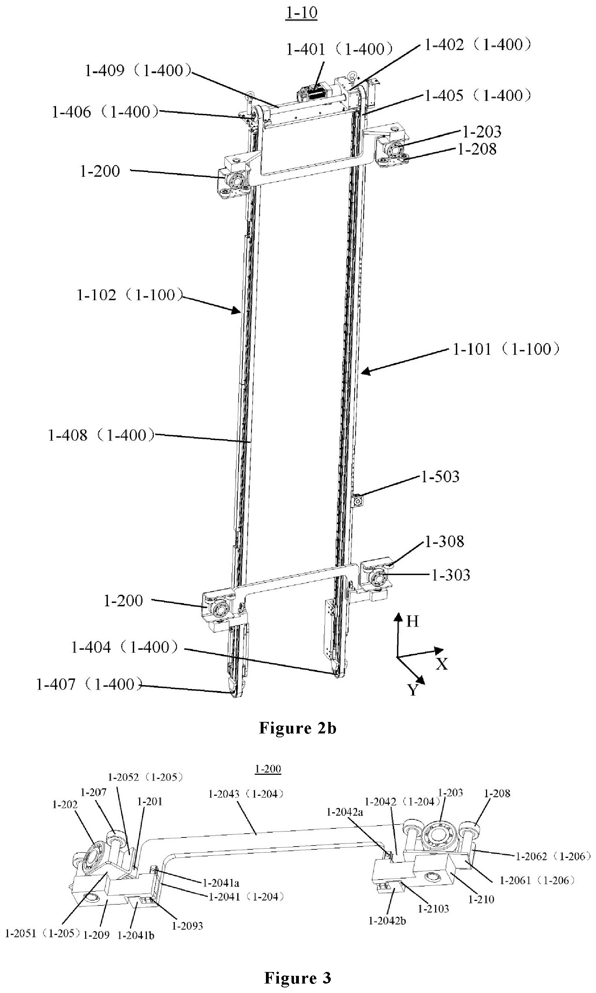

As shown in Figures 1, 2a and 2b, the present application provides a warehousing system, including: a plurality of goods shelves 1-20 spaced apart along a first direction X, a track assembly 1-21, and a transport device 1-10. An aisle 1-22 is formed between adjacent goods shelves 1-20. The track assembly 1-21 at least includes a first track 1-211 and a second track 1-212. The first track 1-211 and the second track 1-212 are spaced apart in a height direction H of the goods shelves 1-20 and arranged on an outer side of at least one of the goods shelves 1-20. The first track 1-211 includes a first longitudinal track 1-2112 provided between adjacent goods shelves 1-20 and a first transverse track 1-2111 provided on an outer side of the at least one goods shelf 1-20 in a direction perpendicular to the first direction X. The second track 1-212 includes a second longitudinal track 1-2122 provided between adjacent goods shelves 1-20 and a second transverse track 1-2121 provided on the outer side of the at leat one goods shelf 1-20 perpendicular to the first direction X. The first transverse track 1-2111 and the second transverse track 1-2121 are configured for switching the aisle 1-22. The transport device 1-10 includes a column assembly 1-100 as well as a lifting mechanism 1-400, a first driving mechanism 1-200, a second driving mechanism 1-300 and a goods pick-up mechanism 1-500 provided at the column assembly 1-100. The lifting mechanism 1-400 is connected to the goods pick-up mechanism 1-500 and drives the goods pick-up mechanism 1-500 to move up and down along the column assembly 1-100. The goods pick-up mechanism 1-500 is configured for transporting goods at different heights of the goods shelves 1-20. The first driving mechanism 1-200 and the second driving mechanism 1-300 are configured for driving the transport device 1-10 to travel along the track assembly 1-21 and traverse through two adjacent aisles 1-22, to enable the pick-up and placement of goods on adjacent goods shelves 1-20.

The second direction Y is defined as an extending direction of the aisle, and the first direction X is defined as a direction intersecting the second direction Y. Specifically, as shown in Figure 1, the first direction X is perpendicular to the second direction Y.

In this embodiment, the first track 1-211 and the second track 1-212 are arranged on an outer side of the at least one goods shelf 1-20, and the transport device 1-10 can travel on the first track 1-211 and the second track 1-212, realizing position change from one side of the goods shelf 1-20 to the other side of the goods shelf 1-20, thereby enabling to pick-up and place goods on both sides of the goods shelf 1-20 and goods on adjacent goods shelves 1-20 on both sides of the goods shelf 1-20. That is, the transport device 1-10 can realize track switching by traveling along the first track 1-211 and the second track 1-212, so that the number of transport devices 1-10 can be reduced when the workload is low, and more transport devices 1-10 can be scheduled in adjacent areas when the workload is high, thus improving transport efficiency and transport flexibility.

The transport device 1-10 is provided with the goods pick-up mechanism 1-500 and the lifting mechanism 1-400 connected to the column assembly 1-100. The lifting mechanism 1-400 can drive the goods pick-up mechanism 1-500 to move up and down along the column assembly 1-100, thereby picking-up and placing goods at different heights of the goods shelves 1-20. The transport device can not only pick-up and place goods from the entire periphery of a goods shelf 1-20 at any time, but also pick-up and place goods at any height of the goods shelf 1-20 at any time. When the workload is low, the number of transport devices 1-10 can be further reduced, achieving flexible scheduling of the transport devices 1-10.

The track assembly 1-21 at least includes the first track 1-211 and the second track 1-212. That is, the track assembly 1-21 may include only two tracks, namely the first track 1-211 and the second track 1-212; or the track assembly 1-21 may further include a third track in addition to the first track 1-211 and the second track 1-212 (not shown in the figures), that is, the track assembly 1-21 includes three tracks: the first track 1-211, the second track 1-212 and the third track. The track assembly 1-21 may also include four or more tracks which are spaced apart in the height direction H of the goods shelves 1-20. Of course, the track assembly 1-21 may also include only one track, which may be the first track 1-211 or the second track 1-212.

In some embodiments, the column assembly 1-100 includes a first column 1-101 and a second column 1-102 extending along the height direction H of the goods shelves 1-20 and spaced apart in a direction perpendicular to the height direction H. The first longitudinal track 1-2112 and the second longitudinal track 1-2122 are straight tracks, and the first transverse track 1-2111 and the second transverse track 1-2121 are curved tracks. As shown in Figure 1, the first transverse track 1-2111 includes a first main body segment 1-2111a and a first transition segment 1-2111b. The first transition segment 1-2111b is provided between the first main body segment 1-2111a and the first longitudinal track 1-2112. The first transition segment 1-2111b is used to switch from the first longitudinal track 1-2112 to the first transverse track 1-2111, or from the first transverse track 1-2111 to the first longitudinal track 1-2112, thereby realizing aisle switching. The second transverse track 1-2121 includes a second main body segment 1-2121a and a second transition segment 1-2121b. The second transition segment 1-2121b is provided between the second main body segment 1-2121a and the second longitudinal track 1-2122. The second transition segment 1-2121b is used to switch from the second longitudinal track 1-2122 to the second transverse track 1-2121, or from the second transverse track 1-2121 to the second longitudinal track 1-2122, thereby realizing aisle switching.

As shown in Figure 3, the first driving mechanism 1-200 includes a first drive motor 1-201, a first roller 1-202 rotatably connected to the first column 1-101, and a second roller 1-203 rotatably connected to the second column 1-102. The first roller 1-202 and the second roller 1-203 travel on the first track 1-211. At least one of the first roller 1-202 and the second roller 1-203 is connected to the first drive motor 1-201, so as to drive the first roller 1-202 and the second roller 1-203 to roll along the first track 1-211 and drive the column assembly 1-100 to go straight or turn. The first drive motor 1-201 may be a stepper motor, a servo motor, or a brushless motor, etc.

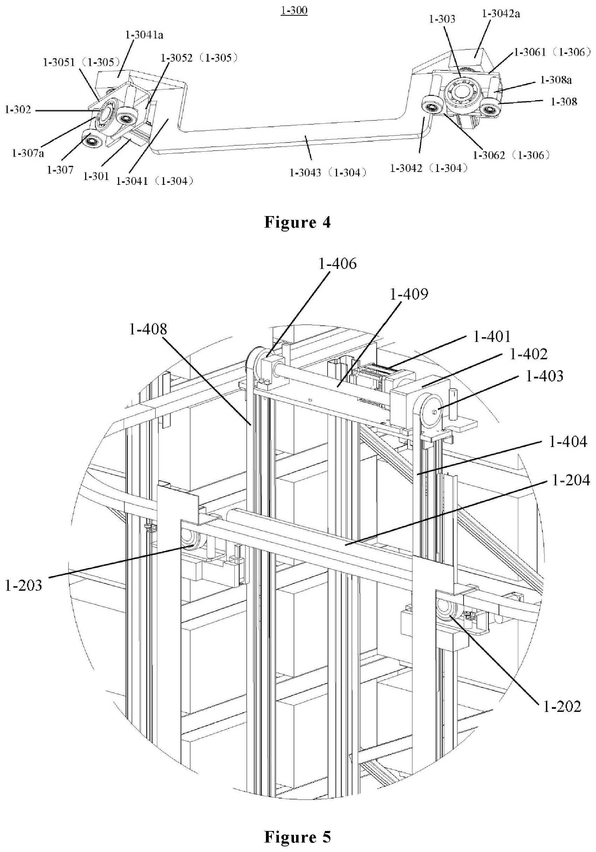

As shown in Figure 4, the second driving mechanism 1-300 includes a third roller 1-302 rotatably connected to the first column 1-101 and a fourth roller 1-303 rotatably connected to the second column 1-102. The third roller 1-302 and the fourth roller 1-303 travel on the second track 1-212. At least one of the third roller 1-302 and the fourth roller 1-303 is connected to a second drive motor 1-301, so as to drive the third roller 1-302 and the fourth roller 1-303 to roll along the second track 1-212 and drive the column assembly 1-100 to go straight or turn. The second drive motor 1-301 may be a stepper motor, a servo motor, or a brushless motor, etc.

In this embodiment, the column assembly 1-100 includes two columns, namely the first column 1-101 and the second column 1-102, which facilitates mounting the transport device 1-10 on the column assembly 1-100. The first driving mechanism 1-200 of the transport device 1-10 includes the first roller 1-202 and the second roller 1-203 respectively provided at the first column 1-101 and the second column 1-102. Traveling along the first track 1-211 by means of the front and the rear rollers can improve the traveling stability of the transport device 1-10. Moreover, the transport device 1-10 further includes the second driving mechanism 1-300. The two driving mechanisms allow the transport device 1-10 to travel on two curved tracks arranged one above the other, and by constraining the transport device 1-10 with the two curved tracks, the traveling stability of the transport device 1-10 can be further improved.

At least one of the first roller 1-202 and the second roller 1-203 is connected to the first drive motor 1-201, that is, one of the first roller 1-202 and the second roller 1-203 may be connected to the first drive motor 1-201 as a driving wheel, and the other of the first roller 1-202 and the second roller 1-203may be a driven wheel; alternatively, both of the first roller 1-202 and the second roller 1-203 may be connected to the first drive motor 1-201, both serving as driving wheels. At least one of the third roller 1-302 and the fourth roller 1-303 is connected to the second drive motor 1-301, that is, one of the third roller 1-302 and the fourth roller 1-303 may be connected to the second drive motor 1-301 as a driving wheel, and the other of the third roller 1-302 and the fourth roller 1-303 may be a driven wheel; alternatively, both of the third roller 1-302 and the fourth roller 1-303 may be connected to the second drive motor 1-301, both serving as driving wheels. Since the first roller 1-202 and the third roller 1-302 are rotatably connected to the first column 1-101, and the second roller 1-203 and the fourth roller 1-303 are rotatably connected to the second column 1-102, when passing through a bend of the first track 1-211 and the second track 1-212, the first roller 1-202 and the third roller 1-302 can rotate by a certain angle relative to the first column 1-101, and the second roller 1-203 and the fourth roller 1-303 can rotate by a certain angle relative to the second column 1-102. By rotating the rollers by a certain angle relative to the column assembly 1-100 to adapt to the change of the tracks, the transport device 1-10 can turn smoothly, and the structure is simple.

Optionally, the goods pick-up mechanism 1-500 includes a hook-pull assembly 1-501 and a transmission assembly. The hook-pull assembly 1-501 includes a hook-pull plate (not shown in the figures), which can reciprocate under the control of a driving component to realize its function. The hook-pull assembly 1-501 may also be replaced by other forms such as lifting, clamping, suction cups, etc. to achieve similar functions. Figure 2a illustrates a hook-pull form as an example. The goods pick-up mechanism 1-500 includes a hook-pull assembly 1-501, a transmission assembly, and a support plate 1-502. As shown in Figure 2b, the goods pick-up device 10 is also equipped with a vision sensor or a distance sensor for sensing a distance between goods and the goods pick-up mechanism 1-500. The vision sensor or the distance sensor may be mounted at the column assembly 1-100 or at the goods pick-up mechanism 1-500, for example, at the hook-pull assembly 1-501, wherein the vision sensor may be a camera 1-503.

In some embodiments, as shown in Figure 3, the first driving mechanism 1-200 includes a first crossbeam 1-204, as well as a first bracket 1-205 and a second bracket 1-206 rotatably connected to two ends of the first crossbeam 1-204. The first crossbeam 1-204 is arranged perpendicular to the first column 1-101 and the second column 1-102. The two ends of the first crossbeam 1-204 are fixedly connected to the first column 1-101 and the second column 1-102 respectively. A first rotating shaft 1-220 of each of the first bracket 1-205 and the second bracket 1-206 is parallel to the height direction H of the goods shelves 1-20. The first roller 1-202 is rotatably connected to the first bracket 1-205, and the second roller 1-203 is rotatably connected to the second bracket 1-206. A second rotating shaft 1-230 of each of the first roller 1-202 and the second roller 1-203 is perpendicular to the first rotating shaft 1-220, so that the first roller 1-202 is rotatably connected to the first column 1-101, and the second roller 1-203 is rotatably connected to the second column 1-102.

As shown in Figure 4, the second driving mechanism 1-300 includes a second crossbeam 1-304, as well as a third bracket 1-305 and a fourth bracket 1-306 rotatably connected to two ends of the second crossbeam 1-304. The second crossbeam 1-304 is arranged perpendicular to the first column 1-101 and the second column 1-102. The two ends of the second crossbeam 1-304 are fixedly connected to the first column 1-101 and the second column 1-102 respectively. A third rotating shaft 1-309 of each of the third bracket 1-305 and the fourth bracket 1-306 is parallel to the height direction H of the goods shelves 1-20. The third roller 1-302 is rotatably connected to the third bracket 1-305, and the fourth roller 1-303 is rotatably connected to the fourth bracket 1-306. A fourth rotating shaft 1-310 of each of the third roller 1-302 and the fourth roller 1-303 is perpendicular to the third rotating shaft 1-309, so that the third roller 1-302 is rotatably connected to the first column 1-101, and the fourth roller 1-303 is rotatably connected to the second column 1-102.

The first roller 1-202 and the second roller 1-203 are connected to the first crossbeam 1-204 via the first bracket 1-205 and the second bracket 1-206, respectively. The first crossbeam 1-204 is connected to the first column 1-101 and the second column 1-102. The first crossbeam 1-204 can constrain the first column 1-101 and the second column 1-102, making the first column 1-101 and the second column 1-102 a whole. Similarly, the second crossbeam 1-304 can also constrain the first column 1-101 and the second column 1-102, making the first column 1-101 and the second column 1-102 a whole. The first bracket 1-205 and the second bracket 1-206 are rotatably connected to the first crossbeam 1-204 via the first rotating shaft 1-220. The first crossbeam 1-204 is fixed between the first column 1-101 and the second column 1-102, so that the first roller 1-202 can rotate relative to the first column 1-101, and the second roller 1-203 can rotate relative to the second column 1-102. Thus, during turning, the first roller 1-202 and the second roller 1-203 can rotate by a certain angle to adapt to the change of the track. The third bracket 1-305 and the fourth bracket 1-306 are rotatably connected to the second crossbeam 1-304 via the third rotating shaft 1-309, and the second crossbeam 1-304 is fixed between the first column 1-101 and the second column 1-102, so that the third roller 1-302 can rotate relative to the first column 1-101, and the fourth roller 1-303 can rotate relative to the second column 1-102. Thus, during turning, the third roller 1-302 and the fourth roller 1-303 can also rotate by a certain angle to adapt to the change of the track, thereby allowing the transport device 1-10 to pass through the bend smoothly.

Optionally, the first bracket 1-205 includes a first connecting plate 1-2051 and a second connecting plate 1-2052 arranged perpendicular to each other. The first connecting plate 1-2051 is parallel to a bearing surface of the first track 1-211, and the second connecting plate 1-2052 is perpendicular to the bearing surface of the first track 1-211. One end of the first rotating shaft 1-220 is fixedly connected to the first connecting plate 1-2051, and the other end of the first rotating shaft 1-220 is rotatably connected to the first crossbeam 1-204. The first drive motor is provided on the outer side of the second connecting plate 1-2052. The second connecting plate 1-2052 has a through hole, and an output shaft of the first drive motor 1-201 passes through the through hole to connect to the first roller 1-202. The output shaft of the first drive motor 1-201 is the second rotating shaft 1-230.

Similarly, the second bracket 1-206 includes a third connecting plate 1-2061 and a fourth connecting plate 1-2062 arranged perpendicular to each other. The third connecting plate 1-2061 is parallel to the bearing surface of the first track 1-211, and the fourth connecting plate 1-2062 is perpendicular to the bearing surface of the first track 1-211. The difference between the second bracket 1-206 and the first bracket 1-205 is that the second bracket 1-206 may be provided with the first drive motor 1-201 or may not be provided with the first drive motor 1-201. If the second bracket 1-206 is not provided with the first drive motor 1-201, the second rotating shaft 1-230 of the second roller 1-203 is rotatably connected in a through hole of the fourth connecting plate 1-2062. One end of the first rotating shaft 1-220 is fixedly connected to the third connecting plate 1-2061, and the other end of the first rotating shaft 1-220 is rotatably connected to the first crossbeam 1-204.

The third bracket 1-305 includes a fifth connecting plate 1-3051 and a sixth connecting plate 1-3052 arranged perpendicular to each other. The structure of the third bracket 1-305 is the same as that of the first bracket 1-205, and will not be described again here. The fourth bracket 1-306 includes a seventh connecting plate 1-3061 and an eighth connecting plate 1-3062 arranged perpendicular to each other. The structure of the fourth bracket 1-306 is the same as that of the second bracket 1-206, and will not be described again here.

In some embodiments, as shown in Figure 3, the first driving mechanism 1-200 further includes at least one first guide member provided on at least one side of the first roller 1-202, and/or at least one second guide member provided on at least one side of the second roller 1-203. The first guide member and/or the second guide member is configured for constraining the traveling direction of the first roller 1-202 and the second roller 1-203 to be parallel to a side wall of the first track 1-211. As shown in Figure 4, the second driving mechanism 1-300 further includes at least one third guide member provided on at least one side of the third roller 1-302, and/or at least one fourth guide member provided on at least one side of the fourth roller 1-303. The third guide member and/or the fourth guide member is configured for constraining the traveling direction of the third roller 1-302 and the fourth roller 1-303 to be parallel to a side wall of the second track 1-212.

To reduce direct collision between the transport device 1-10 and the first track 1-211 and the second track 1-212 while facilitating turning of the transport device 1-10, the first driving mechanism 1-200 and the second driving mechanism 1-300 further include guide members. The guide members are configured to constrain the moving direction of the rollers to be always parallel to side walls of the tracks, thereby avoiding direct collision with the tracks during lane changing.

The first driving mechanism 1-200 may include only the first guide member or only the second guide member, or the first driving mechanism 1-200 may include both the first guide member and the second guide member. The second driving mechanism 1-300 may also include only the third guide member or the fourth guide member, or the second driving mechanism 1-300 may include both the third guide member and the fourth guide member.

Optionally, as shown in Figures 3 and 4, the first driving mechanism 1-200 includes the at least one first guide member and the at least one second guide member, and the second driving mechanism 1-300 includes the at least one third guide member and the at least one fourth guide member. The at least one first guide member is at least one first guide wheel 1-207 provided on at least one side of the first roller 1-202 in the traveling direction. The outer peripheral wall of the first guide wheel 1-207 abuts against inner walls of the first track 1-211 on both sides of the first track 1-211. The first guide wheel 1-207 is connected to the first bracket 1-205 via a first rotary shaft 1-207a parallel to the height direction H of the goods shelves 1-20, and the first guide wheel 1-207 is rotatably connected to the first rotary shaft 1-207a. The at least one second guide member is at least one second guide wheel 1-208 provided on at least one side of the second roller 1-203 in the traveling direction. The outer peripheral wall of the second guide wheel 1-208 abuts against two side walls of the first track 1-211. The second guide wheel 1-208 is connected to the second bracket 1-206 via a second rotary shaft 1-208a parallel to the height direction H of the goods shelves 1-20, and the second guide wheel 1-208 is rotatably connected to the second rotary shaft 1-208a. The at least one third guide member is at least one third guide wheel 1-307 provided on at least one side of the third roller 1-302 in the traveling direction. The outer peripheral wall of the third guide wheel 1-307 abuts against two side walls of the second track 1-212. The third guide wheel 1-307 is connected to the third bracket 1-305 via a third rotary shaft 1-307a parallel to the height direction H of the goods shelves 1-20, and the third guide wheel 1-307 is rotatably connected to the third rotary shaft 1-307a. The at least one fourth guide member is at least one fourth guide wheel 1-308 provided on at least one side of the fourth roller 1-303 in the traveling direction. The outer peripheral wall of the fourth guide wheel 1-308 abuts against two side walls of the second track 1-212. The fourth guide wheel 1-308 is connected to the fourth bracket 1-306 via a fourth rotary shaft 1-308a parallel to the height direction H of the goods shelves 1-20, and the fourth guide wheel 1-308 is rotatably connected to the fourth rotary shaft 1-308a.

In this embodiment, the first guide wheel 1-207 may be provided on one side of the first roller 1-202 in the moving direction of the first roller 1-202, or on both sides of the first roller 1-202. The second guide wheel 1-208 may be provided on one side of the second roller 1-203 in the moving direction of the second roller 1-203, or on both sides of the second roller 1-203. The third guide wheel 1-307 may be provided on one side of the third roller 1-302 in the moving direction of the third roller 1-302, or on both sides of the third roller 1-302. The fourth guide wheel 1-308 may be provided on one side of the fourth roller 1-303 in the moving direction of the fourth roller 1-303, or on both sides of the fourth roller 1-303. Figures 3 and 4 show the case where the respective guide wheel is provided on both sides.

When the transport device 1-10 travels along the first track 1-211 and the second track 1-212, the first drive motor 1-201 drives the first roller 1-202 and the second roller 1-203 to move along the first track 1-211, and the second drive motor 1-301 drives the third roller 1-302 and the fourth roller 1-303 to move along the second track 1-212. The first guide wheel 1-207 and the second guide wheel 1-208 abut against the two side walls of the first track 1-211, which can guide the transport device 1-10, preventing the first roller 1-202 and the second roller 1-203 from directly colliding with the first track 1-211 during turning. The third guide wheel 1-307 and the fourth guide wheel 1-308 abut against the two side walls of the second track 1-212, which can guide the transport device 1-10, preventing the third roller 1-302 and the fourth roller 1-303 from directly colliding with the second track 1-212 during turning. At the same time, the rotation of the first guide wheel 1-207 and the second guide wheel 1-208 can avoid direct friction with the two side walls of the first track 1-211, and the rotation of the third guide wheel 1-307 and the fourth guide wheel 1-308 can avoid direct friction with the two side walls of the second track 1-212, protecting the first track 1-211, the second track 1-212 and the transport device 1-10, and reducing the traveling resistance of the transport device 1-10.

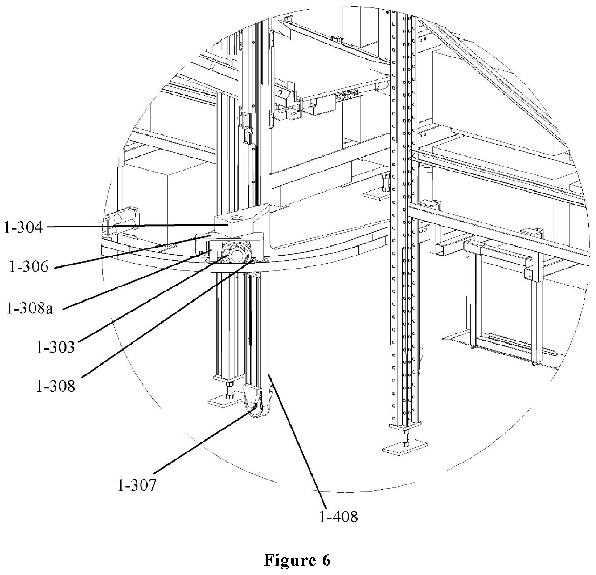

When the transport device 1-10 travels straight along the first track 1-211 and the second track 1-212, as shown in Figure 5, a traveling path of the first roller 1-202 and the second roller 1-203 of the first driving mechanism 1-200 is parallel to the first crossbeam 1-204, and a traveling path of the third roller 1-302 and the fourth roller 1-303 of the second driving mechanism 1-300 is parallel to the second crossbeam 1-304. When the transport device 1-10 enters a bend along the first track 1-211 and the second track 1-212, as shown in Figure 6, the first roller 1-202 and the second roller 1-203 of the first driving mechanism 1-200 rotate with the first bracket 1-205 and the second bracket 1-206 under the guiding of the first guide member and/or the second guide member, to rotate relative to the first crossbeam 1-204, and to change the traveling path from being parallel to the first crossbeam 1-204 when traveling straight to forming a certain angle with the first crossbeam 1-204, so that the first roller 1-202 and the second roller 1-203 adapt to the change in track direction, and complete the direction change along the first track 1-211, thereby entering the other side of a goods shelf 1-20. At the same time, the third roller 1-302 and the fourth roller 1-303 of the second driving mechanism 1-300 rotate with the third bracket 1-305 and the fourth bracket 1-306 under the guiding of the third guide member and/or the fourth guide member, to rotate relative to the second crossbeam 1-304, and to change the traveling path from being parallel to the second crossbeam 1-304 when traveling straight to forming a certain angle with the second crossbeam 1-304, so that the third roller 1-302 and the fourth roller 1-303 adapt to the change in track direction, and complete the direction change along the second track 1-212, thereby entering the other side of a goods shelf 1-20.

Optionally, the first guide member and/or the second guide member may be a first U-shaped member, which is sleeved on a side wall of the first track 1-211 on one side of the first track 1-211, and moreover, to reduce the friction between the first guide member and/or the second guide member and the side wall, a contact surface between the first U-shaped member and the side wall may be configured as a rolling contact, for example, by providing balls or rollers on the two side walls of the first U-shaped member. The third guide member and/or the fourth guide member may be a second U-shaped member, which is sleeved on a side wall of the second track 1-212 on one side of the first track 1-211, and moreover, to reduce the friction between the guide member and the side wall, a contact surface between the U-shaped member and the side wall may be configured as a rolling contact, for example, by providing balls or rollers on the two side walls of the U-shaped member.

In this embodiment, the first guide member may be provided on one side or both sides of the first roller 1-202 in the moving direction of the transport device 1-10, or on one side or both sides of the first roller 1-202 in a direction perpendicular to the moving direction of the transport device 1-10. The second guide member may be provided on one side or both sides of the second roller 1-203 in the moving direction of the transport device 1-10, or on one side or both sides of the second roller 1-203 in a direction perpendicular to the moving direction of the transport device 1-10. The third guide member may be provided on one side or both sides of the third roller 1-302 in the moving direction of the transport device 1-10, or on one side or both sides of the third roller 1-302 in a direction perpendicular to the moving direction of the transport device 1-10. The fourth guide member may be provided on one side or both sides of the fourth roller 1-303 in the moving direction of the transport device 1-10, or on one side or both sides of the fourth roller 1-303 in a direction perpendicular to the moving direction of the transport device 1-10.

Optionally, the first guide member, the second guide member, the third guide member, and the fourth guide member each may be a set of guide wheels respectively located on the inner and outer sides of the same side wall, that is, a set of guide wheels abutting against the inner and outer sides of one of the side walls, thereby constraining the traveling direction of the transport device 1-10. The set of guide wheels may be located on one side or both sides of the transport device 1-10 in the moving direction of the transport device, or on one side or both sides of the transport device 1-10 in a direction perpendicular to the moving direction.

In some embodiments, as shown in Figure 1, the first track 1-211 is located at the upper part of the at least one goods shelf 1-20, and the second track 1-212 is located at the lower part of the at least one goods shelf 1-20. The first track 1-211 and the second track 1-212 are disposed facing each other.

In this embodiment, the first track 1-211 and the second track 1-212 are disposed facing to each other, which can constrain the transport device 1-10 in the height direction H, reducing the risk of vertical shifting of the transport device 1-10 during operation.

In some embodiments, as shown in Figures 3, 4 and 7, the first driving mechanism 1-200 further includes a first floating member 1-209 and a second floating member 1-210. One end of the first floating member 1-209 is movably connected to the first crossbeam 1-204 in the height direction H, such as by rolling or sliding connection, and the other end of the first floating member 1-209 is rotatably connected to the first bracket 1-205. The first floating member 1-209 has a first accommodating groove 1-2091 provided in the height direction H. The top end of the first accommodating groove 1-2091 is closed, and the bottom end of the first accommodating groove 1-2091 is provided with a first opening. A first elastic member 1-2092 is provided in the first accommodating groove 1-2091. A free end of the first side wall 1-2041 is provided with a first limiting table 1-2041b. The bottom end of the first elastic member 1-2092 is connected to the first limiting table 1-2041b via the first opening, so that the first elastic member 1-2092 applies an elastic force to the first floating member 1-209 to press against the first track 1-211. One end of the second floating member 1-210 is movably connected to the first crossbeam 1-204 in the height direction H, such as by rolling or sliding connection, and the other end of the second floating member 1-210 is rotatably connected to the second bracket 1-206. The second floating member 1-210 has a second accommodating groove 1-2101 provided in the height direction H. The top end of the second accommodating groove 1-2101 is closed, and the bottom end of the second accommodating groove 1-2101 is provided with a second opening. A second elastic member 1-2102 is provided in the second accommodating groove 1-2101. A free end of the second side wall 1-2042 is provided with a second limiting table 1-2042b. The bottom end of the second elastic member 1-2102 is connected to the second limiting table 1-2042b via the second opening, so that the second elastic member 1-2102 applies an elastic force to the second floating member 1-210 to press against the first track 1-211.

The first bracket 1-205 is movably connected to the first crossbeam 1-204 via the first floating member 1-209, and the second bracket 1-206 is movably connected to the first crossbeam 1-204 via the second floating member 1-210, so that the first bracket 1-205 and the second bracket 1-206 can be adjusted relative to the first crossbeam 1-204 in the height direction H, and thereby the first roller 1-202 and the second roller 1-203 connected to the first bracket 1-205 and the second bracket 1-206 are adjusted in the height direction H, to adapt to the height changes of the first track 1-211 and the second track 1-212. Moreover, under the elastic forces of the first elastic member 1-2092 and the second elastic member 1-2102, the first floating member 1-209 and the second floating member 1-210 can press against the first bracket 1-205 and the second bracket 1-206 upward, so that the first roller 1-202 and the second roller 1-203 always contact a track surface of the first track 1-211, wherein the track surface refers to a surface on which the first roller 1-202 and the second roller 1-203 travel. Furthermore, by adjusting the compression amounts of the first elastic member 1-2092 and the second elastic member 1-2102, sufficient positive pressure can be obtained to prevent the first roller 1-202 and the second roller 1-203 from slipping during travel.

The first elastic member 1-2092 can be fixedly connected to the first limiting table 1-2041b or can simply abut against the first limiting table 1-2041b. The second elastic member 1-2102 can be fixedly connected to the second limiting table 1-2042b or can simply abut against the second limiting table 1-2042b.

In some embodiments, as shown in Figures 3 and 4, the first crossbeam 1-204 includes a first bottom wall 1-2043 perpendicular to the height direction H, as well as a first side wall 1-2041 and a second side wall 1-2042 which are connected at a preset angle to two ends of the first bottom wall 1-2043 in a direction perpendicular to the height direction H. One of the first side wall 1-2041 and the first floating member 1-209 is provided with a first slide rail 1-2041a, and the other of the first side wall 1-2041 and the first floating member 1-209 is provided with a first slide groove 1-2093 cooperating with the first slide rail 1-2041a, wherein the extending direction of the first slide rail 1-2041a is parallel to the height direction H. One of the second side wall 1-2042 and the second floating member 1-210 is provided with a second slide rail 1-2042a, and the other of the second side wall 1-2042 and the second floating member 1-210 is provided with a second slide groove 1-2103 cooperating with the second slide rail 1-2042a, wherein the extending direction of the second slide rail 1-2042a is parallel to the height direction H. The first limiting table 1-2041b is configured to limit the first floating member 1-209, and the second limiting table 1-2042b is configured to limit the second floating member 1-210. The second crossbeam 1-304 includes a second bottom wall 1-3043 perpendicular to the height direction H, as well as a third side wall 1-3041 and a fourth side wall 1-3042 which are connected at a preset angle to two ends of the second bottom wall 1-3043 in a direction perpendicular to the height direction H. The end of the third side wall 1-3041 is connected with a first segment 1-3041a, and the end of the fourth side wall 1-3042 is connected with a second segment 1-3042a. Both the first segment 1-3041a and the second segment 1-3042a are parallel to the second bottom wall 1-3043 and are respectively located on extension lines of the second bottom wall 1-3043 on the respective sides where the first segment 1-3041a and the second segment 1-3042a are located respectively. The third bracket 1-305 is rotatably connected to the first segment 1-3041a, and the fourth bracket 1-306 is rotatably connected to the second segment 1-3042a.

In this embodiment, the first floating member 1-209 is provided with the first slide groove 1-2093, the first side wall 1-2041 is provided with the first slide rail 1-2041a, the second floating member 1-210 is provided with the second slide groove 1-2103, and the second side wall 1-2042 is provided with the second slide rail 1-2042a. The first crossbeam 1-204 is generally U-shaped, facilitating the movable connection of the first floating member 1-209 and the second floating member 1-210 with the first side wall 1-2041 and the second side wall 1-2042, without interfering with the first crossbeam 1-204 during sliding. The first limiting table 1-2041b at the free end of the first side wall 1-2041 is configured to limit the first floating member 1-209, and the second limiting table 1-2042b at the free end of the second side wall 1-2042 is configured to limit the second floating member 1-210, preventing the first floating member 1-209 and the second floating member 1-210 from detaching from the first side wall 1-2041 and the second side wall 1-2042.

Optionally, the first floating member 1-209 is perpendicular to the first side wall 1-2041, and the second floating member 1-210 is perpendicular to the second side wall 1-2042, facilitating the rotational connection of the first bracket 1-205 with the first floating member 1-209, and the rotational connection of the second bracket 1-206 with the second floating member 1-210.

The second bottom wall 1-3043 of the second crossbeam 1-304 also generally forms a U-shape with the third side wall 1-3041 and the fourth side wall 1-3042. The first connecting segment at the end of the third side wall 1-3041 is perpendicular to the third side wall 1-3041, and the second connecting segment at the end of the fourth side wall 1-3042 is perpendicular to the fourth side wall 1-3042, facilitating the connection of the third bracket 1-305 with the first connecting segment, and the connection of the fourth bracket 1-306 with the second connecting segment.

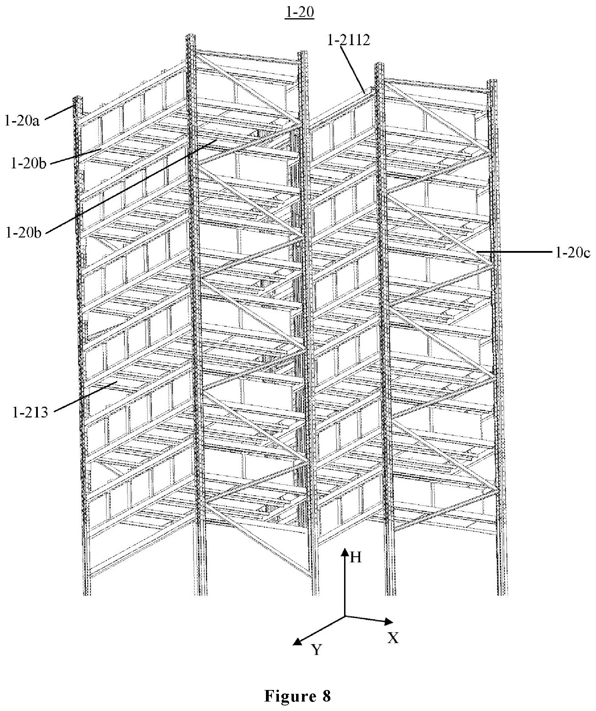

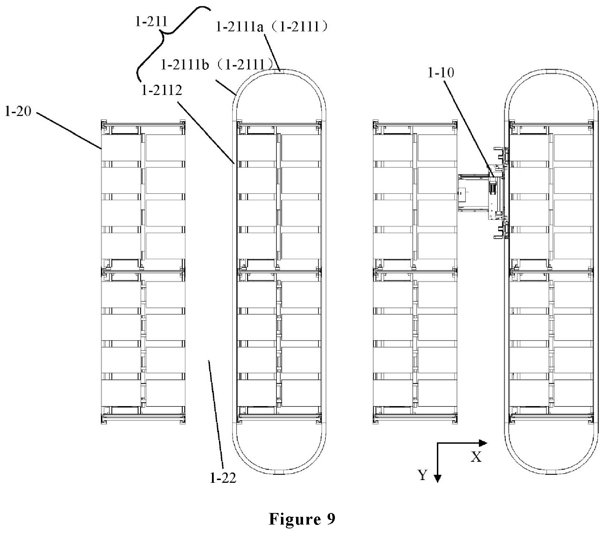

In some embodiments, as shown in Figures 8 and 9, each goods shelf 1-20 includes a plurality of third columns 1-20a spaced apart along the first direction X and the second direction Y. The third columns 1-20a are connected to each other by third crossbeams 1-20b. The third columns 1-20a are goods shelf columns, and the third crossbeams 1-20b are goods shelf crossbeams. The first longitudinal track 1-2112 and the second longitudinal track 1-2122 are fixed to the third crossbeams 1-20b of the same goods shelf 1-20, for the transport device 1-10 to travel and to pick-up and place goods on goods shelves 1-20 on both sides of the aisle 1-22. The transport device 1-10 is provided on the outer side of the first track 1-211 and the second track 1-212. The second direction Y is perpendicular to the first direction X and the height direction H.

It should be understood that the first direction X and the second direction Y in the drawings are only for illustration and do not constitute a limitation on the present application.

In this embodiment, the first longitudinal track 1-2112 and the second longitudinal track 1-2122 are fixed to the third crossbeams 1-20b of the same goods shelf 1-20, for example, fixed on the outer side of the third crossbeams 1-20b, and the first longitudinal track 1-2112 may be fixedly connected to the third crossbeam 1-20b by screw(s), and the second longitudinal track 1-2122 may be fixedly connected to the third crossbeam 1-20b by screw(s). Adjacent goods shelves 1-20 use the same first track 1-211 and the same second track 1-212, reducing the number of tracks provided, thus allowing the spacing between adjacent goods shelves 1-20 to be smaller, thereby improving space utilization. The transport device 1-10 can enter adjacent aisles 1-22 via the first track 1-211 and the second track 1-212, making scheduling more flexible; and can pick-up and place goods on the goods shelves 1-20 on both sides of the aisles 1-22, saving the number of transport devices 1-10 when the workload is low, and scheduling more robots in adjacent aisles 1-22; when the workload is high, thereby improving efficiency and flexibility.

Referring back to Figure 1, the first transverse track 1-2111 and the first longitudinal track 1-2112 may be an integral track, or may be separately provided tracks which are connected. The second transverse track 1-2121 and the second longitudinal track 1-2122 may be an integral track, or may be separately provided tracks which are connected. The first transverse track 1-2111 and the second transverse track 1-2121 may be supported by support frame(s) 1-23, thereby ensuring the strength and reliability of the first track 1-211 and the second track 1-212.

As shown in Figure 1, each goods shelf 1-20 generally has a multi-tier structure, with a plurality of containers being capable of being placed on each tier, and each goods shelf 1-20 generally has a single-row or double-row structure, each row having a plurality of columns along the direction of the aisle 1-22.

Preferably, the goods shelf 1-20 has a double-row structure, which can reduce the number of aisles 1-22, thereby improving the space utilization of the warehousing system. Moreover, the double-row structure has more obvious advantages when applying the warehousing system of the present application. By traveling between adjacent aisles 1-22, the transport device 1-10 can pick-up and place goods on both rows of the same goods shelf 1-20, and also can pick-up and place goods on one row of adjacent goods shelves 1-20 on both sides.

In another embodiment, the first longitudinal track 1-2112 and the second longitudinal track 1-2122 are fixed to the third crossbeams 1-20b on sides that are close to each other, of two non-adjacent goods shelves 1-20, for the transport device 1-10 to travel on and to pick-up and place goods on the goods shelves 1-20 on both sides of the aisle 1-22. The transport device 1-10 is provided on the inner side of the first track 1-211 and the second track 1-212.

In this embodiment, the arrangement positions of the first track 1-211 and the second track 1-212 are slightly different from those in the previous embodiment, wherein the first track 1-211 and the second track 1-212 are not fixed to the third crossbeams 1-20b of the same goods shelf 1-20, but are partly provided on two non-adjacent goods shelves 1-20 respectively and are provided at the third crossbeams 1-20b on the sides that are close to each other, of two non-adjacent goods shelves 1-20. Moreover, because the arrangement positions of the first track 1-211 and the second track 1-212 are different, the arrangement position of the transport device 1-10 is also different from that in the previous embodiment. In the previous embodiment, the transport device 1-10 is provided on the outer side of the first track 1-211 and the second track 1-212. In this embodiment, the transport device 1-10 is provided on the inner side of the first track 1-211 and the second track 1-212. Both embodiments can make reasonable use of the space of the aisle 1-22.

To enhance the support strength for the goods shelf 1-20, support beams 1-20c are also provided between adjacent third columns 1-20a. As shown in Figure 8, a plurality of support beams 1-20c may be provided along the height direction H of the goods shelf 1-20.

Regardless of whether the first track 1-211 and the second track 1-212 are provided at the same goods shelf 1-20 or at non-adjacent goods shelves 1-20, the first track 1-211 and the second track 1-212 each may be an annular track or U-shaped track, and the opening direction of the U-shaped track is parallel to the extending direction of the aisle 1-22.

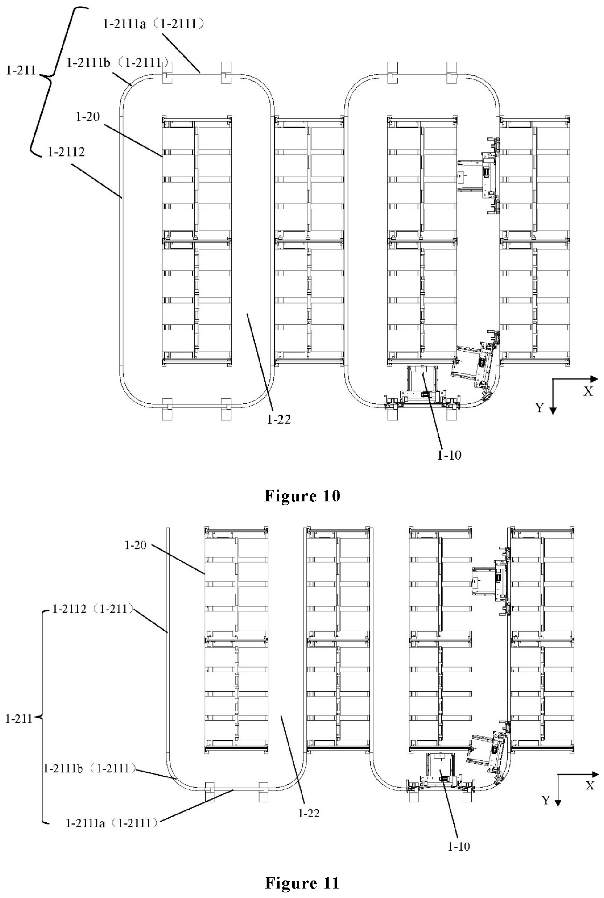

The so-called annular track here means that the first track 1-211 and the second track 1-212 are closed tracks, as shown in Figures 9 and 10. The U-shaped track is a non-closed track with an opening at one end, as shown in Figure 11. The U-shaped track facilitates the installation, disassembly and maintenance of the transport device 1-10. To prevent the transport device 1-10 from sliding out of the opening of the U-shaped track during normal travel, a limiting structure is provided at the opening.

In some embodiments, as shown in Figures 2a, 2b, 5 and 6, the lifting mechanism 1-400 includes at least one third drive motor 1-401 and a reduction motor 1-402. The third drive motor 1-401 is fixed at top ends of the first column 1-101 and the second column 1-102, and the third drive motor 1-401 are connected to the reduction motor 1-402. A first driven wheel 1-403 is provided at the top end of the first column 1-101, and a second driven wheel 1-404 is provided at the bottom end of the first column 1-101. The first driven wheel 1-403 and the second driven wheel 1-404 are synchronous wheels or sprockets. A first synchronous belt 1-405 or a first chain is sleeved on the first driven wheel 1-403 and the second driven wheel 1-404. The goods pick-up mechanism 1-500 is fixedly connected to the first synchronous belt 1-405 or the first chain. A third driven wheel 1-406 is provided at the top end of the second column 1-102, and a fourth driven wheel 1-407 is provided at the bottom end of the second column 1-102. The third driven wheel 1-406 and the fourth driven wheel 1-407 are synchronous wheels or sprockets. A second synchronous belt 1-408 or a second chain is sleeved on the third driven wheel 1-406 and the fourth driven wheel 1-407. The goods pick-up mechanism 1-500 is fixedly connected to the second synchronous belt 1-408 or the second chain. The first driven wheel 1-403 and the third driven wheel 1-406 each are connected to an output shaft of a reduction motor 1-402; or the first driven wheel 1-403 is connected to the output shaft of the reduction motor 1-402 and the third driven wheel 1-406 is connected to the first driven wheel 1-403 via a coupling 1-409.

By fixedly connecting the goods pick-up mechanism 1-500 to the synchronous belts or chains, when the third drive motor 1-401 and the reduction motor 1-402 drive the first driven wheel 1-403 and the third driven wheel 1-406 to rotate, the synchronous belts or chains can be driven to move up and down, thereby driving the goods pick-up mechanism 1-500 to move up and down to reach to different heights of the goods shelf 1-20 for picking-up and placing goods. Moreover, the first driven wheel 1-403 and the third driven wheel 1-406 may share one set of third drive motor 1-401 and reduction motor 1-402, or may each use a set of third drive motor 1-401 and reduction motor 1-402.

Of course, the form of the lifting mechanism 1-400 is not limited to driven wheels with synchronous belts, sprockets with chains, and may also be rack and pinion, etc.

In some embodiments, as shown in Figure 3, the first column 1-101 and/or the second column 1-102 is provided with third slide rail(s) 1-103, and the goods pick-up mechanism 1-500 is provided with slider(s) 1-504 cooperating with the third slide rail 1-103, so that the goods pick-up mechanism 1-500 moves in a straight line.

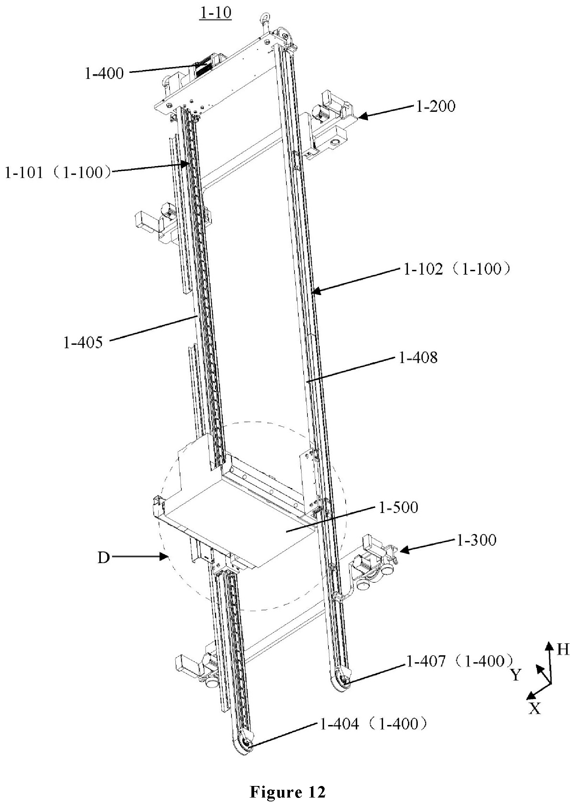

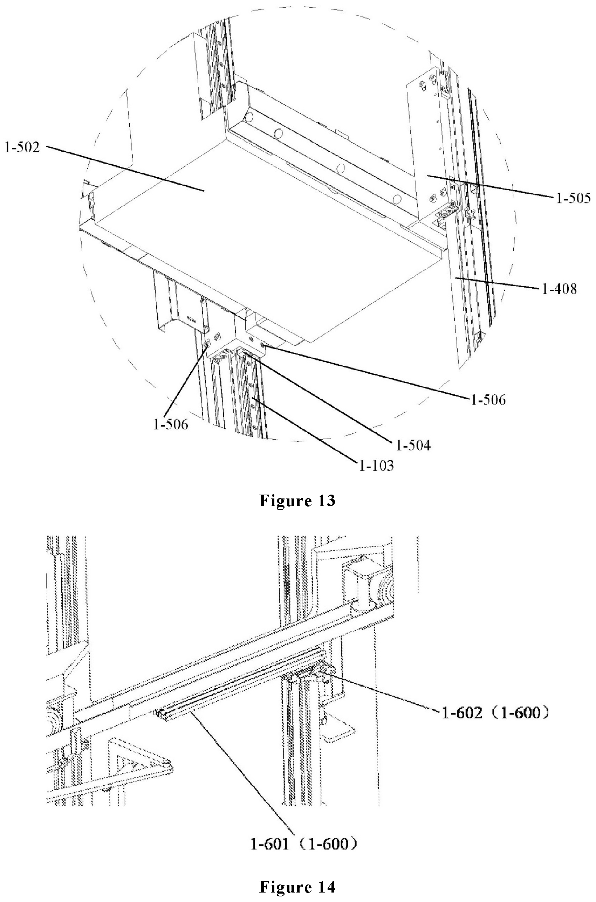

The cooperation between the goods pick-up mechanism 1-500 and the column assembly 1-100 via the third slide rail(s) 1-103 and the slider(s) 1-504 can constrain the movement direction of the goods pick-up mechanism 1-500, so that the goods pick-up mechanism 1-500 moves in a straight line. As shown in Figures 12 and 13, the goods pick-up mechanism 1-500 includes a support plate 1-502 and connecting side plates 1-505 located on both sides of the support plate 1-502. The connecting side plates 1-505 are configured to be fixedly connected to the first synchronous belt 1-405 and the second synchronous belt 1-408, for example, by screws 1-506. The connecting side plates 1-505 are also configured to be fixedly connected to the sliders 1-504, for example, by screws 1-506. Of course, the fixed connection may also be in the form of welding, riveting, etc.

In some embodiments, as shown in Figures 1 and 8, each goods shelf 1-20 is provided with a plurality of storage positions 1-213 along both the height direction and the extending direction of the aisle 1-22. The extending direction of the aisle 1-22 is the second direction Y, in Figures 1 and 8. The depth of the goods shelf 1-20 is a single storage position 1-213 or double storage positions 1-213. A plurality of buffer positions 1-214 are provided below the lowermost storage positions 1-213 of the storage positions (1-213). The buffer positions 1-214 are configured for temporarily storing goods.

The buffer positions 1-214 allow the goods pick-up mechanism 1-500 to temporarily store goods upon completing a sorting and/or storing and picking action, and then the goods are transferred and sorted through docking of a freight robot, and are delivered to a destination goods position or a sorting position, or even a transport position for sorted goods.

In some embodiments, as shown in Figure 14, the transport device 1-10 further includes a power supply mechanism 1-600 and a battery. The power supply mechanism 1-600 includes a power supply line 1-601 which for example includes a sliding contact line, a brush plate 1-602 and a brush block. The brush plate 1-602 is connected to the brush block. The first transverse track 1-2111 includes a first main body segment 1-2111a and a first transition segment 1-2111b. The second transverse track 1-2121 includes a second main body segment 1-2121a and a second transition segment 1-2121b. The first main body segment 1-2111a and the second main body segment 1-2121a are straight segments. The first transition segment 1-2111b and the second transition segment 1-2121b are curved segments. The power supply line 1-601 is provided below the straight segment(s) of the first track 1-211 and/or the second track 1-212. The brush plate 1-602 is slidably connected to the power supply line 1-601. The brush block is electrically connected to the battery.

The power supply line 1-601 is arranged at the straight segment(s) of the first track 1-211 and/or the second track 1-212. The brush block is electrically connected to the battery of the transport device 1-10. When the transport device 1-10 is at the respective straight segment, the brush plate 1-602 contacts the power supply line 1-601, for charging the battery of the transport device 1-10.

A second aspect of the present application provides a transport device 1-10, as shown in Figures 2a and 3, for traveling on a curved track. The transport device 1-10 includes a column assembly 1-100, as well as at least one set of lifting mechanism 1-400, at least one set of driving mechanism and at least one set of goods pick-up mechanism 1-500 provided at the column assembly 1-100. The lifting mechanism 1-400 is connected to the goods pick-up mechanism 1-500 and drives the goods pick-up mechanism 1-500 to move up and down along the column assembly 1-100. The goods pick-up mechanism 1-500 is configured for transporting goods at different heights on the goods shelves 1-20. The column assembly 1-100 includes a first column 1-101 and a second column 1-102 extending along the height direction H of the goods shelves 1-20 and spaced apart in a direction perpendicular to the height direction H. The driving mechanism includes a first roller 1-202 rotatably connected to the first column 1-101 and a second roller 1-203 rotatably connected to the second column 1-102. The first roller 1-202 and the second roller 1-203 are configured for traveling on a curved track. At least one of the first roller 1-202 and the second roller 1-203 is connected to a first drive motor 1-201, so as to drive the first roller 1-202 and the second roller 1-203 to roll along the curved track and drive the column assembly 1-100 to go straight or turn.

In this embodiment, the transport device 1-10 can travel on a curved track, to enable position change from one side of the goods shelf 1-20 to the other side of the goods shelf 1-20, thereby being capable of picking-up and placing goods on both sides of the goods shelf 1-20. When the workload is low, the number of transport devices 1-10 can be reduced, and when the workload is high, more transport devices 1-10 can be scheduled in adjacent areas, thus improving transport efficiency and transport flexibility. Moreover, the turning of the transport device 1-10 is achieved by the rotatable connection of the first roller 1-202 with the first column 1-101 and the rotatable connection of the second roller 1-203 with the second column 1-102, and the structure is simple and easy to implement. The first roller 1-202 is rotatably connected to the first column 1-101, and the second roller 1-203 is rotatably connected to the second column 1-102. When a change of direction is required, the first roller 1-202 rotates relative to the first column 1-101, and the second roller 1-203 rotates relative to the second column 1-102, to adapt to the change in track direction, thereby passing through a bend.

A third aspect of the present application provides a warehousing system, wherein the first transfer rail 2-2112 and the second transfer rail 2-2122 are through rails extending along the second direction Y' and disposed corresponding to a plurality of goods shelves 2-20, and the same side of a plurality of aisles 2-22 corresponds to the same first transfer rail 2-2112 and the same second transfer rail 2-2122, which is equivalent to an extension based on the first transverse track 1-2111 and the second transverse track 1-2121 in the above warehousing system, changing from a track corresponding to one of goods shelves in Figure 1 to a track corresponding to a plurality of goods shelves in Figure 15. As shown in Figures 15 and 16, part C in Figure 15 shows a state in which a respective second connecting rail 2-2123 is disconnected from the second transfer rail 2-2122, and part D in Figure 16 shows a state in which a respective second connecting rail 2-2123 is connected to the second transfer rail 2-2122. The warehousing system includes: goods shelves 2-20, a first track 2-211 and a second track 2-212, wherein a plurality of goods shelves 2-20 are spaced apart, with an aisle 2-22 formed between adjacent goods shelves 2-20. The first track 2-211 and the second track 2-212 are spaced apart in a height direction H' of the goods shelves 2-20 and arranged on an outer side of the goods shelves 2-20. The first track 2-211 includes a plurality of first goods shelf rails 2-2111 arranged along a first direction X' and located on at least one side of same one of the goods shelves 2-20 respectively, at least one first transfer rail 2-2112 arranged along a second direction Y' and located on at least one side of the goods shelves 2-20, and first connecting rails 2-2113 provided at at least one end of each of the first goods shelf rails 2-2111 or at at least one end of each first transfer rail 2-2112 respectively. The first connecting rails 2-2113 are movably connected to the first goods shelf rails 2-2111 or the first connecting rails 2-2113 are movably connected to the first transfer rai 2-2112, so that free ends of the first connecting rails 2-2113 can be connected to or disconnected from the first transfer rail 2-2112 or the first goods shelf rails 2-2111. The second track 2-212 includes a plurality of second goods shelf rails 2-2121 arranged along the first direction X' and located on at least one side of same one of the goods shelves 2-20 respectively, at least one second transfer rail 2-2122 arranged along the second direction Y' and located on at least one side of the goods shelves 2-20, and second connecting rails 2-2123 provided at at least one end of each of the second goods shelf rails 2-2121 or at at least one end of each second transfer rail 2-2122 respectively. The second connecting rails 2-2123 are movably connected to the second goods shelf rails 2-2121 or the second connecting rails 2-2123 are movably connected to the second transfer rail 2-2122, so that free ends of the second connecting rails 2-2123 can be connected to or disconnected from the second transfer rail 2-2122 or the second goods shelf rails 2-2121. The first direction X' is the extending direction of the aisle 2-22, and the second direction Y' intersects the first direction.

The first direction X' is defined as the extending direction of the aisle 2-22, and the first direction X' intersects the second direction Y'. In a specific implementation, the second direction Y' is a direction perpendicular to the aisle 2-22. The directions in the drawings are only for illustration and should not be construed as limitation on the present application, because the first direction X' could also be defined as the direction perpendicular to the aisle 2-22. Based on the above definition, the first goods shelf rails 2-2111 are rails provided along the extending direction of the aisle 2-22, and the first transfer rail 2-2112 is a rail provided perpendicular to the extending direction of the aisle 2-22. Similarly, the second goods shelf rails 2-2121 are rails provided along the extending direction of the aisle 2-22, and the second transfer rail 2-2122 is a rail provided perpendicular to the extending direction of the aisle 2-22. The first goods shelf rails 2-2111 being located on at least one side of same one of the goods shelves 2-20 respectively means that the first goods shelf rail 2-2111 may be located on one side of the same goods shelf 2-20 or on both sides of the same goods shelf 2-20. When located on one side of the same goods shelf 2-20, the first goods shelf rails 2-2111 for two adjacent goods shelves 2-20 are located on the same side of the respective goods shelves 2-20. The second goods shelf rails 2-2121 being located on at least one side of same one of the goods shelves 2-20 respectively means that the second goods shelf rail 2-2121 may be located on one side of the same goods shelf 2-20 or on both sides of the same goods shelf 2-20. When located on one side of the same goods shelf 2-20, the second goods shelf rails 2-2121 for two adjacent goods shelves 2-20 are located on the same side of the respective goods shelves 2-20. The first connecting rails 2-2113 are provided at at least one end of each of the first goods shelf rails 2-2111 or at at least one end of the first transfer rail 2-2112 respectively, that is, the first connecting rails 2-2113 may be provided at one end of each of the first goods shelf rails 2-2111, or at one end of the first transfer rail 2-2112. The second connecting rails 2-2123 are provided at at least one end of each of the second goods shelf rails 2-2121 or at at least one end of the second transfer rail 2-2122 respectively, that is, the second connecting rails 2-2123 may be provided at one end of each of the second goods shelf rails 2-2121, or at one end of the second transfer rail 2-2122. The embodiment of the present application is described in detail by taking the case where the first connecting rails 2-2113 are provided at one end of each of the first goods shelf rails 2-2111 respectively, and the second connecting rails 2-2123 are provided at one end of each of the second goods shelf rails 2-2121 respectively, as an example.

Specifically, since the first connecting rails 2-2113 are provided at at least one end of each of the first goods shelf rails 2-2111, the first connecting rails 2-2113 are movably connected to the first goods shelf rails 2-2111. Exemplarily, the first connecting rails 2-2113 may be rotatably connected to the first goods shelf rails 2-2111 via rotary shafts, and the first connecting rails 2-2113 can be connected to the first transfer rail 2-2112 by rotating a certain angle. Since the second connecting rails 2-2123 are provided at at least one end of each of the second goods shelf rails 2-2121, exemplarily, the second connecting rails 2-2123 may be rotatably connected to the second goods shelf rails 2-2121 via rotary shafts, the second connecting rails 2-2123 are rotatably connected to the second goods shelf rails 2-2121, and the second connecting rails 2-2123 can be connected to the second transfer rail 2-2122 by rotating a certain angle. Therefore, the transport device 2-10 traveling on the first track 2-211 and the second track 2-212 can switch track through the connection or disconnection of the respective first connecting rail 2-2113 with the first transfer rail 2-2112, so that the transport device 2-10 traveling thereon can successfully travel between various aisles 2-22, making scheduling more flexible. A small number of transport devices 2-10 can cover the picking-up and placing needs when the workload is low; more transport devices 2-10 can be scheduled in a demand area when the workload is high, improving transport efficiency.

In addition, by providing two tracks arranged as one above the other, the transport device 2-10 travels on both tracks simultaneously, and the first track 2-211 and the second track 2-212 arranged one above the other can mutually constrain the transport device 2-10, improving the traveling stability of the transport device 2-10. The first track 2-211 and the second track 2-212 are supported by a plurality of support frames 2-23.

The warehousing system includes the first track 2-211 and the second track 2-212, that is, the track assembly in this embodiment may include only two tracks, namely the first track 2-211 and the second track 2-212. The warehousing system may further include a third track (not shown in the figures), that is, the track assembly in this embodiment includes three tracks: the first track 2-211, the second track 2-212 and the third track. The track assembly in this embodiment may also include four or more tracks which are spaced apart in the height direction H' of the goods shelves 2-20. Of course, the warehousing system may also include only one track, which may be the first track 2-211 or the second track 2-212.

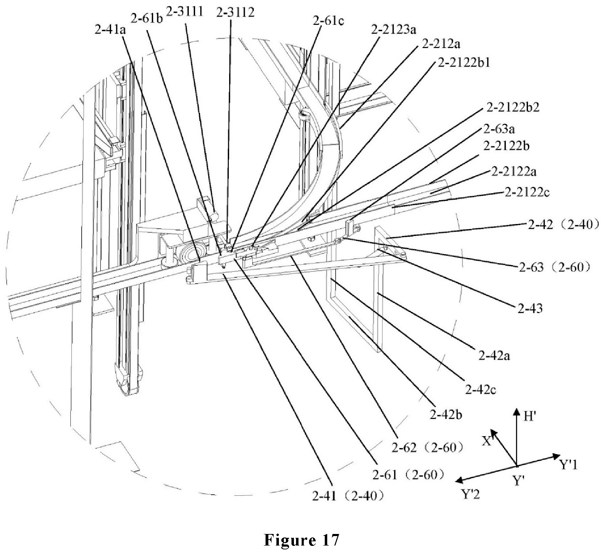

Optionally, as shown in Figures 17, 18, 19 and 20, the first goods shelf rails 2-2111, the first transfer rail 2-2112, the second goods shelf rails 2-2121 and the second transfer rail(2) 2-2122 are straight tracks, and the first connecting rails 2-2113 and the second connecting rails 2-2123 are curved rails. The first transfer rail 2-2112 includes a first bearing surface 2-2112a, as well as a first side wall 2-2112b and a second side wall 2-2112c provided on both sides of the first bearing surface 2-2112a. The first side wall 2-2112b is disposed close to the first connecting rails 2-2113.The first side wall 2-2112b has first openings (not shown in the figures), each of the first goods shelf rails 2-2111 includes a first swinging member (not shown in the figures) rotatably connected to the first side wall 2-2112b, and the first swinging member is configured to open respective one of the first openings by the rotation of respective one of the first connecting rails 2-2113; a first reset member (not shown in the figures) is provided between the first swinging member and the first side wall 2-2112b for automatically closing the respective first opening. The second transfer rail 2-2122 includes a second bearing surface 2-2122a, as well as a third side wall 2-2122b and a fourth side wall 2-2122c provided on both sides of the second bearing surface 2-2122a. The third side wall 2-2122b is disposed close to the second connecting rails 2-2113. The third side wall 2-2122b has second openings 2-2122b1, the second transfer rail 2-2122 includes second swinging members 2-2122b2 rotatably connected to the third side wall 2-2122b, and each of the second swinging member 2-2122b2 is configured to open respective one of the second openings 2-2122b1 by the rotation of respective one of the second connecting rails 2-2123; a second reset member (not shown in the figures) is provided between the second swinging member 2-2122b2 and the third side wall 2-2122b for automatically closing the respective one of the second openings 2-2122b1.

The first side wall 2-2112b has the first openings, and the first side wall 2-2112b includes the first swinging members rotatably connected thereto, wherein the form of the first openings and the first swinging member can be referred to the second openings 2-2122b1 and the second swinging members 2-2122b2. The first swinging member can rotate by a certain angle under the push of the respective first connecting rail 2-2113, to open the respective first opening, so that the respective first connecting rail 2-2113 can enter the first transfer rail 2-2112 and connect with the first transfer rail 2-2112 to form a track switching channel. When the respective first connecting rail 2-2113 is disconnected from the first transfer rail 2-2112, the first swinging member automatically resets under the action of the first reset member, to close the respective first opening. The third side wall 2-2122b has the second openings 2-2122b1, and the third side wall 2-2122b includes the second swinging members 2-2122b2 rotatably connected thereto. The second swinging member 2-2122b2 can rotate by a certain angle under the push of the respective second connecting rail 2-2123, to open the respective second opening 2-2122b1, so that the respective second connecting rail 2-2123 can enter the second transfer rail 2-2122 and connect with the second transfer rail 2-2122 to form a track switching channel. When the respective second connecting rail 2-2123 is disconnected from the second transfer rail 2-2122, the second swinging member 2-2122b2 automatically resets under the action of the second reset member, to close the respective second opening 2-2122b1.

The opening and closing of the respective first opening do not require additional electrical control, and can be accomplished under the action of the respective first connecting rail 2-2113 and the first reset member. The opening and closing of the respective second opening 2-2122b1 do not require additional electrical control, and can be accomplished under the action of the respective second connecting rail 2-2123 and the second reset member. This can simplify the structure of the first track 2-211 and the second track 2-212.

Optionally, the first reset member may be a reset spring, and the second reset member may also be a reset spring.

In some embodiments, as shown in Figures 17, 18, 21 and 22, the warehousing system further includes first linkage mechanisms 2-30, second linkage mechanisms 2-40, and a transport device 2-10. One end of each of the first linkage mechanisms 2-30 is connected to the first transfer rails 2-2112, and the other end of the first linkage mechanism 2-30 is connected to repective one of the first connecting rails 2-2113. One end of each of the second linkage mechanisms 2-40 is connected to the second transfer rail 2-2122, and the other end of the second linkage mechanism 2-40 is connected to repective one of the second connecting rails 2-2123. The transport device 2-10 travels along the first track 2-211 and the second track 2-212. The transport device 2-10 includes a control component, a column assembly 2-100, as well as a first driving mechanism 2-200 and a second driving mechanism 2-300 provided at the column assembly 2-100. The column assembly 2-100 includes a first column 2-101 and a second column 2-102 extending along the height direction H' of the goods shelves 2-20 and spaced apart in a direction perpendicular to the height direction H'. The first driving mechanism 2-200 includes a first roller 2-202 rotatably connected to the first column 2-101, a second roller 2-203 rotatably connected to the second column 2-102, and a first telescopic assembly 2-240 electrically connected to the control component. At least one of the first roller 2-202 and the second roller 2-203 is connected to a first drive motor 2-201. The second driving mechanism 2-300 includes a third roller 2-302 rotatably connected to the first column 2-101, a fourth roller 2-303 rotatably connected to the second column 2-102, and a second telescopic assembly 2-311 electrically connected to the control component. At least one of the third roller 2-302 and the fourth roller 2-303 is connected to a second drive motor 2-301. When the transport device 2-10 switches track from the first direction X' to the second direction Y', the transport device 2-10 can apply a centrifugal force to respective one of the first connecting rails 2-2113 and respective one of the second connecting rails 2-2123, enabling the respective first connecting rail 2-2113 to rotate relative to the first transfer rail 2-2112 and the respective second connecting rail 2-2123 to rotate relative to the second transfer rail 2-2122, thereby connecting the respective first connecting rail 2-2113 to the first transfer rail 2-2112 and connecting the respective second connecting rail 2-2123 to the second transfer rail 2-2122. When the transport device 2-10 switches track from the second direction Y' to the first direction X', under the drive of the control component, the first telescopic assembly 2-240 acts on respective one of the first linkage mechanisms 2-30 to connect respective one of the first connecting rails 2-2113 to respective one of the first goods shelf rails 2-2111, and the second telescopic assembly 2-311 acts on respective one of the second linkage mechanisms 2-40 to connect respective one of the second connecting rails 2-2123 to respective one of the second goods shelf rails 2-2121.

On the one hand, the first linkage mechanisms 2-30 and the second linkage mechanisms 2-40 can support the first connecting rails 2-2113 and the second connecting rails 2-2123. On the other hand, when the transport device 2-10 switches track from the second direction Y' to the first direction X', the control component controls the first telescopic member 2-2402 to act on the respective first linkage mechanism 2-30, and the respective first linkage mechanism 2-30 drives the respective first connecting rail 2-2113 to move toward the first transfer rail 2-2112, pushing the respective first swinging member to open the respective first opening, so that the respective first connecting rail 2-2113 connects to the first transfer rail 2-2112. At the same time, the control component also controls the second telescopic member 2-3112 to act on the respective second linkage mechanism 2-40, and the respective second linkage mechanism 2-40 drives the respective second connecting rail 2-2123 to move toward the second transfer rail 2-2122, pushing the respective second swinging member 2-2122b2 to open the respective second opening 2-2122b1, so that respective the second connecting rail 2-2123 connects to the second transfer rail 2-2122. Therefore, the transport device 2-10 can switch track to the first transfer rail 2-2112 and the second transfer rail 2-2122 via the respective first connecting rail 2-2113 and the respective second connecting rail 2-2123, achieving a change in moving direction, and can similarly switch track between various aisles 2-22. Thus, more transport devices 2-10 can be scheduled to an area with high local workload through flexible scheduling, and fewer transport devices 2-10 can be scheduled to an area with low workload, thereby optimizing the allocation of transport devices 2-10 and improving transport efficiency. Since the scheduling can be flexibly performed according to the workload, costs can also be saved.

In addition, during the track switching of the transport device 2-10, the transport device 2-10 can complete the track switching by only its own mechanisms, without the need for additional electrical control, facilitating control and scheduling, and being conducive to saving energy consumption.

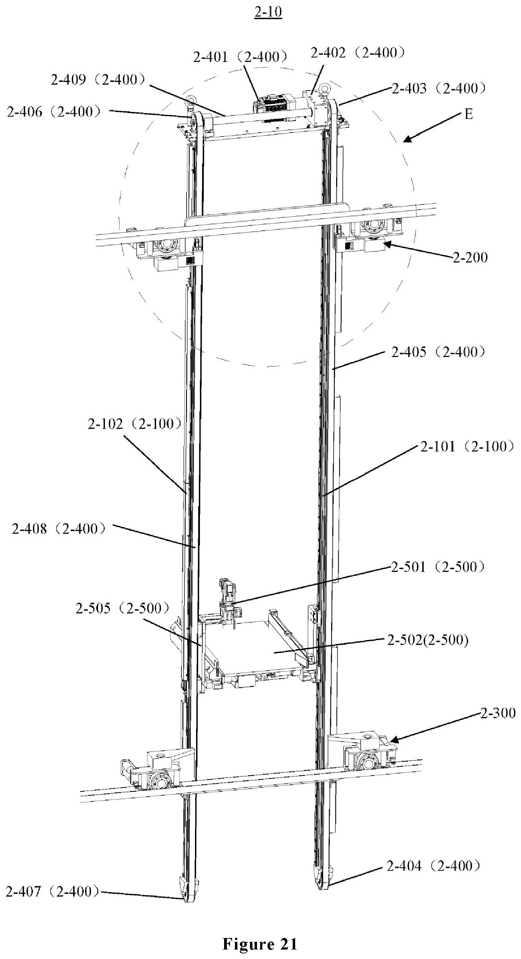

As shown in Figure 21, the column assembly 2-100 includes two columns, namely the first column 2-101 and the second column 2-102, which facilitates mounting the transport device 2-10 on the column assembly 2-100. The first driving mechanism 2-200 of the transport device 2-10 includes the first roller 2-202 and the second roller 2-203 respectively provided at the first column 2-101 and the second column 2-102. Traveling on the first track 2-211 by means of the two roller, namely the front and the rear rollers, can improve the traveling stability of the transport device 2-10. Moreover, the transport device 2-10 further includes the second driving mechanism 2-300. The two driving mechanisms allow the transport device 2-10 to travel on two tracks, one upper and one lower, and by constraining the transport device 2-10 with the two tracks, the traveling stability of the transport device 2-10 is further improved.

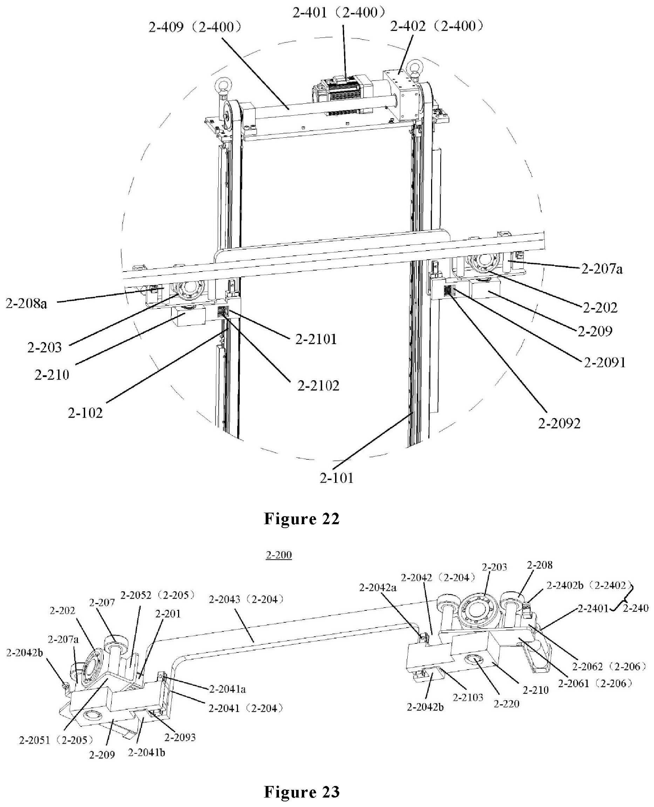

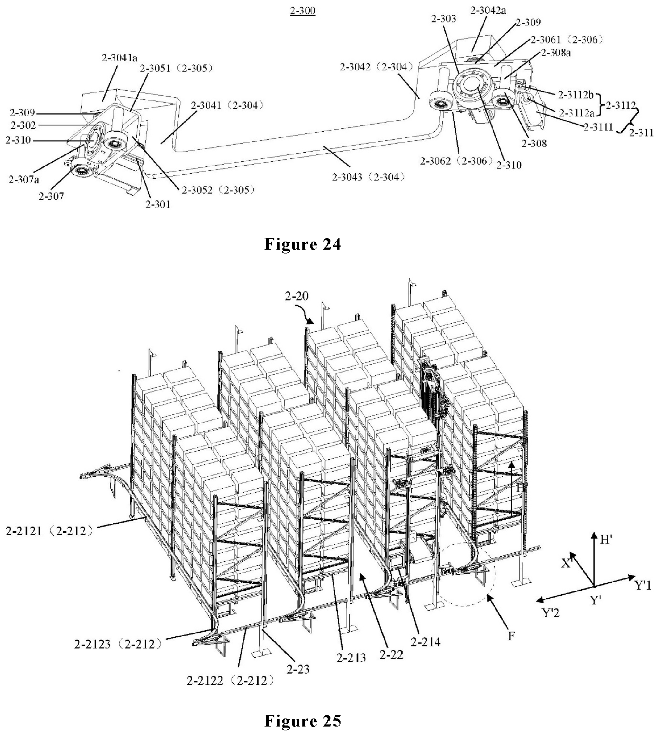

As shown in Figures 23 and 24, at least one of the first roller 2-202 and the second roller 2-203 is connected to the first drive motor 2-201, that is, one of the first roller 2-202 and the second roller 2-203 may be connected to the first drive motor 2-201 as a driving wheel, and the other of the first roller 2-202 and the second roller 2-203 may be a driven wheel; or both rollers may be connected to the first drive motor 2-201, both serving as driving wheels. At least one of the third roller 2-302 and the fourth roller 2-303 is connected to the second drive motor 2-301, that is, one of the third roller 2-302 and the fourth roller 2-303 may be connected to the second drive motor 2-301 as a driving wheel, and the other of the third roller 2-302 and the fourth roller 2-303may be a driven wheel; or both rollers may be connected to the second drive motor 2-301, both serving as driving wheels. Since the first roller 2-202 and the third roller 2-302 are rotatably connected to the first column 2-101, and the second roller 2-203 and the fourth roller 2-303 are rotatably connected to the second column 2-102, when passing through a bend of the first track 2-211 and the second track 2-212, the first roller 2-202 and the third roller 2-302 can rotate by a certain angle relative to the first column 2-101, and the second roller 2-203 and the fourth roller 2-303 can rotate by a certain angle relative to the second column 2-102. By rotating the rollers by a certain angle relative to the column assembly 2-100 to adapt to the change of the track, the transport device 2-10 can turn smoothly, and the structure is simple.

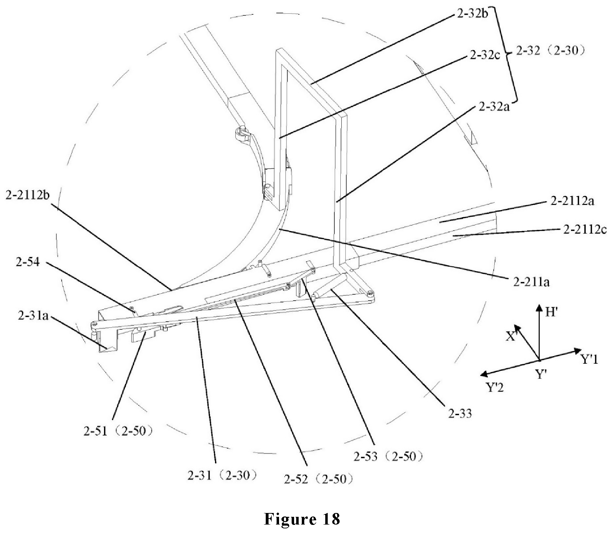

In some embodiments, as shown in Figures 17 and 18, each first linkage mechanism 2-30 includes a first sub-link 2-31 and a second sub-link 2-32. The first sub-link 2-31 is rotatably connected to the first transfer rail 2-2112; the first sub-link 2-31 is rotatably connected to the second sub-link 2-32; the second sub-link 2-32 is rotatably connected to the first connecting rail 2-2113; a third reset member 2-33 is provided between the first sub-link 2-31 and the second sub-link 2-32, so that after the transport device 2-10 successfully switches track, the first connecting rail 2-2113 automatically resets under the action of the third reset member 2-33. Each second linkage mechanism 2-40 includes a third sub-link 2-41 and a fourth sub-link 2-42. The third sub-link 2-41 is rotatably connected to the second transfer rail 2-2122; the third sub-link 2-41 is rotatably connected to the fourth sub-link 2-42; the fourth sub-link 2-42 is rotatably connected to the second connecting rail 2-2123; a fourth reset member 2-43 is provided between the third sub-link 2-41 and the fourth sub-link 2-42, so that after the transport device 2-10 successfully switches track, the second connecting rail 2-2123 automatically resets under the action of the fourth reset member 2-43.

In this embodiment, the first linkage mechanism 2-30 is composed of two sub-links, which is a binary linkage. The second linkage mechanism 2-40 is also composed of two sub-links, which is also a binary linkage. The first linkage mechanism 2-30 and the second linkage mechanism 2-40 are configured to convert rotational motion into linear motion. The lengths and connection positions of the first sub-link 2-31 and the second sub-link 2-32 determine the shape and mechanical characteristics of the first linkage mechanism 2-30. The lengths and connection positions of the third sub-link 2-41 and the fourth sub-link 2-42 determine the shape and mechanical characteristics of the second linkage mechanism 2-40. Binary linkages are widely used in various mechanical devices, such as engines, transmission systems, rocker arms, cutting machines, lifts, etc. Binary linkages mainly have advantages of simplicity, reliability, compact structure, high precision, and strong transmission capacity. Binary linkages are particularly suitable for applications requiring output of a large amount of linear motions.

The first sub-link 2-31, the second sub-link 2-32, the third sub-link 2-41 and the fourth sub-link 2-42 may be straight links, special-shaped links or curved links.

It can be understood that the first linkage mechanism 2-30 and the second linkage mechanism 2-40 may also be ternary linkages, i.e., composed of three connecting links, which can be used for applications requiring more complex motion.

In some embodiments, as shown in Figures 23 and 24, the first telescopic assembly 2-240 includes a first driving member 2-2401 and a first telescopic member 2-2402 connected to the first driving member 2-2401; the telescopic direction of the first telescopic member 2-2402 is parallel to a width direction of the first track 2-211; the second telescopic assembly 2-311 includes a second driving member 2-3111 and a second telescopic member 2-3112 connected to the second driving member 2-3111; the telescopic direction of the second telescopic member 2-3112 is parallel to a width direction of the second track 2-212; an end of the first sub-link 2-31 close to the first transfer rail 2-2112 has a first inclined surface 2-31a; when the transport device 2-10 moves in the positive direction Y'1 of the second direction Y' and needs to switch track, the control component controls the first driving member 2-2401 to drive the first telescopic member 2-2402 to cooperate with the first inclined surface 2-31a and enable the first sub-link 2-31 to rotate clockwise, thereby connecting the respective first connecting rail 2-2113 to the first transfer rail 2-2112. An end of the third sub-link 2-41 close to the second transfer rail 2-2122 has a second inclined surface 2-41a; when the transport device 2-10 moves in the positive direction Y'1 of the second direction Y' and needs to switch track, the control component controls the second driving member 2-3111 to drive the second telescopic member 2-3112 to cooperate with the second inclined surface 2-41a and enable the third sub-link 2-41 to rotate clockwise, thereby connecting the respective second connecting rail 2-2123 to the second transfer rail 2-2122.

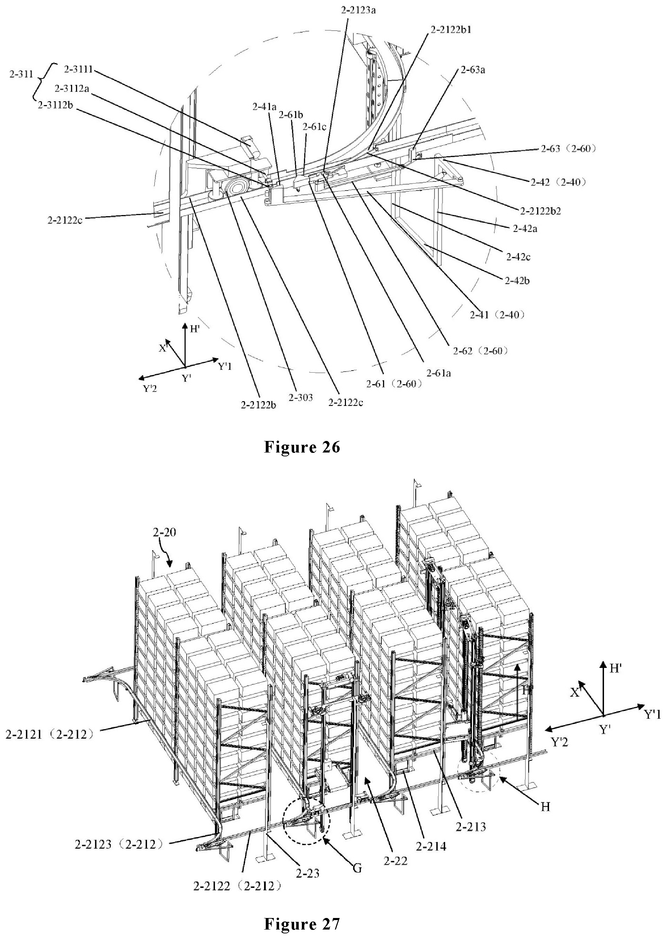

In this embodiment, when the transport device 2-10 switches tracks from the second direction Y' to the first direction X', as shown in Figures 25 and 26, the figures provides an illustration by taking the track switching for the second track 2-212 as an example. The transport device 2-10 can control the first driving member 2-2401 to operate through the control component, and the first driving member 2-2401 drives the first telescopic member 2-2402 to extend and act on the first inclined surface 2-31a, thereby driving the respective first linkage mechanism 2-30 to drive the respective first connecting rail 2-2113 to move toward the first transfer rail 2-2112, to achieve automatic closure of the respective first connecting rail 2-2113 and the respective first goods shelf rail 2-2111. At the same time, the control component also controls the second driving member 2-3111 to operate, and the second driving member 2-3111 drives the second telescopic member 2-3112 to extend and act on the second inclined surface 2-41a, thereby driving the respective second linkage mechanism 2-40 to drive the respective second connecting rail 2-2123 to move toward the second transfer rail 2-2122, to achieve automatic closure of the respective second connecting rail 2-2123 and the second transfer rail 2-2122. Specifically, the first telescopic member 2-2402 cooperates with the first inclined surface 2-31a to drive the first sub-link 2-31 to rotate clockwise, and the second telescopic member 2-3112 of the second driving mechanism 2-300 cooperates with the second inclined surface 2-41a to drive the third sub-link 2-41 to rotate clockwise, thereby automatically bring the respective first connecting rail 2-2113 into closed connection with the first transfer rail 2-2112, and automatically bring the respective second connecting rail 2-2123 into closed connection with the second transfer rail 2-2122.

The configuration of the first inclined surface 2-31a and the second inclined surface 2-41a enables the transport device 2-10 to complete the track switch through the cooperation of the first telescopic member 2-2402 with the respective first linkage mechanism 2-30, and the cooperation of the second telescopic member 2-3112 with the respective second linkage mechanism 2-40, and the structure is simple and easy to implement.

The inclination angle and the inclined surface length of the first inclined surface 2-31a and the second inclined surface 2-41a determine the rotation angle of the first sub-link 2-31 and the second sub-link 2-32. Therefore, the inclination angle and the inclined surface length of the first inclined surface 2-31a and the second inclined surface 2-41a can be set according to actual needs.

The first driving member 2-2401 and the second driving member 2-3111 each may be a motor or a cylinder.

The first telescopic member 2-2402 includes a first connecting rod 2-2402a connected to the first driving member 2-2401 and a first rolling wheel 2-2402b connected to the first connecting rod 2-2402a. The first driving member 2-2401 drives the first connecting rod 2-2402a to extend or retract. The first rolling wheel 2-2402b is rotatably connected to the first connecting rod 2-2402a via an intermediate connecting member. The cooperation of the first rolling wheel 2-2402b with each inclined surface helps to reduce friction. Similarly, the second telescopic member 2-3112 includes a second connecting rod 2-3112a connected to the second driving member 2-3111 and a second rolling wheel 2-3112b connected to the second connecting rod 2-3112a, as shown in Figure 26. The first connecting rod 2-2402a and the second connecting rod 2-3112a pass through the vertically arranged connecting plates of the various brackets, i.e., the second connecting plate 2-2052, the fourth connecting plate 2-2062, the sixth connecting plate 2-3052 and the eighth connecting plate 2-3062, to connect to the second rolling wheel 2-3112b.

In some embodiments, as shown in Figures 23 and 24, the first driving mechanism 2-200 includes a first crossbeam 2-204, as well as a first bracket 2-205 and a second bracket 2-206 rotatably connected to two ends of the first crossbeam 2-204. The first telescopic assembly 2-240 is mounted at the first bracket 2-205, and the second telescopic assembly 2-311 is mounted at the third bracket 2-305. The first crossbeam 2-204 is arranged perpendicular to the first column 2-101 and the second column 2-102. The two ends of the first crossbeam 2-204 are fixedly connected to the first column 2-101 and the second column 2-102 respectively. A first rotating shaft 2-220 of each of the first bracket 2-205 and the second bracket 2-206 is parallel to the height direction H' of the goods shelves 2-20. The first roller 2-202 is rotatably connected to the first bracket 2-205, and the second roller 2-203 is rotatably connected to the second bracket 2-206. A second rotating shaft 2-230 of each of the first roller 2-202 and the second roller 2-203 is perpendicular to the first rotating shaft 2-220, so that the first roller 2-202 is rotatably connected to the first column 2-101, and the second roller 2-203 is rotatably connected to the second column 2-102. The second driving mechanism 2-300 includes a second crossbeam 2-304, and a third bracket 2-305 and a fourth bracket 2-306 rotatably connected to two ends of the second crossbeam 2-304. The second crossbeam 2-304 is arranged perpendicular to the first column 2-101 and the second column 2-102. The two ends of the second crossbeam 2-304 are fixedly connected to the first column 2-101 and the second column 2-102 respectively. A third rotating shaft 2-309 of each of the third bracket 2-305 and the fourth bracket 2-306 is parallel to the height direction H' of the goods shelves 2-20. The third roller 2-302 is rotatably connected to the third bracket 2-305, and the fourth roller 2-303 is rotatably connected to the fourth bracket 2-306. A fourth rotating shaft 2-310 of each of the third roller 2-302 and the fourth roller 2-303 is perpendicular to the third rotating shaft 2-309, so that the third roller 2-302 is rotatably connected to the first column 2-101, and the fourth roller 2-303 is rotatably connected to the second column 2-102.

The first roller 2-202 and the second roller 2-203 are connected to the first crossbeam 2-204 via the first bracket 2-205 and the second bracket 2-206, respectively. The first crossbeam 2-204 is connected to the first column 2-101 and the second column 2-102. The first crossbeam 2-204 can constrain the first column 2-101 and the second column 2-102, making the first column 2-101 and the second column 2-102 a whole. Similarly, the second crossbeam 2-304 can also constrain the first column 2-101 and the second column 2-102, making the first column 2-101 and the second column 2-102 a whole. The first bracket 2-205 and the second bracket 2-206 are rotatably connected to the first crossbeam 2-204 via the first rotating shaft 2-220, and the first crossbeam 2-204 is fixed between the first column 2-101 and the second column 2-102, so that the first roller 2-202 can rotate relative to the first column 2-101, and the second roller 2-203 can rotate relative to the second column 2-102, to enable the first roller 2-202 and the second roller 2-203 to rotate by a certain angle during turning to adapt to the track change. The third bracket 2-305 and the fourth bracket 2-306 are rotatably connected to the second crossbeam 2-304 via the third rotating shaft 2-309, and the second crossbeam 2-304 is fixed between the first column 2-101 and the second column 2-102, so that the third roller 2-302 can rotate relative to the first column 2-101, and the fourth roller 2-303 can rotate relative to the second column 2-102, to enable the third roller 2-302 and the fourth roller 2-303 can to rotate by a certain angle during turning to adapt to the track change. Therefore, the transport device 2-10 can be allowed to pass through a bend smoothly.

Optionally, as shown in Figure 23, the first bracket 2-205 includes a first connecting plate 2-2051 and a second connecting plate 2-2052 arranged perpendicular to each other. The first connecting plate 2-2051 is parallel to the bearing surface of the first track 2-211, and the second connecting plate 2-2052 is perpendicular to the bearing surface of the first track 2-211. The first driving member 2-2401 is mounted on the outer side of the second connecting plate 2-2052. The first telescopic member 2-2402 extends and retracts through the second connecting plate 2-2052 in a direction parallel to the bearing surface of the first track 2-211. One end of the first rotating shaft 2-220 is fixedly connected to the first connecting plate 2-2051, and the other end of the first rotating shaft 2-220 is rotatably connected to the first crossbeam 2-204. The second connecting plate 2-2052 includes a through hole, and the output shaft of the first drive motor 2-201 passes through the through hole to connect with the first roller 2-202. The output shaft of the first drive motor 2-201 is the second rotating shaft 2-230.

Similarly, the second bracket 2-206 includes a third connecting plate 2-2061 and a fourth connecting plate 2-2062 arranged perpendicular to each other. The third connecting plate 2-2061 is parallel to the bearing surface of the first track 2-211, and the fourth connecting plate 2-2062 is perpendicular to the bearing surface of the first track 2-211. The difference between the second bracket 2-206 and the first bracket 2-205 is that the second bracket 2-206 may be provided with the first drive motor 2-201 or may not be provided with the first drive motor 2-201. One end of the first rotating shaft 2-220 is fixedly connected to the third connecting plate 2-2061, and the other end of the first rotating shaft 2-220 is rotatably connected to the first crossbeam 2-204.

As shown in Figure 24, the third bracket 2-305 includes a fifth connecting plate 2-3051 and a sixth connecting plate 2-3052 arranged perpendicular to each other. The structure of the third bracket 2-305 is the same as that of the first bracket 2-205, and will not be described again here. The fourth bracket 2-306 includes a seventh connecting plate 2-3061 and an eighth connecting plate 2-3062 arranged perpendicular to each other. The structure of the fourth bracket 2-306 is the same as that of the second bracket 2-206, and will not be described again here.

In some embodiments, as shown in Figures 23 and 24, the first driving mechanism 2-200 includes a first guide member and/or a second guide member, and the second driving mechanism 2-300 includes a third guide member and/or a fourth guide member. The first guide member and/or the second guide member contacts an inner surface of a first outer side wall 2-211a of the first track 2-211, to apply a centrifugal force to respective one of the first connecting rails 2-2113 when the transport device 2-10 travels to the respective first connecting rail 2-2113, wherein the first outer side wall 2-211a is a side wall of the first track 2-211 away from a center of the first connecting rail 2-2113. The third guide member and/or the fourth guide member contacts an inner surface of a second outer side wall 2-212a of the second track 2-212, to apply a centrifugal force to respective one of the second connecting rails 2-2123 when the transport device 2-10 travels to the respective second connecting rail 2-2123, wherein the second outer side wall 2-212a is a side wall of the second track 2-212 away from a center of the second connecting rail 2-2123.

In this embodiment, the guide members not only serve to constrain the moving direction of the rollers to be parallel to the track side walls, thereby avoiding direct collision with the tracks during track switching, but also can apply centrifugal force to the respective first connecting rail 2-2113 and the respective second connecting rail 2-2123. That is, when the transport device switches from the first direction X' to the second direction Y', the first guide member and/or the second guide member can contact the inner surface of the first outer side wall 2-211a of the first track 2-211, thereby applying centrifugal force to the first outer side wall 2-211a, so as to enable the respective first connecting rail 2-2113 to rotate and approach the first transfer rail 2-2112, achieving automatic closure. Moreover, the third guide member and/or the fourth guide member can contact the inner surface of the second outer side wall 2-212a of the second track 2-212, thereby applying a centrifugal force to the respective second outer side wall 2-212a, so as to enable the respective second connecting rail 2-2123 to rotate and approach the second transfer rail 2-2122, achieving automatic closure.

In this embodiment, the guide members can not only reduce direct collision between the transport device 2-10 and the first track 2-211 and the second track 2-212 while facilitating turning of the transport device 2-10, but also drive the respective first connecting rail 2-2113 to automatically close with the first transfer rail 2-2112, and respective the second connecting rail 2-2123 to automatically close with the second transfer rail 2-2122 when the transport device 2-10 switches from the first direction X' to the second direction Y'. Moreover, the automatic closure of the respective first connecting rail 2-2113 with the first transfer rail 2-2112 and the automatic closure of the respective second connecting rail 2-2123 with the second transfer rail 2-2122 are driven by the cooperation of the guide members with the track side walls. This track switching process are controlled replying on the cooperation of purely mechanical components for control, without the need for electrical control, which can reduce the probability of errors.

Moreover, the above structure fully considers the inevitability of track switching. Because the first direction X' is the extending direction of the aisle 2-22 and the second direction Y' is the direction perpendicular to the extending direction of the aisle 2-22, after traveling along the first direction X' to the end, it is inevitable to switch track to enter the next aisle 2-22 unless returning along the same way, so there is no need to determine whether to go straight or switch track.

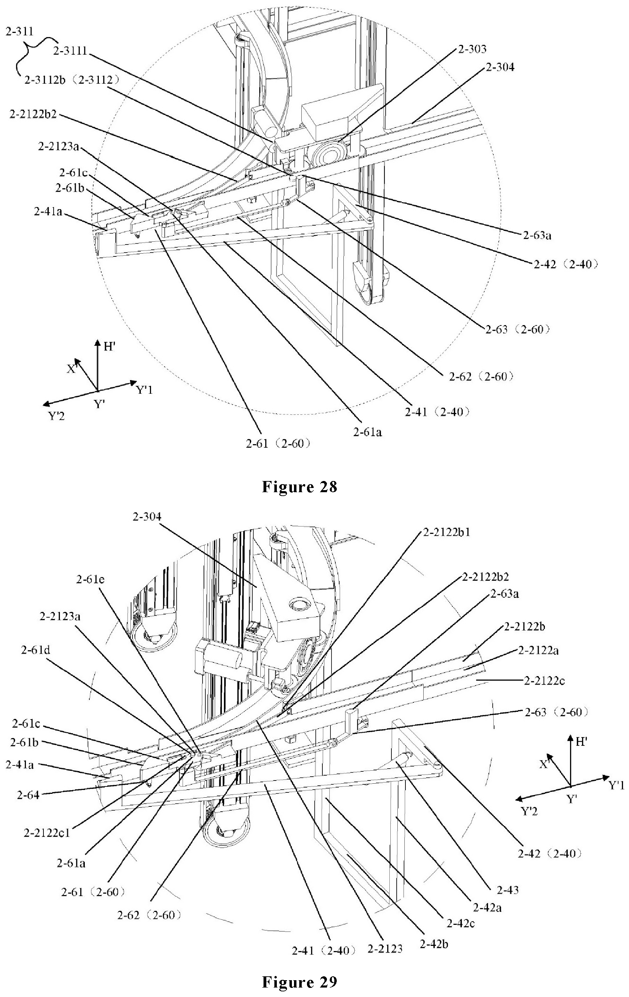

When the transport device 2-10 goes straight along the first track 2-211 and the second track 2-212, as shown in Figures 27 and 28, a traveling path of the first roller 2-202 and the second roller 2-203 of the first driving mechanism 2-200 is parallel to the first crossbeam 2-204, and a traveling path of the third roller 2-302 and the fourth roller 2-303 of the second driving mechanism 2-300 is parallel to the second crossbeam 2-304. When the transport device 2-10 enters a bend along the first track 2-211 and the second track 2-212, as shown in Figures 27 and 29, the first roller 2-202 and the second roller 2-203 of the first driving mechanism 2-200 rotate with the first bracket 2-205 and the second bracket 2-206 under the guiding of the first guide member and/or the second guide member, so as to rotate relative to the first crossbeam 2-204, with the traveling path changing from being parallel to the first crossbeam 2-204 when going straight to forming a certain angle with the first crossbeam 2-204, so that the first roller 2-202 and the second roller 2-203 adapt to the change in track direction, completing the direction change along the first track 2-211. At the same time, the third roller 2-302 and the fourth roller 2-303 of the second driving mechanism 2-300 rotate with the third bracket 2-305 and the fourth bracket 2-306 under the guiding of the third guide member and/or the fourth guide member, so as to rotate relative to the second crossbeam 2-304, with the traveling path changing from being parallel to the second crossbeam 2-304 when going straight to forming a certain angle with the second crossbeam 2-304, so that the third roller 2-302 and the fourth roller 2-303 adapt to the change in track direction, completing the direction change along the second track 2-212.

Optionally, the first driving mechanism 2-200 may include only the first guide member or only the second guide member, or the first driving mechanism 2-200 may include both the first guide member and the second guide member. The second driving mechanism 2-300 may also include only the third guide member or the fourth guide member, or the second driving mechanism 2-300 may include both the third guide member and the fourth guide member.

In some embodiments, as shown in Figures 21 and 22, the first guide member is first guide wheels 2-207 provided on both sides of the first roller 2-202; the outer peripheral walls of the first guide wheels 2-207 abut against the inner walls of the first track 2-211 on both sides of the first track 2-211; the first guide wheels 2-207 each are connected to the first bracket 2-205 via a first rotary shaft 2-207a parallel to the height direction H' of the goods shelves 2-20, and the first guide wheels 2-207 each are rotatably connected to the first rotary shaft 2-207a. The second guide member is second guide wheels 2-208 provided on both sides of the second roller 2-203; the outer peripheral walls of the second guide wheels 2-208 abut against the inner walls of the first track 2-211 on both sides of the first track 2-211; the second guide wheels 2-208 each are connected to the second bracket 2-206 via a second rotary shaft 2-208a parallel to the height direction H' of the goods shelves 2-20, and the second guide wheels 2-208 each are rotatably connected to the second rotary shaft 2-208a. The third guide member is third guide wheels 2-307 provided on both sides of the third roller 2-302; the outer peripheral walls of the third guide wheels 2-307 abut against the inner walls of the second track 2-212 on both sides of the second track 2-212; the third guide wheels 2-307 each are connected to the third bracket 2-305 via a third rotary shaft 2-307a parallel to the height direction H' of the goods shelves 2-20, and the third guide wheels 2-307 each are rotatably connected to the third rotary shaft 2-307a. The fourth guide member is fourth guide wheels 2-308 provided on both sides of the fourth roller 2-303; the outer peripheral walls of the fourth guide wheels 2-308 abut against the inner walls of the second track 2-212 on both sides of the second track 2-212; the fourth guide wheels 2-308 each are connected to the fourth bracket 2-306 via a fourth rotary shaft 2-308a parallel to the height direction H' of the goods shelves 2-20, and the fourth guide wheels 2-308 each are rotatably connected to the fourth rotary shaft 2-308a.

On the one hand, when the transport device 2-10 travels along the first track 2-211 and the second track 2-212, the first drive motor 2-201 drives the first roller 2-202 and the second roller 2-203 to move along the first track 2-211, and the second drive motor 2-301 drives the third roller 2-302 and the fourth roller 2-303 to move along the second track 2-212. The first guide wheels 2-207 and the second guide wheels 2-208 abut against the two side walls of the first track 2-211, which can guide the transport device 2-10, preventing the first roller 2-202 and the second roller 2-203 from directly colliding with the first track 2-211 during turning. The third guide wheels 2-307 and the fourth guide wheels 2-308 abut against the two side walls of the second track 2-212, which can guide the transport device 2-10, preventing the third roller 2-302 and the fourth roller 2-303 from directly colliding with the second track 2-212 during turning. At the same time, the rotation of the first guide wheels 2-207 and the second guide wheels 2-208 can avoid direct friction with the two side walls of the first track 2-211, and the rotation of the third guide wheels 2-307 and the fourth guide wheels 2-308 can avoid direct friction with the two side walls of the second track 2-212, protecting the first track 2-211, the second track 2-212 and the transport device 2-10, and reducing the traveling resistance of the transport device 2-10.

On the other hand, the first guide wheels 2-207 and the second guide wheels 2-208 contact the two side walls of the first track 2-211. When the transport device 2-10 passes through the respective first connecting rail 2-2113 and the respective second connecting rail 2-2123 along the first direction X' toward the second direction Y', the centrifugal force can be applied to the respective first connecting rail 2-2113 and the respective second connecting rail 2-2123, so as to enable the respective first connecting rail 2-2113 to move toward the first transfer rail 2-2112 and achieve automatic closure between the respective first connecting rail 2-2113 and the first transfer rail 2-2112, and enable the respective second connecting rail 2-2123 to move toward the second transfer rail 2-2122, and achieve automatic closure between the respective second connecting rail 2-2123 and the second transfer rail 2-2122.

Optionally, the first guide member and/or the second guide member may be a guide rod parallel to the rotating shaft of the first roller 2-202 and the second roller 2-203, with both sides of the guide rod contacting the inner walls of the first track 2-211 on the two sides of the first track 2-211. The guide rod provided on one side of the first roller 2-202 is arranged to pass through the first bracket 2-205, and the guide rod provided on one side of the second roller 2-203 is arranged to pass through the second bracket 2-206. The respective guide rod is provided in the first bracket 2-205 or the second bracket 2-206, and can rotate synchronously with the respective bracket when turning. The portions of two ends of the guide rod that contact the inner walls of the first track 2-211on the two sides of the first track 2-211 can be spherical to reduce the contact area with the inner walls.

In some embodiments, as shown in Figures 17, 18, 19 and 20, the warehousing system further includes third linkage mechanisms 2-50 rotatably connected to the first transfer rail 2-2112, and fourth linkage mechanisms 2-60 rotatably connected to the second transfer rail 2-2122. Each third linkage mechanism 2-50 is located between the first sub-link and the second sub-link 2-32. Each fourth linkage mechanism 2-60 is located between the third sub-link 2-41 and the fourth sub-link 2-42. Each third linkage mechanism 2-50 includes a fifth sub-link 2-51, a sixth sub-link 2-52 and a seventh sub-link 2-53 rotatably connected respectively, wherein the fifth sub-link 2-51 is rotatably connected to the second side wall 2-2112c, the seventh sub-link 2-53 is rotatably connected to the second side wall 2-2112c; the connection point of the fifth sub-link 2-51 is disposed close to the connection point of the first sub-link 2-31; the fifth sub-link 2-51 is provided with a first recessed portion, and the respective first connecting rail 2-2113 is provided with a first protruding portion cooperating with the first recessed portion; the first transfer rail 2-2112 is provided with first clearance portions, the first protruding portion cooperates with or releases cooperation from the respective first recessed portion though respective one of the first clearance portions, so as to connect the respective first connecting rail 2-2113 with the first transfer rail 2-2112 or disconnect the respective first connecting rail 2-2113 from the first transfer rail 2-2112. Each fourth linkage mechanism 2-60 includes an eighth sub-link 2-61, a ninth sub-link 2-62 and a tenth sub-link 2-63 rotatably connected respectively; the connection point of the eighth sub-link 2-61 is disposed close to the connection point of the third sub-link 2-41; the eighth sub-link 2-61 is rotatably connected to the fourth side wall 2-2122c, and the tenth sub-link 2-63 is rotatably connected to the fourth side wall 2-2122c; the eighth sub-link 2-61 is provided with a second recessed portion 2-61a, and the respective second connecting rail 2-2123 is provided with a second protruding portion 2-2123a cooperating with the second recessed portion 2-61a; the second transfer rail 2-2122 is provided with second clearance portions 2-2122c1, the second protruding portion 2-2123a cooperates with or releases cooperation with the second recessed portion 2-61a through respective one of the second clearance portions, so as to connect the respective second connecting rail 2-2123 with the second transfer rail 2-2122 or disconnect the respective second connecting rail 2-2123 from the second transfer rail 2-2122.

In this embodiment, when the transport device 2-10 needs to switch track, the respective first connecting rail 2-2113 is connected to the first transfer rail 2-2112, and the respective first connecting rail 2-2113 and the first transfer rail 2-2112 are locked by the cooperation of the first protruding portion and the first recessed portion, enhancing the connection stability between the respective first connecting rail 2-2113 and the first transfer rail 2-2112. At the same time, the respective second connecting rail 2-2123 is connected to the second transfer rail 2-2122, and the respective second connecting rail 2-2123 and the second transfer rail 2-2122 are locked by the cooperation of the second protruding portion 2-2123a and the second recessed portion 2-61a, enhancing the connection stability between the second connecting rail 2-2123 and the second transfer rail 2-2122. The cooperation and releasing cooperation of the first protruding portion with the first recessed portion can be achieved by the motion of the respective third linkage mechanism 2-50. The cooperation of the second protruding portion 2-2123a with the second recessed portion 2-61a and releasing cooperation of the second protruding portion 2-2123a from the second recessed portion 2-61a can be achieved by the motion of the respective fourth linkage mechanism 2-60.

The third linkage mechanism 2-50 and the fourth linkage mechanism 2-60 each are ternary linkages. Compared with binary linkages, ternary linkages can adapt to more complex motion.

The motion of the third linkage mechanism 2-50 can be controlled by a motor, or by the cooperation of mechanical structures.

In some embodiments, the third linkage mechanism 2-50 further includes a first adapter 2-54. One end of the first adapter 2-54 is rotatably connected to the second side wall 2-2112c, and the other end of the first adapter 2-54 is rotatably connected to the fifth sub-link 2-51. The fourth linkage mechanism 2-60 further includes a second adapter 2-64. One end of the second adapter 2-64 is rotatably connected to the fourth side wall 2-2122c, and the other end of the second adapter 2-64 is rotatably connected to the eighth sub-link 2-61.

In this embodiment, by providing the first adapter 2-54 and the second adapter 2-64, the width of the fifth sub-link 2-51 and the eighth sub-link 2-61 can be increased, thereby facilitating the provision of third and fourth inclined surfaces, and appropriately increasing the inclined surface length of the third and fourth inclined surfaces, increasing the rotation angle of the fifth sub-link 2-51 and the eighth sub-link 2-61, so as to smoothly unlocking the cooperation between the first protruding portion and the first recessed portion, and between the second protruding portion 2-2123a and the second recessed portion 2-61a.

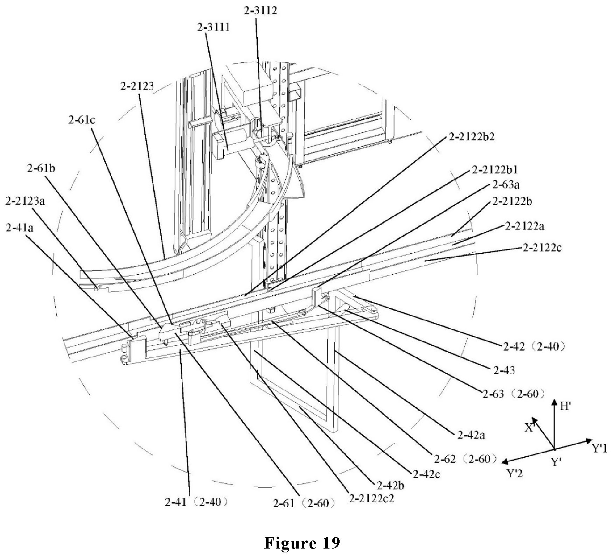

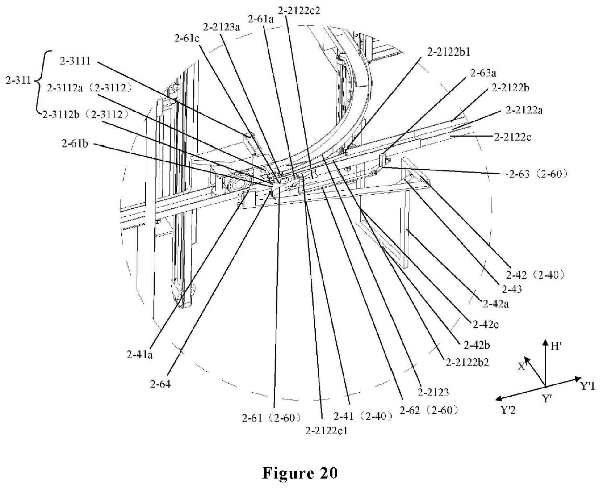

In some embodiments, as shown in Figures 19 and 20, first mounting portions are provided on the side of the second side wall 2-2112c facing away from the first side wall 2-2112b, the middle part of the fifth sub-link 2-51 is rotatably connected to one end of the sixth sub-link 2-52, and an end of the fifth sub-link 2-51 provided with the first recessed portion is rotatably connected to respective one of the first mounting portions. Second mounting portions 2-2122c2 are provided on the side of the fourth side wall 2-2122c facing away from the third side wall 2-2122b, the middle part of the eighth sub-link 2-61 is rotatably connected to one end of the ninth sub-link 2-62, and an end of the eighth sub-link 2-61 provided with the second recessed portion 2-61a is rotatably connected to respective one of the second mounting portions 2-2122c2.

In this embodiment, the end of the fifth sub-link 2-51 provided with the first recessed portion is rotatably connected to the respective first mounting portion, so that the end of the fifth sub-link 2-51 provided with the first recessed portion cannot be displaced, ensuring the fixity at the position where the first recessed portion is located, facilitating smooth cooperation of the first protruding portion with the first recessed portion, and making it difficult to unlock after cooperation, improving the locking effect. Similarly, the end of the eighth sub-link 2-61 provided with the second recessed portion 2-61a is rotatably connected to the respective second mounting portion 2-2122c2, so that the end of the eighth sub-link 2-61 provided with the second recessed portion 2-61a cannot be displaced, ensuring the fixity at the position where the second recessed portion 2-61a is located, facilitating smooth cooperation of the second protruding portion 2-2123a with the second recessed portion 2-61a, and making it difficult to unlock after cooperation, improving the locking effect.

Further, as shown in Figure 29, a first guide surface is provided on the side of the first recessed portion away from the first adapter 2-54, and a second guide surface is provided on the side of the first recessed portion close to the first adapter 2-54. The first protruding portion cooperates with the first recessed portion via the first guide surface, which can reduce the difficulty of cooperation. The first protruding portion releases cooperation with the first recessed portion via the second guide surface, which can reduce the difficulty of releasing cooperation. Similarly, a third guide surface 2-61d is provided on the side of the second recessed portion 2-61a away from the second adapter 2-64, and a fourth guide surface 2-61e is provided on the side of the second recessed portion 2-61a close to the second adapter 2-64. The second protruding portion 2-2123a cooperates with the second recessed portion 2-61a via the third guide surface 2-61d, which can reduce the difficulty of cooperation. The second protruding portion 2-2123a releases cooperation with the second recessed portion 2-61a via the fourth guide surface 2-61e, which can reduce the difficulty of releasing cooperation.

In some embodiments, as shown in Figure 29, the fifth sub-link 2-51 is provided with a third inclined surface (not shown in the figures) and a fourth inclined surface (not shown in the figures) connected to each other arranged sequentially along the direction away from the connection point of the fifth sub-link 2-51, and reference may be made to the sixth inclined surface 2-61b and the seventh inclined surface 2-61c of the eighth sub-link 2-61; after the respective first connecting rail 2-2113 is connected to the first transfer rail 2-2112, the fourth inclined surface abuts against the free end of the respective first connecting rail 2-2113. The seventh link is provided with a fifth inclined surface which is disposed close to the connection point of the seventh sub-link 2-53 with the second side wall 2-2112c. The eighth sub-link 2-61 is provided with a sixth inclined surface 2-61b and a seventh inclined surface 2-61c connected to each other arranged sequentially along the direction away from the connection point of the eighth sub-link 2-61; after the respective second connecting rail 2-2123 is connected to the second transfer rail 2-2122, the seventh inclined surface 2-61c abuts against the free end of the respective second connecting rail 2-2123. The tenth sub-link 2-63 is provided with an eighth inclined surface 2-63a, which is disposed close to the connection point of the tenth sub-link 2-63 with the fourth side wall 2-2122c.

As shown in Figures 25 and 26, when the transport device 2-10 enters the respective first connecting rail 2-2113 from the first transfer rail 2-2112 and enters the respective second connecting rail 2-2123 from the second transfer rail 2-2122, under the action of respective one of the first linkage mechanisms 2-30 and respective one of the second linkage mechanisms 2-40, the respective first connecting rail 2-2113 connects to the first transfer rail 2-2112 and the first protruding portion cooperates with the first recessed portion, the respective second connecting rail 2-2123 connects to the second transfer rail 2-2122 and the second protruding portion 2-2123a cooperates with the second recessed portion 2-61a. When the transport device 2-10 goes straight along the first transfer rail 2-2112 and the second transfer rail 2-2122 and moves in the positive direction Y'1 of the second direction Y' (referring to Figure 28, the positive direction Y'1 of the second direction Y' means traveling from the left side), the control component controls the first telescopic member 2-2402 located at the front end in the moving direction to extend and cooperate with the third inclined surface, so as to enable the fifth sub-link 2-51 to rotate counterclockwise, thereby releasing cooperation of the first protruding portion with the first recessed portion, and the control component controls the second telescopic member 2-3112 located at the front end in the moving direction to extend and cooperate with the sixth inclined surface 2-61b, so as to enable the eighth sub-link 2-61 to rotate counterclockwise, thereby releasing cooperation of the second protruding portion 2-2123a with the second recessed portion 2-61a. When the transport device 2-10 goes straight along the first transfer rail 2-2112 and the second transfer rail 2-2122 and moves in the negative direction Y'2 of the second direction Y', as shown in Figure 28, the control component controls the first telescopic member 2-2402 located at the front end in the moving direction to extend and cooperate with the fifth inclined surface, so as to enable the seventh sub-link 2-53 to rotate counterclockwise, thereby releasing cooperation of the first recessed portion with the first protruding portion, and the control component controls the second telescopic member 2-3112 located at the front end in the moving direction to extend and cooperate with the eighth inclined surface 2-63a, so as to enable the tenth sub-link 2-63 to rotate counterclockwise, thereby releasing cooperation of the second protruding portion 2-2123a with the second recessed portion 2-61a.

As shown in Figures 25 and 26, when the transport device 2-10 enters respective the first connecting rail 2-2113 from the first transfer rail 2-2112 and enters the respective second connecting rail 2-2123 from the second transfer rail 2-2122, the control component controls the first telescopic member 2-2402 and the second telescopic member 2-3112 located at the front end in the moving direction to extend. The first telescopic member 2-2402 acts on the first inclined surface 2-31a of the respective first linkage mechanism 2-30, to drive the respective first linkage mechanism 2-30 to rotate, so that the respective first connecting rail 2-2113 is brought into closed connection with the first transfer rail 2-2112. The second telescopic member 2-3112 acts on the second inclined surface 2-41a of the respective second linkage mechanism 2-40, to drive the respective second linkage mechanism 2-40 to rotate, so that the respective second connecting rail 2-2123 is brought into closed connection with the second transfer rail 2-2122. At the same time, the first protruding portion cooperates with the first recessed portion, and the second protruding portion 2-2123a cooperates with the second recessed portion 2-61a, to maintain the track closed state. After that, the transport device 2-10 successfully passes through the track switching area and enters the area of the first goods shelf rail 2-2111 and the second goods shelf rail 2-2121. The track switching area refers to the intersection area between the respective first connecting rail 2-2113 and the first transfer rail 2-2112 and between the respective second connecting rail 2-2123 and the second transfer rail 2-2122. After the transport device 2-10 successfully switches track, the tracks remain closed. When the next transport device 2-10 needs to go straight through the track switching area along the first transfer rail 2-2112 and the second transfer rail 2-2122, since the tracks are still closed, the control component needs to control the first telescopic member 2-2402 and the second telescopic member 2-3112 located at the front end in the moving direction to extend again, the first telescopic member 2-2402 acts on the respective third linkage mechanism 2-50, and the second telescopic member 2-3112 acts on the respective fourth linkage mechanism 2-60, to release the cooperation between the first protruding portion and the first recessed portion and between the second protruding portion 2-2123a and the second recessed portion 2-61a. This can be divided into two cases: the transport device 2-10 travels in the positive direction Y'1 along the first transfer rail 2-2112 and the second transfer rail 2-2122, or the transport device 2-10 travels in the negative direction Y'2 along the first transfer rail 2-2112 and the second transfer rail 2-2122.

When moving in the positive direction Y'1 of the second direction Y', the control component controls the first telescopic member 2-2402 located at the front end in the moving direction to extend and cooperate with the third inclined surface. Under the action of the first telescopic member 2-2402, the fifth sub-link 2-51 rotates counterclockwise, and drives the sixth sub-link 2-52 and the seventh sub-link 2-53 to rotate, so that the first recessed portion moves in a direction away from the first protruding portion, thereby releasing the cooperation between the first recessed portion and first recessed portion. Similarly, the second telescopic member 2-3112 acts on the sixth inclined surface 2-61b to release the cooperation between the second protruding portion 2-2123a and the second recessed portion 2-61a. After releasing cooperation, the respective first connecting rail 2-2113 is automatically reset to the initial state under the action of the third reset member 2-33 of the respective first linkage mechanism 2-30, and the respective second connecting rail 2-2123 is automatically reset to the initial state under the action of the fourth reset member 2-43 of the respective second linkage mechanism 2-40. The initial state means that the respective first connecting rail 2-2113 is not connected to the first transfer rail 2-2112 and maintains a certain distance from the first transfer rail 2-2112, and the respective second connecting rail 2-2123 is not connected to the second transfer rail 2-2122 and maintains a certain distance from the second transfer rail 2-2122. The distance between the respective first connecting rail 2-2113 and the first transfer rail 2-2112, and between the respective second connecting rail 2-2123 and the second transfer rail 2-2122, should be configured such that the normal operation of the transport device 2-10 is not obstructed.

When moving in the negative direction Y'2 of the second direction Y', as shown in Figure 14, the control component controls the first telescopic member 2-2402 located at the front end in the moving direction to extend and cooperate with the fifth inclined surface. Under the action of the first telescopic member 2-2402, the seventh sub-link 2-53 rotates counterclockwise, thereby driving the fifth sub-link 2-51 to move in a direction away from the first protruding portion, to release the cooperation between the first recessed portion and the first protruding portion. Similarly, the control component controls the second telescopic member 2-3112 to extend and cooperate with the eighth inclined surface 2-63a. Under the action of the second telescopic member 2-3112, the tenth sub-link 2-63 rotates counterclockwise, thereby driving the eighth sub-link 2-61 to move in a direction away from the second protruding portion 2-2123a, to release the cooperation between the second protruding portion 2-2123a and the second recessed portion 2-61a. After releasing cooperation, the respective first connecting rail 2-2113 is automatically reset to the initial state under the action of the respective third reset member 2-33 of the first linkage mechanism 2-30, and the respective second connecting rail 2-2123 is automatically reset to the initial state under the action of the fourth reset member 2-43 of the respective second linkage mechanism 2-40.

When the transport device 2-10 enters the first transfer rail 2-2112 from the respective first connecting rail 2-2113 and enters the second transfer rail 2-2122 from the respective second connecting rail 2-2123, as shown in Figures 18 and 19, under the action of the first guide member and/or the second guide member and the third guide member and/or the fourth guide member, the respective first connecting rail 2-2113 connects to the first transfer rail 2-2112 and the first protruding portion cooperates with the first recessed portion, and the respective second connecting rail 2-2123 connects to the second transfer rail 2-2122 and the second protruding portion 2-2123a cooperates with the second recessed portion 2-61a; the control component controls the first telescopic member 2-2402 located at the rear end in the moving direction to extend and cooperate with the fourth inclined surface, and enables the fifth sub-link 2-51 to rotate counterclockwise, thereby releasing cooperation of the first protruding portion with the first recessed portion, and the control component controls the second telescopic member 2-3112 located at the rear end in the moving direction to extend and cooperate with the seventh inclined surface 2-61c, and enables the eighth sub-link 2-61 to rotate counterclockwise, thereby releasing cooperation of the second protruding portion 2-2123a with the second recessed portion 2-61a.

In this embodiment, when the transport device 2-10 travels to the respective first connecting rail 2-2113 and the respective second connecting rail 2-2123, by the centrifugal force applied by the first guide member and/or the second guide member to the first outer side wall 2-211a of the first track 2-211, and the centrifugal force applied by the third guide member and/or the fourth guide member to the second outer side wall 2-212a of the second track 2-212, the respective first connecting rail 2-2113 is enabled to automatically approach the first transfer rail 2-2112, and the respective second connecting rail 2-2123 is enabled to automatically approach the second transfer rail 2-2122, and closure connection between the respective first connecting rail 2-2113 and the first transfer rail 2-2112 and closure connection between the respective second connecting rail 2-2123 and the second transfer rail 2-2122 are achieved respectively. During connecting the respective first connecting rail 2-2113 to the first transfer rail 2-2112 and connecting the respective second connecting rail 2-2123 to the second transfer rail 2-2122, the first protruding portion cooperates with the first recessed portion via the first guide surface, and the second protruding portion 2-2123a cooperates with the second recessed portion 2-61a via the third guide surface 2-61d, to lock and connect the respective first connecting rail 2-2113 with the first transfer rail 2-2112, and lock and connect the respective second connecting rail 2-2123 with the second transfer rail 2-2122. When the transport device 2-10 travels to the end of the respective first connecting rail 2-2113 and the end of the respective second connecting rail 2-2123, since the fourth inclined surface abuts against the free end of respective the first connecting rail 2-2113 and the seventh inclined surface 2-61c abuts against the free end of the second connecting rail 2-2123, the control component controls the first telescopic member 2-2402 located at the rear end in the moving direction to extend and act on the fourth inclined surface, to successfully unlock the first protruding portion from the first recessed portion. After unlocking, the respective first connecting rail 2-2113 is reset to the initial state under the action of the third reset member 2-33, and the respective second connecting rail 2-2123 is reset to the initial state under the action of the fourth reset member 2-43.

In this embodiment, the unlocking of the first protruding portion from the first recessed portion and the unlocking of the second protruding portion 2-2123a from the second recessed portion 2-61a, are achieved by the cooperation of the first telescopic member 2-2402 with the respective third linkage mechanism 2-50, and the cooperation of the second telescopic member 2-3112 with the respective fourth linkage mechanism 2-60, without the need for a dedicated motor provided for the third linkage mechanism 2-50 and the fourth linkage mechanism 2-60 to drive the third linkage mechanism 2-50 and the fourth linkage mechanism 2-60. Moreover, the first telescopic member 2-2402 can cooperate with both the first linkage mechanism 2-30 and the third linkage mechanism 2-50 simultaneously, and the second telescopic member 2-3112 can cooperate with both the second linkage mechanism 2-40 and the fourth linkage mechanism 2-60 simultaneously, which can further simplify the structure of the transport device 2-10.

In some embodiments, as shown in Figures 17, 26 and 28, a height at which the first swinging member is located is lower than a height at which the first protruding portion is located; a height at which the second swinging member 2-2122b2 is located is lower than a height at which the second protruding portion 2-2123a is located. This can prevent interference between the first swinging member and the first protruding portion in the height direction H', and between the second swinging member 2-2122b2 and the second protruding portion 2-2123a in the height direction H', thereby eliminating the need to configure the first swinging member and the second swinging member 2-2122b2, or the first protruding portion and the second protruding portion 2-2123a, as special shapes for avoidance, which facilitates simplifying the structure of the first swinging member, the second swinging member 2-2122b2, the first protruding portion and the second protruding portion 2-2123a.

In some embodiments, as shown in Figures 23, 24, 30a and 31a, the first driving mechanism 2-200 further includes a first floating member 2-209 and a second floating member 2-210. One end of the first floating member 2-209 is movably connected to the first crossbeam 2-204 in the height direction H', such as by sliding or rolling connection, and the other end of the first floating member 2-209 is rotatably connected to the first bracket 2-205. The first floating member 2-209 has a first accommodating groove 2-2091 provided in the height direction H', wherein the top end of the first accommodating groove 2-2091 is closed, and the bottom end of the first accommodating groove 2-2091 is provided with a first opening. A first elastic member 2-2092 is provided in the first accommodating groove 2-2091. A free end of the first side wall 2-2112b is provided with a first limiting table 2-2041b. The bottom end of the first elastic member 2-2092 is connected to the first limiting table 2-2041b via the first opening, so that the first elastic member 2-2092 applies an elastic force to the first floating member 2-209 to press against the first track 2-211. One end of the second floating member 2-210 is movably connected to the first crossbeam 2-204 in the height direction H', such as by sliding or rolling connection, and the other end of the second floating member 2-210 is rotatably connected to the second bracket 2-206. The second floating member 2-210 has a second accommodating groove 22-101 provided in the height direction H', wherein the top end of the second accommodating groove 22-101 is closed, and the bottom end of the second accommodating groove 22-101 is provided with a second opening 2-2122b1. A second elastic member 22-102 is provided in the second accommodating groove 22-101. A free end of the second side wall 2-2112c is provided with a second limiting table 2-2042b. The bottom end of the second elastic member 22-102 is connected to the second limiting table 2-2042b via the second opening 2-2122b1, so that the first elastic member 2-2092 applies an elastic force to the second floating member 2-210 to press against the first track 2-211.

As shown in Figure 23, the first bracket 2-205 is slidably connected to the first crossbeam 2-204 via the first floating member 2-209, and the second bracket 2-206 is slidably connected to the first crossbeam 2-204 via the second floating member 2-210, so that the first bracket 2-205 and the second bracket 2-206 can be adjusted relative to the first crossbeam 2-204 in the height direction H', thereby enabling the first roller 2-202 and the second roller 2-203 connected to the first bracket 2-205 and the second bracket 2-206 to be adjusted in the height direction H', to adapt to the change in heights at which the first track 2-211 and the second track 2-212 are located. Moreover, under the elastic forces of the first elastic member 2-2092 and the second elastic member 22-102, the first floating member 2-209 and the second floating member 2-210 can press against the first bracket 2-205 and the second bracket 2-206 upward, so that the first roller 2-202 and the second roller 2-203 always contact the track surface of the first track 2-211. The track surface refers to a surface on which the first roller 2-202 and the second roller 2-203 travel. Furthermore, by adjusting the compression amounts of the first elastic member 2-2092 and the second elastic member 22-102, sufficient positive pressure can be obtained to prevent the first roller 2-202 and the second roller 2-203 from slipping during travel.

The first elastic member 2-2092 may be fixedly connected to the first limiting table 2-2041b or simply abut against the first limiting table 2-2041b. The second elastic member 22-102 may be fixedly connected to the second limiting table 2-2042b or simply abut against the second limiting table 2-2042b .

In some embodiments, as shown in Figures 23 and 24, the first crossbeam 2-204 includes a first transverse portion 2-2043 perpendicular to the height direction H', and a first side portion 2-2041 and a second side portion 2-2042 which are connected at a preset angle to two ends of the first transverse portion 2-2043 in a direction perpendicular to the height direction H'. One of the first side portion 2-2041 and the first floating member 2-209 is provided with a first slide rail 2-2041a, and the other of the first side portion 2-2041 and the first floating member 2-209 is provided with a first slide groove 2-2093 cooperating with the first slide rail 2-2041a, wherein the extending direction of the first slide rail 2-2041a is parallel to the height direction H'. One of the second side portion 2-2042 and the second floating member 2-210 is provided with a second slide rail 2-2042a, and the other of the second side portion 2-2042 and the second floating member 2-210 is provided with a second slide groove 22-103 cooperating with the second slide rail 2-2042a, wherein the extending direction of the second slide rail 2-2042a is parallel to the height direction H'. The first limiting table 2-2041b is configured to limit the first floating member 2-209, and the second limiting table 2-2042b is configured to limit the second floating member 2-210. The second crossbeam 2-304 includes a second transverse portion 2-3043 perpendicular to the height direction H', and a third side portion 2-3041 and a fourth side portion 2-3042 which are connected at a preset angle to the two ends of the second transverse portion 2-3043 in a direction perpendicular to the height direction H'. The end of the third side portion 2-3041 is connected with a first segment 2-3041a, and the end of the fourth side portion 2-3042 is connected with a second segment 2-3042a. Both the first segment 2-3041a and the second segment 2-3042a are parallel to the second transverse portion 2-3043 and are respectively located on extension lines of the second transverse portion 2-3043 on the respective sides where the first segment 2-3041a and the second segment 2-3042a are located respectively. The third bracket 2-305 is rotatably connected to the first segment 2-3041a, and the fourth bracket 2-306 is rotatably connected to the second segment 2-3042a.

In this embodiment, the first floating member 2-209 is provided with the first slide groove 2-2093, the first side portion 2-2041 is provided with the first slide rail 2-2041a, the second floating member 2-210 is provided with the second slide groove 22-103, and the second side portion 2-2042 is provided with the second slide rail 2-2042a. The first crossbeam 2-204 is generally U-shaped, facilitating the sliding connection of the first floating member 2-209 and the second floating member 2-210 with the first side portion 2-2041 and the second side portion 2-2042, without interfering with the first crossbeam 2-204 during sliding. The first limiting table 2-2041b at the free end of the first side portion 2-2041 is configured to limit the first floating member 2-209, and the second limiting table 2-2042b at the free end of the second side portion 2-2042 is configured to limit the second floating member 2-210, preventing the first floating member 2-209 and the second floating member 2-210 from detaching from the first side portion 2-2041 and the second side portion 2-2042.

Optionally, the first floating member 2-209 is perpendicular to the first side portion 2-2041, and the second floating member 2-210 is perpendicular to the second side portion 2-2042, facilitating the rotational connection of the first bracket 2-205 with the first floating member 2-209, and the rotational connection of the second bracket 2-206 with the second floating member 2-210.

The second transverse portion 2-3043 of the second crossbeam 2-304 also generally forms a U-shape with the third side portion 2-3041 and the fourth side portion 2-3042, and the first segment 2-3041a at the end of the third side portion 2-3041 is perpendicular to the third side portion 2-3041, and the second segment 2-3042a at the end of the fourth side portion 2-3042 is perpendicular to the fourth side portion 2-3042, facilitating the connection of the third bracket 2-305 with the first segment 2-3041a, and the connection of the fourth bracket 2-306 with the second segment 2-3042a.

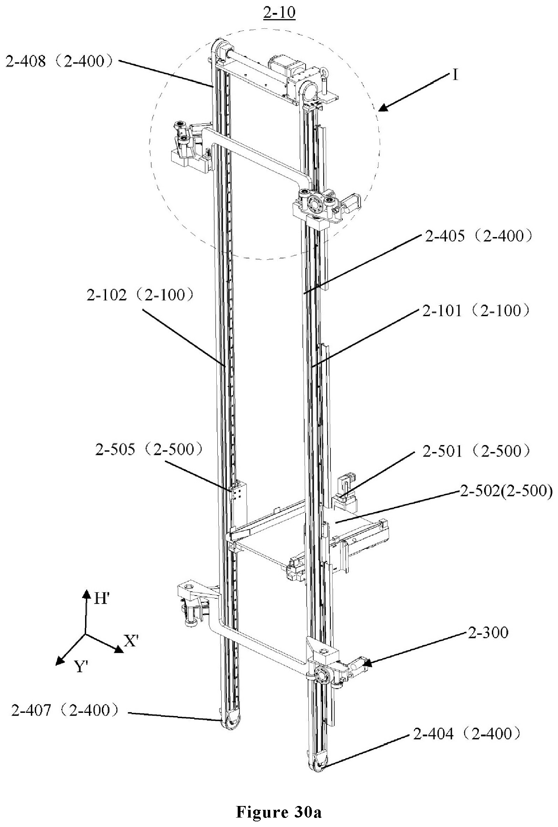

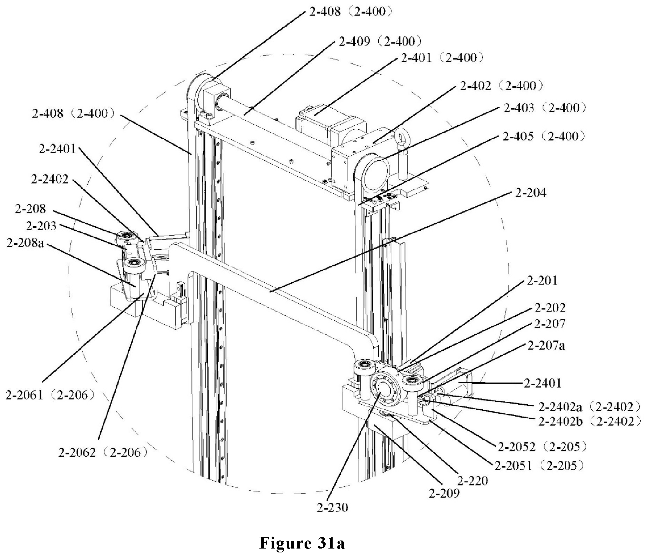

In some embodiments, as shown in Figures 30a and 31a, the transport device 2-10 further includes a lifting mechanism 2-400 and a goods pick-up mechanism 2-500 provided at the column assembly 2-100. The lifting mechanism 2-400 is connected to the goods pick-up mechanism 2-500 and drives the goods pick-up mechanism 2-500 to move up and down along the column assembly 2-100. The goods pick-up mechanism 2-500 is configured for transporting goods at different heights on the goods shelves 2-20. The lifting mechanism 2-400 includes at least one third drive motor 2-401 and a reduction motor 2-402, wherein the third drive motor 2-401 is fixed at top ends of the first column 2-101 and the second column 2-102, and the third drive motor 2-401 and the reduction motor 2-402 are connected. A first driven wheel 2-403 is provided at the top end of the first column 2-101, and a second driven wheel 2-404 is provided at the bottom end of the first column 2-101, wherein the first driven wheel 2-403 and the second driven wheel 2-404 are synchronizing wheels or sprockets, and a first synchronous belt 2-405 or a first chain is sleeved on the first driven wheel 2-403 and the second driven wheel 2-404. The goods pick-up mechanism 2-500 is fixedly connected to the first synchronous belt 2-405 or the first chain. A third driven wheel 2-406 is provided at the top end of the second column 2-102, and a fourth driven wheel 2-407 is provided at the bottom end of the second column 2-102, wherein the third driven wheel 2-406 and the fourth driven wheel 2-407 are synchronous wheels or sprockets, and a second synchronous belt 2-408 or a second chain is sleeved on the third driven wheel 2-406 and the fourth driven wheel 2-407. The goods pick-up mechanism 2-500 is fixedly connected to the second synchronous belt 2-408 or the second chain. The first driven wheel 2-403 and the third driven wheel 2-406 each are connected to an output shaft of a reduction motor 2-402; or the first driven wheel 2-403 is connected to the output shaft of the reduction motor 2-402, and the third driven wheel 2-406 is connected to the first driven wheel 2-403 via a coupling 2-409.

By fixedly connecting the goods pick-up mechanism 2-500 to the synchronous belts or chains, when the third drive motor 2-401 and the reduction motor 2-402 drive the first driven wheel 2-403 and the third driven wheel 2-406 to rotate, the synchronous belts or chains can be driven to move up and down, thereby driving the goods pick-up mechanism 2-500 to move up and down to different heights of the goods shelves 2-20 for picking-up and placing goods. The first driven wheel 2-403 and the third driven wheel 2-406 may share one set of third drive motor 2-401 and reduction motor 2-402, or may each use a set of third drive motor 2-401 and reduction motor 2-402.

In this embodiment, the transport device can travel across aisles 2-22, thereby picking-up and placing goods on various goods shelves 2-20 at any time, and the transport device can also pick-up and place goods at any height of various goods shelves 2-20 at any time under the action of the lifting mechanism 2-400. When the workload is low, the number of transport devices 2-10 can be further reduced, achieving flexible scheduling of the transport devices 2-10.

Of course, the form of the lifting mechanism 2-400 is not limited to driven wheels with synchronous belts, sprockets with chains, but may also be rack and pinion, etc.

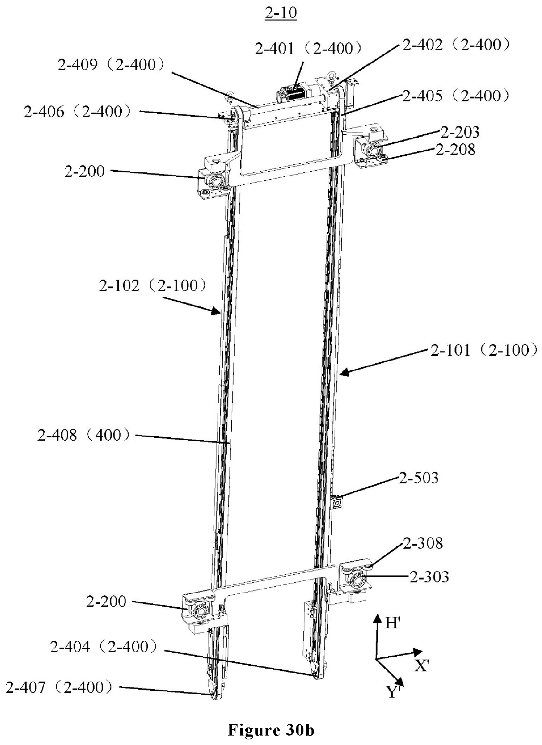

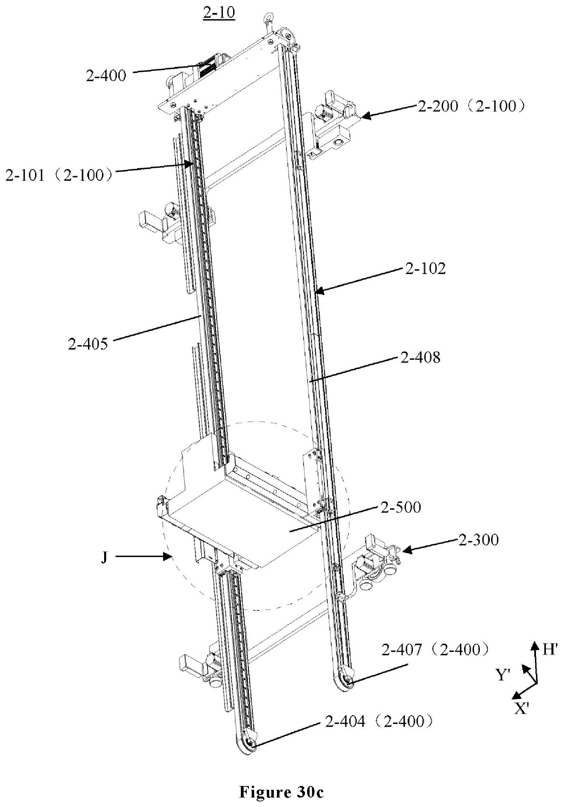

Optionally, the goods pick-up mechanism 2-500 includes a hook-pull assembly 2-501 and a transmission assembly (not shown in the figures). The hook-pull assembly 2-501 includes a hook-pull plate, which can reciprocate under the control of a driving component to realize its function. The hook-pull assembly 2-501 may also be replaced by other forms such as lifting, clamping, suction cups, etc. to achieve similar functions. Figure 30a illustrates a hook-pull form as an example. As shown in Figures 30a, 30b and 30c, the goods pick-up mechanism 2-500 includes a hook-pull assembly 2-501, a transmission assembly, and a support plate 2-502. As shown in Figure 30b, the goods pick-up device 10 is also equipped with a vision sensor or a distance sensor for sensing the distance between the goods and the goods pick-up mechanism 2-500. The vision sensor or the distance sensor may be mounted at the column assembly 2-100 or at the goods pick-up mechanism 2-500, wherein the vision sensor may be a camera 2-503.

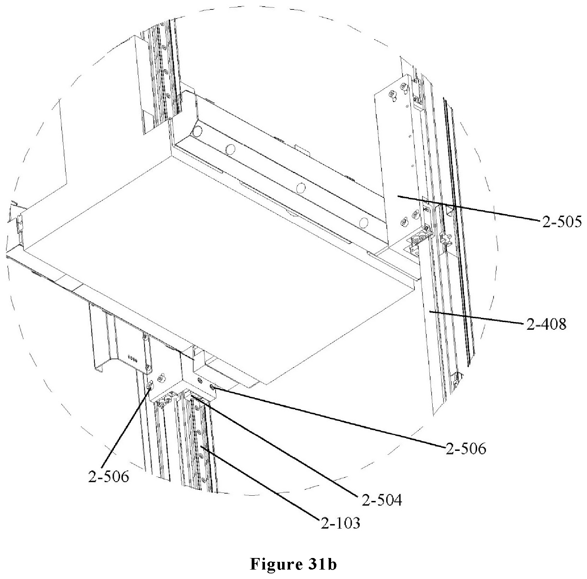

Optionally, in combination with Figures 30c and 31b, the first column 2-101 and/or the second column 2-102 is provided with third slide rail(s) 2-103, and the goods pick-up mechanism 2-500 is provided with slider(s) 2-504 cooperating with the third slide rail(s) 2-103, so that the goods pick-up mechanism moves in a straight line.

The cooperation between the goods pick-up mechanism 2-500 and the column assembly 2-100 via the third slide rail(s) 2-103 and the slider(s) 2-504 can constrain the movement direction of the goods pick-up mechanism 2-500, so that the goods pick-up mechanism 2-500 moves in a straight line. In combination with Figures 30a, 30c and 31b, the goods pick-up mechanism 2-500 includes a support plate 2-502 and connecting side plates 2-505 located on both sides of the support plate 2-502. The connecting side plates 2-505 are configured to be fixedly connected to the first synchronous belt 2-405 and the second synchronous belt 2-408, for example, by screws 2-506. The connecting side plates 2-505 are also configured to be fixedly connected to the sliders 2-504, for example, by screws 2-506. Of course, the fixed connection may also be in the form of welding, riveting, etc.

In some embodiments, as shown in Figures 15 and 16, each goods shelf 2-20 is provided with a plurality of storage positions 2-213 along both the height direction H' and the extending direction of the aisle 2-22. The extending direction of the aisle 2-22 is the first direction X' in Figures 15 and 16. The depth of the goods shelf 2-20 is a single storage position 2-213 or double storage positions 2-213. A plurality of buffer positions 2-214 are provided below the lowermost storage positions 2-213. The buffer positions 2-214 are configured for temporarily storing goods.

The buffer positions 2-214 allow the goods pick-up mechanism 2-500 to temporarily store goods upon completing a sorting and/or storing and picking action, and then the goods are transferred and sorted through docking of a freight robot, and are delivered to a destination goods position or a sorting position, or even a transport position for sorted goods.

Preferably, the depth of the goods shelf 2-20 is double storage positions 2-213. Since the transport device 2-10 travels across aisles 2-22, it can transport goods in both rows of the same goods shelf 2-20, and allows adjacent goods shelves 2-20 to share one aisle 2-22, reducing the number of aisles 2-22, thereby increasing the arrangement density of goods shelves 2-20, and thus improving the space utilization of the warehousing system.

In some embodiments, as shown in Figures 15-20, the first track 2-211 is located at the top of the goods shelves 2-20 and is lower than the height at which the highest storage positions 2-213 are located. The second track 2-212 is located at the bottom of the goods shelves 2-20 and is higher than the height at which the buffer positions 2-214 are located. The third slide rail 2-103 extends above the plane where the highest storage positions 2-213 are located and extends below the plane where the buffer positions 2-214 are located. The second sub-link 2-32 includes a first vertical segment 2-32a extending upward, a first horizontal segment 2-32b connected to the first vertical segment 2-32a, and a second vertical segment 2-32c extending downward and connected to the first horizontal segment 2-32b, wherein a distance between the first vertical segment 2-32a and the second vertical segment 2-32c is greater than a distance between the first column 2-101 and the second column 2-102. The fourth sub-link 2-42 includes a third vertical segment 2-42a extending downward, a second horizontal segment 2-42b connected to the third vertical segment 2-42a, and a fourth vertical segment 2-42c extending upward and connected to the second horizontal segment 2-42b, wherein a distance between the third vertical segment 2-42a and the fourth vertical segment 2-42c is greater than a distance between the first column 2-101 and the second column 2-102.

In this embodiment, the third slide rail 2-103 extends above the highest storage positions 2-213 and below the buffer positions 2-214, so that the goods pick-up mechanism 2-500 can pick-up goods located on the highest and lowest storage positions 2-213, as well as goods located on the buffer positions 2-214. The second sub-link 2-32 and the fourth sub-link 2-42 are configured as the above-mentioned specially shaped links to avoid interfering with the third slide rail 2-103 of the transport device 2-10 and the column assembly 2-100 provided with the third slide rail 2-103, so that the transport device 2-10 does not interfere with the first linkage mechanism 2-30 and the second linkage mechanism 2-40 during travel. In addition, the specially shaped structure of the second sub-link 2-32 also allows sufficient space to be available at the top of the column assembly 2-100 for installing the third drive motor 2-401.

It can be understood that the structure of the first linkage mechanism 2-30 may be different from or the same as that of the second linkage mechanism 2-40.

In some embodiments, as shown in Figures 15 and 16, the first track 2-211 and the second track 2-212 are disposed facing each other. The first linkage mechanisms 2-30 and the second linkage mechanisms 2-40 are mirror-symmetrical about the midline of the line connecting the first track 2-211 and the second track 2-212. The third linkage mechanisms 2-50 and the fourth linkage mechanisms 2-60 are mirror-symmetrical about the midline of the line connecting the first track 2-211 and the second track 2-212.

The arrangement of first track 2-211 and the second track 2-212 facing each other can constrain the transport device 2-10 in the height direction H', reducing the risk of vertical shifting of the transport device 2-10 during operation.

The structure of the first linkage mechanism 2-30 is the same as that of the second linkage mechanism 2-40, and the structure of the third linkage mechanism 2-50 is the same as that of the fourth linkage mechanism 2-60, which can simplify the manufacturing process, and eliminate the need to distinguish between the first linkage mechanism 2-30 and the second linkage mechanism 2-40 during installation, thereby improving installation efficiency.

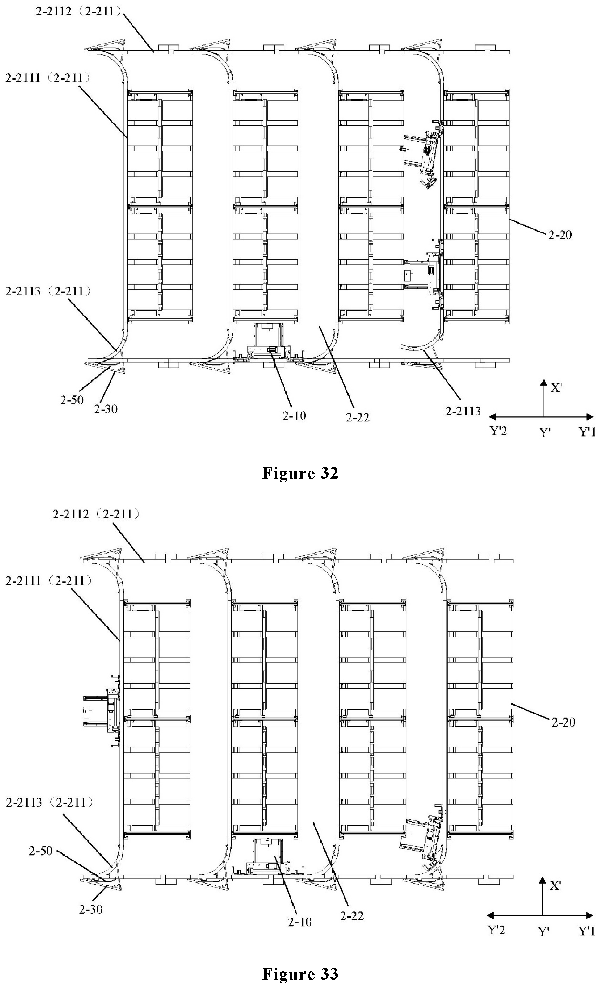

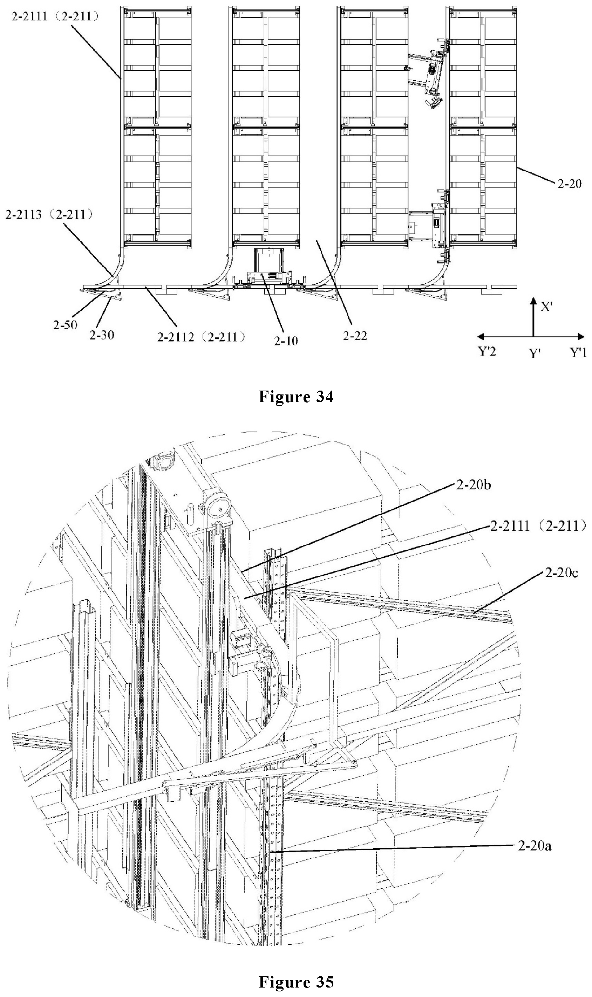

In some embodiments, as shown in Figures 32 and 33, Figure 32 illustrates a state where the first connecting rail 2-2113 is disconnected from the first transfer rail 2-2112, and Figure 33 illustrates a state where the first connecting rail 2-2113 is connected to the first transfer rail 2-2112. As shown in Figure 35, a good shelf 2-20 includes a plurality of third columns 2-20a spaced apart along the first direction X' and the second direction Y'. The third columns 2-20a are connected to each other by third crossbeams 2-20b. The respective first goods shelf rail 2-2111 and the respective second goods shelf rail 2-2121 may be fixed to the third crossbeams 2-20b on the same side of two adjacent goods shelves 2-20, for example, fixed on the outer side of the third crossbeams 2-20b. The first goods shelf rails 2-2111 and the third crossbeams 2-20b may be fixedly connected by screws, and the second goods shelf rails 2-2121 may be fixedly connected to the third crossbeams 2-20b by screws. The first goods shelf rail 2-2111 and the second goods shelf rail 2-2121 are configured for the transport device 2-10 to travel and to pick-up and place goods on the goods shelves 2-20 on both sides of the aisle 2-22. The transport device 2-10 is provided on the inner side of the first goods shelf rail 2-2111 and the first transfer rail 2-2112, and of the second goods shelf rail 2-2121 and the second transfer rail 2-2122.

In this embodiment, the first goods shelf rail 2-2111 and the second goods shelf rail 2-2121 are respectively provided at adjacent goods shelves 2-20, and are provided at the third crossbeams 2-20b on the same side of the adjacent goods shelves 2-20, for example, provided on the outer side of the third crossbeams 2-20b. The same side refers to the left side or the right side along the second direction Y'. Adjacent goods shelves 2-20 use the same first goods shelf rail 2-2111 and first transfer rail 2-2112, and the same second goods shelf rail 2-2121 and second transfer rail 2-2122, reducing the number of tracks provided, thus allowing the spacing between adjacent goods shelves 2-20 to be smaller, thereby improving space utilization. Through the connection of the first connecting rail 2-2113 with the first transfer rail 2-2112 and disconnection of the first connecting rail 2-2113 from the first transfer rail 2-2112, and the connection of the second connecting rail 2-2123 with the second transfer rail 2-2122 and disconnection of the second connecting rail 2-2123 from the second transfer rail 2-2122, the transport device 2-10 can enter any aisle 2-22, making scheduling more flexible, and the transport device 2-10 can pick-up and place goods on the goods shelves 2-20 on both sides of the aisle 2-22, such that the number of transport devices 2-10 is saved when the workload is low, and more robots can be scheduled in adjacent aisles 2-22 when the workload is high, improving efficiency and flexibility.

In this embodiment, the first transfer rail 2-2112 and the second transfer rail 2-2122 each are not connected to the goods shelf 2-20. Therefore, to ensure the support strength for the first transfer rail 2-2112 and the second transfer rail 2-2122, the first transfer rail 2-2112 and the second transfer rail 2-2122 may be supported by support frames 2-23, i.e., the support frames 2-23 are mainly configured to support the first transfer rail 2-2112 and the second transfer rail 2-2122.

In other embodiments, different from the embodiment of Figures 32 and 33, the respective first goods shelf rail 2-2111 and the respective second goods shelf rail 2-2121 are fixed to the third crossbeams 2-20b of the same goods shelf 2-20, for the transport device 2-10 to travel and to pick-up and place goods on the goods shelves 2-20 on both sides of the aisle 2-22. The transport device 2-10 is provided on the outer side of the first goods shelf rail 2-2111 and the first transfer rail 2-2112, and of the second goods shelf rail 2-2121 and the second transfer rail 2-2122.

In this embodiment, the arrangement positions of the first goods shelf rail 2-2111 and the second goods shelf rail 2-2121 are slightly different from the previous embodiment, wherein the respective first goods shelf rail 2-2111 and the respective second goods shelf rail 2-2121 are not fixed to the outer side of third crossbeams 2-20b on the same side of adjacent goods shelves 2-20, but are provided at the same goods shelf 2-20. Moreover, because the arrangement positions of the goods shelf rails are different, the arrangement position of the transport device 2-10 is also different from that in the previous embodiment. In the previous embodiment, the transport device 2-10 is provided on the outer side of the first goods shelf rail 2-2111 and the first transfer rail 2-2112, and of the second goods shelf rail 2-2121 and the second transfer rail 2-2122. In this embodiment, the transport device 2-10 is provided on the inner side of the first goods shelf rail 2-2111 and the first transfer rail 2-2112, and of the second goods shelf rail 2-2121 and the second transfer rail 2-2122. Both embodiments can make reasonable use of the space of the aisle 2-22.

In other embodiments, as shown in Figure 34, the first transfer rail 2-2112 and the second transfer rail 2-2122 are provided only on one side of the goods shelves 2-20. In Figures 32 and 33, the first transfer rail 2-2112 and the second transfer rail 2-2122 are provided on both sides of the goods shelves 2-20.

To enhance the support strength for the goods shelf 2-20, support beams 2-20c are also provided between adjacent third columns 2-20a. As shown in Figure 22, a plurality of support beams 2-20c may be provided along the height direction H' of the goods shelf 2-20.

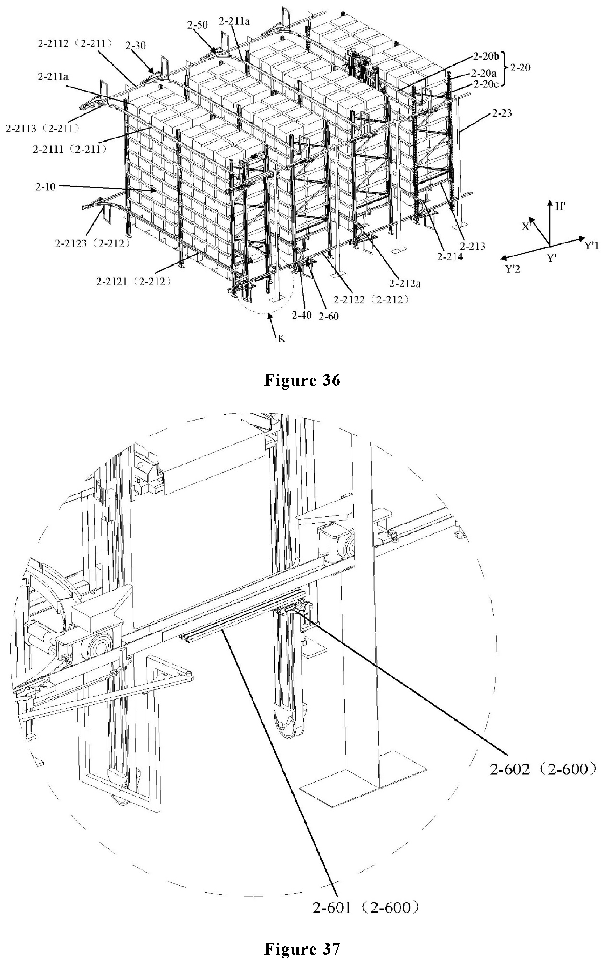

In some embodiments, as shown in Figures 36 and 37, the transport device 2-10 further includes a power supply mechanism 2-600 and a battery. The power supply mechanism 2-600 includes a power supply line 2-601 which for example includes a sliding contact line, a brush plate 2-602 and a brush block. The brush plate 2-602 is connected to the brush block. The power supply line 2-601 is provided below the first goods shelf rail 2-2111 and/or the first transfer rail 2-2112. The brush plate 2-602 is slidably connected to the power supply line 2-601. The brush block is electrically connected to the battery. The brush block is electrically connected to the battery of the transport device 2-10. When the transport device 2-10 travels on the first goods shelf rail 2-2111 and/or the first transfer rail 2-2112, the brush plate 2-602 contacts the power supply line 2-601, for charging the battery of the transport device 2-10.

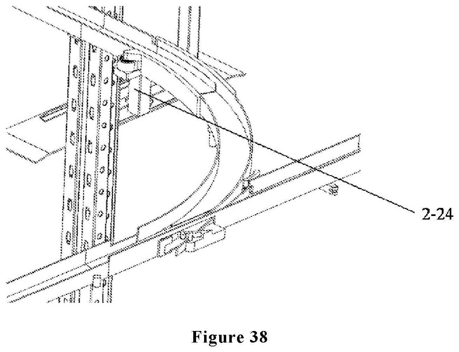

In another embodiment, as shown in Figure 38, the transport device 2-10 further includes a third driving member (not shown in the figures) and a fourth driving member 2-24. The third driving member is connected to the rotary shaft of respective one of the first connecting rails 2-2113, for driving the rotary shaft of the respective first connecting rails 2-2113 to rotate. The fourth driving member 2-24 is connected to the rotary shaft of respective one of the second connecting rails 2-2123, for driving the rotary shaft of the respective second connecting rails 2-2123 to rotate.

The respective third driving member drives the rotary shaft of the respective first connecting rail 2-2113 to rotate, so that the respective first connecting rail 2-2113 is disconnected from or closed with the first transfer rail 2-2112. The respective fourth driving member 2-24 drives the rotary shaft of the respective second connecting rail 2-2123 to rotate, so that the respective second connecting rail 2-2123 is disconnected from or closed with the second transfer rail 2-2122. Under the premise that the respective first connecting rail 2-2113 and the respective second connecting rail 2-2123 are driven by the driving members, the warehousing system does not need to be provided with the respective first linkage mechanism 2-30, the respective second linkage mechanism 2-40, the respective third linkage mechanism 2-50 and the respective fourth linkage mechanism 2-60, which can simplify the structure of the first track 2-211 and the second track 2-212.

A fourth aspect of the present application provides a transport device 2-10, as shown in Figures 30a and 31a. The transport device 2-10 is capable of traveling with track switching. The transport device 2-10 includes a control component, a column assembly 2-100, and at least one set of lifting mechanism 2-400, at least one set of driving mechanism and at least one set of goods pick-up mechanism 2-500 provided at the column assembly 2-100. The lifting mechanism 2-400 is connected to the goods pick-up mechanism 2-500 and drives the goods pick-up mechanism 2-500 to move up and down along the column assembly 2-100. The goods pick-up mechanism 2-500 is configured for transporting goods at different heights on the goods shelves 2-20. The column assembly 2-100 includes a first column 2-101 and a second column 2-102 extending along the height direction H' of the goods shelves 2-20 and spaced apart in a direction perpendicular to the height direction H'. The driving mechanism includes a first roller 2-202 rotatably connected to the first column 2-101, a second roller 2-203 rotatably connected to the second column 2-102, and a telescopic assembly electrically connected to the control component. The first roller 2-202 and the second roller 2-203 are configured for traveling along tracks. At least one of the first roller 2-202 and the second roller 2-203 is connected to a first drive motor 2-201, so as to drive the first roller 2-202 and the second roller 2-203 to roll and drive the column assembly 2-100 to go straight or turn. The telescopic assembly is configured for changing the track connection state.

In the transport device 2-10 of this embodiment, since the first roller 2-202 and the second roller 2-203 are rotatably connected to the column assembly 2-100, they can adapt to traveling on tracks; moreover, the telescopic member in the transport device 2-10 can be configured to change the connection state of the tracks, thus further expanding the application range of the transport device 2-10. It can be applied not only to annular tracks or U-shaped tracks, but also to tracks of which the state can be switched, thereby enabling shuttling between various aisles 2-22.

The above descriptions are merely preferred embodiments of the present invention and are not intended to limit the present invention. Any modifications, equivalent substitutions, improvements, etc., made within the spirit and principle of the present invention shall be included in the protection scope of the present invention.

### Numbered Clauses

By way of non-limiting example, some aspects of the disclosure are set out in the following numbered clauses.

Numbered Clause 1. A warehousing system, comprising:
a plurality of goods shelves (1-20) spaced apart along a first direction, wherein an aisle (1-22) being formed between adjacent goods shelves (1-20), and the first direction being perpendicular to a height direction of the goods shelves (1-20);
a track assembly (1-21) at least comprising a first track (1-211) and a second track (1-212), the first track (1-211) and the second track (1-212) being spaced apart in the height direction of the goods shelves (1-20) and arranged on an outer side of at least one goods shelf of the goods shelves (1-20);
the first track (1-211) comprising a first longitudinal track (1-2112) provided between adjacent goods shelves (1-20) and a first transverse track (1-2111) provided on an outer side of the at least one goods shelf (1-20) in a direction perpendicular to the first direction, the second track (1-212) comprising a second longitudinal track (1-2122) provided between adjacent goods shelves (1-20) and a second transverse track (1-2121) provided on the outer side of the at least one goods shelf (1-20) in a direction perpendicular to the first direction, the first transverse track (1-2111) and the second transverse track (1-2121) being configured for switching the aisle (1-22);
a transport device (1-10) comprising a column assembly (1-100), as well as a lifting mechanism (1-400), a first driving mechanism (1-200), a second driving mechanism (1-300) and a goods pick-up mechanism (1-500) provided at the column assembly (1-100), the lifting mechanism (1-400) being connected to the goods pick-up mechanism (1-500) and driving the goods pick-up mechanism (1-500) to move up and down along the column assembly (1-100), the goods pick-up mechanism (1-500) being configured for transporting goods at different heights on the goods shelves (1-20);
wherein the first driving mechanism (1-200) and the second driving mechanism (1-300) are configured for driving the transport device (1-10) to travel along the track assembly (1-21) and traverse through two adjacent aisles (1-22), to enable pick-up and placement of goods on adjacent goods shelves (1-20).

Numbered Clause 2. The warehousing system according to Numbered Clause 1, wherein the column assembly (1-100) comprises a first column (1-101) and a second column (1-102) extending along the height direction of the goods shelves (1-20) and spaced apart in a direction perpendicular to the height direction;
the first longitudinal track (1-2112) and the second longitudinal track (1-2122) are straight tracks, and the first transverse track (1-2111) and the second transverse track (1-2121) are curved tracks;
the first driving mechanism (1-200) comprises a first roller (1-202) rotatably connected to the first column (1-101) and a second roller (1-203) rotatably connected to the second column (1-102), the first roller (1-202) and the second roller (1-203) traveling on the first track (1-211), at least one of the first roller (1-202) and the second roller (1-203) being connected to a first drive motor (1-201), so as to drive the first roller (1-202) and the second roller (1-203) to roll along the first track (1-211) and drive the column assembly (1-100) to go straight or turn;
the second driving mechanism (1-300) comprises a third roller (1-302) rotatably connected to the first column (1-101) and a fourth roller (1-303) rotatably connected to the second column (1-102), the third roller (1-302) and the fourth roller (1-303) traveling on the second track (1-212), at least one of the third roller (1-302) and the fourth roller (1-303) being connected to a second drive motor (1-301), so as to drive the third roller (1-302) and the fourth roller (1-303) to roll along the second track (1-212) and drive the column assembly (1-100) to go straight or turn.

Numbered Clause 3. The warehousing system according to Numbered Clause 2, wherein the first driving mechanism (1-200) comprises a first crossbeam (1-204), as well as a first bracket (1-205) and a second bracket (1-206) rotatably connected to two ends of the first crossbeam (1-204), the first crossbeam (1-204) being arranged perpendicular to the first column (1-101) and the second column (1-102), the two ends of the first crossbeam (1-204) being fixedly connected to the first column (1-101) and the second column (1-102) respectively, a first rotating shaft (1-220) of each of the first bracket (1-205) and the second bracket (1-206) being parallel to the height direction of the goods shelves (1-20), the first roller (1-202) being rotatably connected to the first bracket (1-205), the second roller (1-203) being rotatably connected to the second bracket (1-206), a second rotating shaft (1-230) of each of the first roller (1-202) and the second roller (1-203) being perpendicular to the first rotating shaft (1-220), so that the first roller (1-202) is rotatably connected to the first column (1-101) and the second roller (1-203) is rotatably connected to the second column (1-102);
the second driving mechanism (1-300) comprises a second crossbeam (1-304), as well as a third bracket (1-305) and a fourth bracket (1-306) rotatably connected to two ends of the second crossbeam (1-304), the second crossbeam (1-304) being arranged perpendicular to the first column (1-101) and the second column (1-102), the two ends of the second crossbeam (1-304) being fixedly connected to the first column (1-101) and the second column (1-102) respectively, a third rotating shaft (1-309) of each of the third bracket (1-305) and the fourth bracket (1-306) being parallel to the height direction of the goods shelves (1-20), the third roller (1-302) being rotatably connected to the third bracket (1-305), the fourth roller (1-303) being rotatably connected to the fourth bracket (1-306), a fourth rotating shaft (1-310) of each of the third roller (1-302) and the fourth roller (1-303) being perpendicular to the third rotating shaft (1-309), so that the third roller (1-302) is rotatably connected to the first column (1-101) and the fourth roller (1-303) is rotatably connected to the second column (1-102).

Numbered Clause 4. The warehousing system according to Numbered Clause 3, wherein the first driving mechanism (1-200) further comprises at least one first guide member provided on at least one side of the first roller (1-202), and/or at least one second guide member provided on at least one side of the second roller (1-203), the first guide member and/or the second guide member being configured for constraining a traveling direction of the first roller (1-202) and the second roller (1-203) to be parallel to a side wall of the first track (1-211); the second driving mechanism (1-300) further comprises at least one third guide member provided on at least one side of the third roller (1-302), and/or at least one fourth guide member provided on at least one side of the fourth roller (1-303), the third guide member and/or the fourth guide member being configured for constraining a traveling direction of the third roller (1-302) and the fourth roller (1-303) to be parallel to a side wall of the second track (1-212).

Numbered Clause 5. The warehousing system according to Numbered Clause 4, wherein the at least one first guide member is at least one first guide wheel (1-207) provided on at least one side of the first roller (1-202) in a traveling direction of the transport device, an outer peripheral wall of the first guide wheel (1-207) abutting against inner walls of the first track (1-211) on both sides of the first track (1-211), the first guide wheel (1-207) being connected to the first bracket (1-205) via a first rotary shaft (1-207a) parallel to the height direction of the goods shelves (1-20), and the first guide wheel (1-207) being rotatably connected to the first rotary shaft (1-207a);
the at least one second guide member is at least one second guide wheel (1-208) provided on at least one side of the second roller (1-203) in the traveling direction, an outer peripheral wall of the second guide wheel (1-208) abutting against two side walls of the first track (1-211), the second guide wheel (1-208) being connected to the second bracket (1-206) via a second rotary shaft (1-208a) parallel to the height direction of the goods shelves (1-20), and the second guide wheel (1-208) being rotatably connected to the second rotary shaft (1-208a);
the at least one third guide member is at least one third guide wheel (1-307) provided on at least one side of the third roller (1-302) in the traveling direction, an outer peripheral wall of the third guide wheel (1-307) abutting against two side walls of the second track (1-212), the third guide wheel (1-307) being connected to the third bracket (1-305) via a third rotary shaft (1-307a) parallel to the height direction of the goods shelves (1-20), and the third guide wheel (1-307) being rotatably connected to the third rotary shaft (1-307a);
the at least one fourth guide member is at least one fourth guide wheel (1-308) provided on at least one side of the fourth roller (1-303) in the traveling direction, an outer peripheral wall of the fourth guide wheel (1-308) abutting against the two side walls of the second track (1-212), the fourth guide wheel (1-308) being connected to the fourth bracket (1-306) via a fourth rotary shaft (1-308a) parallel to the height direction of the shelves (1-20), and the fourth guide wheel (1-308) being rotatably connected to the fourth rotary shaft (1-308a).

Numbered Clause 6. The warehousing system according to Numbered Clause 1, wherein the first track (1-211) is located at an upper part of the at least one goods shelf (1-20), the second track (1-212) is located at a lower part of the at least one goods shelf (1-20), and the first track (1-211) and the second track (1-212) are disposed facing each other.

Numbered Clause 7. The warehousing system according to Numbered Clause 6, wherein the first driving mechanism (1-200) further comprises a first floating member (1-209) and a second floating member (1-210), one end of the first floating member (1-209) being movably connected to the first crossbeam (1-204) in the height direction and the other end of the first floating member (1-209) being rotatably connected to the first bracket (1-205), the first floating member (1-209) having a first accommodating groove (1-2091) provided in the height direction, a top end of the first accommodating groove (1-2091) being closed and a bottom end of the first accommodating groove (1-2091) being provided with a first opening, a first elastic member (1-2092) being provided in the first accommodating groove (1-2091), a free end of a first side wall (1-2041) being provided with a first limiting table (1-2041b), a bottom end of the first elastic member (1-2092) being connected to the first limiting table (1-2041b) fixed to the first column (1-101) via the first opening, so that the first elastic member (1-2092) applies an elastic force to the first floating member (1-209) to press against the first track (1-211);
one end of the second floating member (1-210) being movably connected to the first crossbeam (1-204) in the height direction and the other end of the second floating member (1-210) being rotatably connected to the second bracket (1-206), the second floating member (1-210) having a second accommodating groove (1-2101) provided in the height direction, a top end of the second accommodating groove (1-2101) being closed and a bottom end of the second accommodating groove (1-2101) being provided with a second opening, a second elastic member (1-2102) being provided in the second accommodating groove (1-2101), a free end of a second side wall (1-2042) being provided with a second limiting table (1-2042b), a bottom end of the second elastic member (1-2102) being connected to the second limiting table (1-2042b) via the second opening, so that the second elastic member (1-2102) applies an elastic force to the second floating member (1-210) to press against the first track (1-211).

Numbered Clause 8. The warehousing system according to Numbered Clause 7, wherein the first crossbeam (1-204) comprises a first bottom wall (1-2043) perpendicular to the height direction, as well as a first side wall (1-2041) and a second side wall (1-2042) connected at a preset angle to two ends of the first bottom wall (1-2043) in a direction perpendicular to the height direction, one of the first side wall (1-2041) and the first floating member (1-209) being provided with a first slide rail (1-2041a) and the other of the first side wall (1-2041) and the first floating member (1-209) being provided with a first slide groove (1-2093) cooperating with the first slide rail (1-2041a), an extending direction of the first slide rail (1-2041a) being parallel to the height direction, one of the second side wall (1-2042) and the second floating member (1-210) being provided with a second slide rail (1-2042a) and the other of the second side wall (1-2042) and the second floating member (1-210) being provided with a second slide groove (1-2103) cooperating with the second slide rail (1-2042a), an extending direction of the second slide rail (1-2042a) being parallel to the height direction, the first limiting table (1-2041b) being configured to limit the first floating member (1-209), the second limiting table (1-2042b) being configured to limit the second floating member (1-210);
the second crossbeam (1-304) comprises a second bottom wall (1-3043) perpendicular to the height direction, as well as a third side wall (1-3041) and a fourth side wall (1-3042) connected at a preset angle to two ends of the second bottom wall (1-3043) in a direction perpendicular to the height direction, an end of the third side wall (1-3041) being connected with a first segment (1-3041a), an end of the fourth side wall (1-3042) being connected with a second segment (1-3042a), both the first segment (1-3041a) and the second segment (1-3042a) being parallel to the second bottom wall (1-3043) and respectively located on extension lines of the second bottom wall (1-3043) on sides where the first segment (1-3041a) and the second segment (1-3042a) are located respectively, the third bracket (1-305) being rotatably connected to the first segment (1-3041a), the fourth bracket (1-306) being rotatably connected to the second segment (1-3042a).

Numbered Clause 9. The warehousing system according to any one of Numbered Clauses 1-8, wherein
each of the goods shelves (1-20) comprises a plurality of third columns (1-20a) spaced apart along the first direction and a second direction, the third columns (1-20a) being connected to each other by third crossbeams (1-20b), the first longitudinal track (1-2112) and the second longitudinal track (1-2122) being fixed to the third crossbeams (1-20b) of a same goods shelf (1-20) for the transport device (1-10) to travel and to pick-up and place goods on goods shelves (1-20) on both sides of the aisle (1-22), the transport device (1-10) being provided on an outer side of the first track (1-211) and the second track (1-212), the second direction being perpendicular to the first direction and the height direction.

Numbered Clause 10. The warehousing system according to any one of Numbered Clauses 1-8, wherein each of the goods shelves (1-20) comprises a plurality of third columns (1-20a) spaced apart along the first direction and a second direction, the third columns (1-20a) being connected to each other by third crossbeams (1-20b), the first longitudinal track (1-2112) and the second longitudinal track (1-2122) being fixed to the third beams (1-20b) on sides that are close to each other, of two non-adjacent goods shelves (1-20) for the transport device (1-10) to travel and to pick-up and place goods on goods shelves (1-20) on both sides of the aisle (1-22), the transport device (1-10) being provided on an inner side of the first track (1-211) and the second track (1-212), the second direction being perpendicular to the first direction and the height direction.

Numbered Clause 11. The warehousing system according to any one of Numbered Clauses 1-8, wherein the first track (1-211) and the second track (1-212) each are an annular track or U-shaped track, and an opening direction of the U-shaped track is parallel to an extending direction of the aisle (1-22).

Numbered Clause 12. The warehousing system according to any one of Numbered Clauses 1-8, wherein the lifting mechanism (1-400) comprises at least one third drive motor and a reduction motor (1-402), the third drive motor being fixed at top ends of the first column (1-101) and the second column (1-102), the third drive motor being connected to the reduction motor (1-402);
a first driven wheel (1-403) being provided at a top end of the first column (1-101), a second driven wheel (1-404) being provided at a bottom end of the first column (1-101), the first driven wheel (1-403) and the second driven wheel (1-404) being synchronous wheels or sprockets, a first synchronous belt (1-405) or a first chain being sleeved on the first driven wheel (1-403) and the second driven wheel (1-404), the goods pick-up mechanism (1-500) being fixedly connected to the first synchronous belt (1-405) or the first chain;
a third driven wheel (1-406) being provided at a top end of the second column (1-102), a fourth driven wheel (1-407) being provided at a bottom end of the second column (1-102), the third driven wheel (1-406) and the fourth driven wheel (1-407) being synchronous wheels or sprockets, a second synchronous belt (1-408) or a second chain being sleeved on the third driven wheel (1-406) and the fourth driven wheel (1-407), the goods pick-up mechanism (1-500) being fixedly connected to the second synchronous belt (1-408) or the second chain;
the first driven wheel (1-403) and the third driven wheel (1-406) each being connected to an output shaft of the reduction motor (1-402); or the first driven wheel (1-403) being connected to the output shaft of the reduction motor (1-402) and the third driven wheel (1-406) being connected to the first driven wheel (1-403) via a coupling (1-409).

Numbered Clause 13. The warehousing system according to Numbered Clause 12, wherein the first column (1-101) and/or the second column (1-102) is provided with a third slide rail (1-103), and the goods pick-up mechanism (1-500) is provided with a slider (1-504) cooperating with the third slide rail (1-103), so that the goods pick-up mechanism (1-500) moves in a straight line.

Numbered Clause 14. The warehousing system according to any one of Numbered Clauses 1-8, wherein each of the goods shelves (1-20) is provided with a plurality of storage positions (1-213) along the height direction and an extending direction of the aisle (1-22), a depth of the goods shelf (1-20) being a single storage position (1-213) or double storage positions (1-213), a plurality of buffer positions (1-214) being provided below lowermost storage positions (1-213) of the storage positions (1-213), the buffer positions (1-214) being configured for temporarily storing goods.

Numbered Clause 15. The warehousing system according to any one of Numbered Clauses 2-8, wherein the transport device (1-10) further comprises a power supply mechanism (1-600) and a battery, the power supply mechanism (1-600) comprising a power supply line (1-601), a brush plate (1-602) and a brush block, the brush plate (1-602) being connected to the brush block; the first transverse track (1-2111) comprising a first main body segment (1-2111a) and a first transition segment (1-2111b), the second transverse track (1-2121) comprising a second main body segment (1-2121a) and a second transition segment (1-2121b), the first main body segment (1-2111a) and the second main body segment (1-2121a) being straight segments, the first transition segment (1-2111b) and the second transition segment (1-2121b) being curved segments; the power supply line (1-601) being provided below the straight segments of the first track (1-211) and/or the second track (1-212), the brush plate (1-602) being slidably connected to the power supply line (1-601), the brush block being electrically connected to the battery.

Numbered Clause 16. A transport device for traveling on a curved track, wherein the transport device (1-10) comprises a column assembly (1-100), as well as at least one set of lifting mechanism (1-400), at least one set of driving mechanism and at least one set of goods pick-up mechanism (1-500) provided at the column assembly (1-100), the lifting mechanism (1-400) being connected to the goods pick-up mechanism (1-500) and driving the goods pick-up mechanism (1-500) to move up and down along the column assembly (1-100), the goods pick-up mechanism (1-500) being configured for transporting goods at different heights on goods shelves (1-20);
the column assembly (1-100) comprises a first column (1-101) and a second column (1-102) extending along a height direction of the goods shelves (1-20) and spaced apart in a direction perpendicular to the height direction;
the driving mechanism comprises a first roller (1-202) rotatably connected to the first column (1-101) and a second roller (1-203) rotatably connected to the second column (1-102), the first roller (1-202) and the second roller (1-203) being configured for traveling on a curved track, at least one of the first roller (1-202) and the second roller (1-203) being connected to a first drive motor (1-201), so as to drive the first roller (1-202) and the second roller (1-203) to roll along the curved track and drive the column assembly (1-100) to go straight or turn.

Numbered Clause 17. A warehousing system, comprising:
a plurality of goods shelves (2-20) spaced apart, wherein an aisle (2-22) being formed between adjacent goods shelves (2-20);
a first track (2-211) and a second track (2-212), the first track (2-211) and the second track (2-212) being spaced apart in a height direction of the goods shelves (2-20) and arranged on an outer side of the goods shelves (2-20);
wherein the first track (2-211) comprises a plurality of first goods shelf rails (2-2111) arranged along a first direction and located on at least one side of same one of the goods shelves (2-20) respectively, at least one first transfer rail (2-2112) arranged along a second direction and located on at least one side of the goods shelves (2-20), and first connecting rails (2-2113) provided at at least one end of each of the first goods shelf rails (2-2111) or at at least one end of each of the at least one first transfer rail (2-2112) respectively, the first connecting rails (2-2113) being movably connected to the first goods shelf rails (2-2111) or the first connecting rails (2-2113) being movably connected to the first transfer rail (2-2112), so that free ends of the first connecting rails (2-2113) can be connected to or disconnected from the first transfer rail (2-2112) or the first goods shelf rails (2-2111);
the second track (2-212) comprises a plurality of second goods shelf rails (2-2121) arranged along the first direction and located on at least one side of same one of goods shelves (2-20), at least one second transfer rail (2-2122) arranged along the second direction and located on at least one side of the goods shelves (2-20), and second connecting rails (2-2123) provided at at least one end of each of the second goods shelf rails (2-2121) or at at least one end of each of the at least one second transfer rail (2-2122) respectively, the second connecting rails (2-2123) being movably connected to the second goods shelf rails (2-2121) or the second connecting rails (2-2123) being movably connected to the second transfer rail (2-2122), so that free ends of the second connecting rails (2-2123) can be connected to or disconnected from the second transfer rail (2-2122) or the second goods shelf rails (2-2121);
wherein the first direction is an extending direction of the aisle (2-22), and the second direction intersects the first direction.

Numbered Clause 18. The warehousing system according to Numbered Clause 17, wherein the first goods shelf rails (2-2111), the first transfer rail (2-2112), the second goods shelf rails (2-2121) and the second transfer rail (2-2122) are straight tracks, and the first connecting rails (2-2113) and the second connecting rails (2-2123) are curved rails;
the first transfer rail (2-2112) comprises a first bearing surface (2-2112a) as well as a first side wall (2-2112b) and a second side wall (2-2112c) provided on both sides of the first bearing surface (2-2112a), the first side wall (2-2112b) being disposed close to the first connecting rails (2-2113), the first side wall (2-2112b) having first openings, each of the first goods shelf rails (2-2111) comprising a first swinging member rotatably connected to the first side wall (2-2112b), the first swinging member being configured to open respective one of the first openings by rotation of respective one of the first connecting rails (2-2113), a first reset member being provided between the first swinging member and the first side wall (2-2112b) for automatically closing the respective one of the first openings;
the second transfer rail (2-2122) comprises a second bearing surface (2-2122a) as well as a third side wall (2-2122b) and a fourth side wall (2-2122c) provided on both sides of the second bearing surface (2-2122a), the third side wall (2-2122b) being disposed close to the second connecting rails (2-2123), the third side wall (2-2122b) having second openings (2-2122b1), the second transfer rail (2-2122) comprising second swinging members (2-2122b2) rotatably connected to the third side wall (2-2122b), each of the second swinging members (2-2122b2) being configured to open respective one of the second openings (2-2122b1) by the rotation of respective one of the second connecting rails (2-2123), a second reset member being provided between the second swinging member (2-2122b2) and the third side wall (2-2122b) for automatically closing the respective one of the second openings (2-2122b1).

Numbered Clause 19. The warehousing system according to Numbered Clause 18, wherein the warehousing system further comprises first linkage mechanisms (2-30), second linkage mechanisms (2-40) and a transport device (2-10);
one end of each of the first linkage mechanisms (2-30) is connected to the first transfer rail (2-2112), and the other end of the first linkage mechanism (2-30) is connected to respective one of the first connecting rails (2-2113); one end of each of the second linkage mechanisms (2-40) is connected to the second transfer rail (2-2122), and the other end of the second linkage mechanisms (2-40) is connected to respective one of the second connecting rails (2-2123);
the transport device (2-10) travels along the first track (2-211) and the second track (2-212), and the transport device (2-10) comprises a control component, a column assembly (2-100), as well as a first driving mechanism (2-200) and a second driving mechanism (2-300) provided at the column assembly (2-100), the column assembly (2-100) comprising a first column (2-101) and a second column (2-102) extending along the height direction of the goods shelves (2-20) and spaced apart in a direction perpendicular to the height direction;
the first driving mechanism (2-200) comprises a first roller (2-202) rotatably connected to the first column (2-101), a second roller (2-203) rotatably connected to the second column (2-102), and a first telescopic assembly (2-240) electrically connected to the control component, at least one of the first roller (2-202) and the second roller (2-203) being connected to a first drive motor (2-201);
the second driving mechanism (2-300) comprises a third roller (2-302) rotatably connected to the first column (2-101), a fourth roller (2-303) rotatably connected to the second column (2-102), and a second telescopic assembly (2-311) electrically connected to the control component, at least one of the third roller (2-302) and the fourth roller (2-303) being connected to a second drive motor (2-301);
wherein when the transport device (2-10) switches track from the first direction to the second direction, the transport device (2-10) can apply a centrifugal force to respective one of the first connecting rails (2-2113) and respective one of the second connecting rails (2-2123), enabling the respective first connecting rail (2-2113) to rotate relative to the first transfer rail (2-2112) and the respective second connecting rail (2-2123) to rotate relative to the second transfer rail (2-2122), thereby connecting the respective first connecting rail (2-2113) to the first transfer rail (2-2112) and connecting the respective second connecting rail (2-2123) to the second transfer rail (2-2122); when the transport device (2-10) switches track from the second direction to the first direction, under drive of the control component, the first telescopic assembly (2-240) acts on respective one of the first linkage mechanisms (2-30) to connect respective one of the first connecting rails (2-2113) to respective one of the first goods shelf rails (2-2111), and the second telescopic assembly (2-311) acts on respective one of the second linkage mechanisms (2-40) to connect respective one of the second connecting rails (2-2123) to respective one of the second goods shelf rails (2-2121).

Numbered Clause 20. The warehousing system according to Numbered Clause 19, wherein each of the first linkage mechanisms (2-30) comprises a first sub-link (2-31) and a second sub-link (2-32), the first sub-link (2-31) being rotatably connected to the first transfer rail (2-2112), the first sub-link (2-31) being rotatably connected to the second sub-link (2-32), the second sub-link (2-32) being rotatably connected to respective one of the first connecting rail (2-2113), a third reset member (2-33) being provided between the first sub-link (2-31) and the second sub-link (2-32), so that after the transport device (2-10) successfully switches track, the respective first connecting rail (2-2113) automatically resets under action of the third reset member (2-33);
each of the second linkage mechanisms (2-40) comprises a third sub-link (2-41) and a fourth sub-link (2-42), the third sub-link (2-41) being rotatably connected to the second transfer rail (2-2122), the third sub-link (2-41) being rotatably connected to the fourth sub-link (2-42), the fourth sub-link (2-42) being rotatably connected to respective one of the second connecting rails (2-2123), a fourth reset member (2-43) being provided between the third sub-link (2-41) and the fourth sub-link (2-42), so that after the transport device (2-10) successfully switches track, the respective second connecting rail (2-2123) automatically resets under action of the fourth reset member (2-43).

Numbered Clause 21. The warehousing system according to Numbered Clause 20, wherein the first telescopic assembly (2-240) comprises a first driving member (2-2401) and a first telescopic member (2-2402) connected to the first driving member (2-2401), a telescopic direction of the first telescopic member (2-2402) being parallel to a width direction of the first track (2-211); the second telescopic assembly (2-311) comprises a second driving member (2-3111) and a second telescopic member (2-3112) connected to the second driving member (2-3111), a telescopic direction of the second telescopic member (2-3112) being parallel to a width direction of the second track (2-212);
an end of the first sub-link (2-31) close to the first transfer rail (2-2112) has a first inclined surface (2-31a); when the transport device (2-10) moves in a positive direction (Y'1) of the second direction and needs to switch track, the control component controls the first driving member (2-2401) to drive the first telescopic member (2-2402) to cooperate with the first inclined surface (2-31a) and enable the first sub-link (2-31) to rotate clockwise, thereby connecting the respective first connecting rail (2-2113) to the first transfer rail (2-2112);
an end of the third sub-link (2-41) close to the second transfer rail (2-2122) has a second inclined surface (2-41a); when the transport device (2-10) moves in the positive direction (Y'1) of the second direction and needs to switch track, the control component controls the second driving member (2-3111) to drive the second telescopic member (2-3112) to cooperate with the second inclined surface (2-41a) and enable the third sub-link (2-41) to rotate clockwise, thereby connecting the respective second connecting rail (2-2123) to the second transfer rail (2-2122).

Numbered Clause 22. The warehousing system according to Numbered Clause 21, wherein the first driving mechanism (2-200) comprises a first crossbeam (2-204), as well as a first bracket (2-205) and a second bracket (2-206) rotatably connected to two ends of the first crossbeam (2-204); there are two first telescopic assemblies (2-240) which are respectively mounted at the first bracket (2-205) and the second bracket (2-206); there are two second telescopic assemblies (2-311) which are mounted at the third bracket (2-305) and the fourth bracket (2-306); the first crossbeam (2-204) being arranged perpendicular to the first column (2-101) and the second column (2-102), the two ends of the first crossbeam (2-204) being fixedly connected to the first column (2-101) and the second column (2-102) respectively, a first rotating shaft (2-220) of each of the first bracket (2-205) and the second bracket (2-206) being parallel to the height direction of the goods shelves (2-20), the first roller (2-202) being rotatably connected to the first bracket (2-205), the second roller (2-203) being rotatably connected to the second bracket (2-206), a second rotating shaft (2-230) of each of the first roller (2-202) and the second roller (2-203) being perpendicular to the first rotating shaft (2-220), so that the first roller (2-202) is rotatably connected to the first column (2-101) and the second roller (2-203) is rotatably connected to the second column (2-102);
the second driving mechanism (2-300) comprises a second crossbeam (2-304), as well as a third bracket (2-305) and a fourth bracket (2-306) rotatably connected to two ends of the second crossbeam (2-304), the second crossbeam (2-304) being arranged perpendicular to the first column (2-101) and the second column (2-102), the two ends of the second crossbeam (2-304) being fixedly connected to the first column (2-101) and the second column (2-102) respectively, a third rotating shaft (2-309) of each of the third bracket (2-305) and the fourth bracket (2-306) being parallel to the height direction of the goods shelves (2-20), the third roller (2-302) being rotatably connected to the third bracket (2-305), the fourth roller (2-303) being rotatably connected to the fourth bracket (2-306), a fourth rotating shaft (2-310) of each of the third roller (2-302) and the fourth roller (2-303) being perpendicular to the third rotating shaft (2-309), so that the third roller (2-302) is rotatably connected to the first column (2-101) and the fourth roller (2-303) is rotatably connected to the second column (2-102).

Numbered Clause 23. The warehousing system according to Numbered Clause 22, wherein the first driving mechanism (2-200) comprises a first guide member and/or a second guide member, and the second driving mechanism (2-300) comprises a third guide member and/or a fourth guide member;
the first guide member and/or the second guide member contacts an inner surface of a first outer side wall (2-211a) of the first track (2-211), to apply a centrifugal force to respective one of the first connecting rails (2-2113) when the transport device (2-10) travels to the respective first connecting rail (2-2113), the first outer side wall (2-211a) being a side wall of the first track (2-211) away from a center of respective one of the goods shelves (2-20);
the third guide member and/or the fourth guide member contacts an inner surface of a second outer side wall (2-212a) of the second track (2-212), to apply a centrifugal force to the second connecting rails (2-2123) when the transport device (2-10) travels to the respective second connecting rail (2-2123), the second outer side wall (2-212a) being a side wall of the second track (2-212) away from a center of respective one of the goods shelves (2-20).

Numbered Clause 24. The warehousing system according to Numbered Clause 23, wherein the first guide member is first guide wheels (2-207) provided on both sides of the first roller (2-202), outer peripheral walls of the first guide wheels (2-207) abutting against inner walls of the first track (2-211) on both sides of the first track (2-211), the first guide wheels (2-207) each being connected to the first bracket (2-205) via a first rotary shaft (2-207a) parallel to the height direction of the goods shelves (2-20), and the first guide wheels (2-207) each being rotatably connected to the first rotary shaft (2-207a);
the second guide member is second guide wheels (2-208) provided on both sides of the second roller (2-203), outer peripheral walls of the second guide wheels (2-208) butting against the inner walls of the first track (2-211) on both sides of the first track (2-211), the second guide wheels (2-208) each being connected to the second bracket (2-206) via a second rotary shaft (2-208a) parallel to the height direction of the goods shelves (2-20), and the second guide wheels (2-208) each being rotatably connected to the second rotary shaft (2-208a);
the third guide member is third guide wheels (2-307) provided on both sides of the third roller (2-302), outer peripheral walls of the third guide wheels (2-307) abutting against inner walls of the second track (2-212) on both sides of the second track (2-212), the third guide wheels (2-307) each being connected to the third bracket (2-305) via a third rotary shaft (2-307a) parallel to the height direction of the goods shelves (2-20), and the third guide wheels (2-307) each being rotatably connected to the third rotary shaft (2-307a);
the fourth guide member is fourth guide wheels (2-308) provided on both sides of the fourth roller (2-303), outer peripheral walls of the fourth guide wheels (2-308) abutting against the inner walls of the second track (2-212) on both sides of the second track (2-212), the fourth guide wheels (2-308) each being connected to the fourth bracket (2-306) via a fourth rotary shaft (2-308a) parallel to the height direction of the goods shelves (2-20), and the fourth guide wheels (2-308) each being rotatably connected to the fourth rotary shaft (2-308a).

Numbered Clause 25. The warehousing system according to any one of Numbered Clauses 20-24, wherein the warehousing system further comprises third linkage mechanisms (2-50) rotatably connected to the first transfer rail (2-2112), and fourth linkage mechanisms (2-60) rotatably connected to the second transfer rail (2-2122), each of the third linkage mechanism (2-50) being located between the first sub-link and the second sub-link (2-32), each of the fourth linkage mechanism (2-60) being located between the third sub-link (2-41) and the fourth sub-link (2-42);
each of the third linkage mechanisms (2-50) comprises a fifth sub-link (2-51), a sixth sub-link (2-52) and a seventh sub-link (2-53) rotatably connected respectively, the fifth sub-link (2-51) being rotatably connected to the second side wall (2-2112c), the seventh sub-link (2-53) being rotatably connected to the second side wall (2-2112c), a connection point of the fifth sub-link (2-51) being disposed close to a connection point of the first sub-link (2-31), the fifth sub-link (2-51) being provided with a first recessed portion, the respective first connecting rail (2-2113) being provided with a first protruding portion cooperating with the first recessed portion, the second side wall (2-2112c) being provided with first clearance portions, the first protruding portion cooperating with or releasing cooperation with the first recessed portion via respective one of the first clearance portions, so as to connect the respective first connecting rail (2-2113) with the first transfer rail (2-2112) or disconnect the respective first connecting rail (2-2113) from the first transfer rail (2-2112);
each of the fourth linkage mechanism (2-60) comprises an eighth sub-link (2-61), a ninth sub-link (2-62) and a tenth sub-link (2-63) rotatably connected respectively, a connection point of the eighth sub-link (2-61) being disposed close to a connection point of the third sub-link (2-41), the eighth sub-link (2-61) being rotatably connected to the fourth side wall (2-2122c), the tenth sub-link (2-63) being rotatably connected to the fourth side wall (2-2122c), the eighth sub-link (2-61) being provided with a second recessed portion (2-61a), the respective second connecting rail (2-2123) being provided with a second protruding portion (2-2123a) cooperating with the second recessed portion (2-61a), the fourth side wall (2-2122c) being provided with second clearance portions (2-2122c1), the second protruding portion (2-2123a) cooperating with or releasing cooperation with the second recessed portion (2-61a) through respective one of the second clearance portions (2-2122c1), so as to connect the respective second connecting rail (2-2123) with the second transfer rail (2-2122) or disconnect the respective second connecting rail (2-2123) from the second transfer rail (2-2122).

Numbered Clause 26. The warehousing system according to Numbered Clause 25, wherein the third linkage mechanism (2-50) further comprises a first adapter (2-54), one end of the first adapter (2-54) being rotatably connected to the second side wall (2-2112c), the other end of the first adapter (2-54) being rotatably connected to the fifth sub-link (2-51); the fourth linkage mechanism (2-60) further comprises a second adapter (2-64), one end of the second adapter (2-64) being rotatably connected to the fourth side wall (2-2122c), the other end of the second adapter (2-64) being rotatably connected to the eighth sub-link (2-61).

Numbered Clause 27. The warehousing system according to Numbered Clause 26, wherein first mounting portions are provided on a side of the second side wall (2-2112c) facing away from the first side wall (2-2112b), a middle part of the fifth sub-link (2-51) being rotatably connected to one end of the sixth sub-link (2-52), an end of the fifth sub-link (2-51) provided with the first recessed portion being rotatably connected to respective one of the first mounting portions; second mounting portions (2-2122c2) are provided on a side of the fourth side wall (2-2122c) facing away from the third side wall (2-2122b), a middle part of the eighth sub-link (2-61) being rotatably connected to one end of the ninth sub-link (2-62), an end of the eighth sub-link (2-61) provided with the second recessed portion (2-61a) being rotatably connected to respective one of the second mounting portions (2-2122c2).

Numbered Clause 28. The warehousing system according to Numbered Clause 27, wherein the fifth sub-link (2-51) is provided with a third inclined surface and a fourth inclined surface connected to each other arranged sequentially along a direction away from the connection point of the fifth sub-link (2-51); after the respective first connecting rail (2-2113) is connected to the first transfer rail (2-2112), the fourth inclined surface abuts against a free end of the respective first connecting rail (2-2113); the seventh sub-link is provided with a fifth inclined surface, the fifth inclined surface being disposed close to a connection point of the seventh sub-link (2-53) with the second side wall (2-2112c); the eighth sub-link (2-61) is provided with a sixth inclined surface (2-61b) and a seventh inclined surface (2-61c) connected to each other arranged sequentially along a direction away from the connection point of the eighth sub-link (2-61); after the respective second connecting rail (2-2123) is connected to the second transfer rail (2-2122), the seventh inclined surface (2-61c) abuts against a free end of the respective second connecting rail (2-2123); the tenth sub-link (2-63) is provided with an eighth inclined surface (2-63a), the eighth inclined surface (2-63a) being disposed close to a connection point of the tenth sub-link (2-63) with the fourth side wall (2-2122c);
when the transport device (2-10) enters the respective first connecting rail (2-2113) from the first transfer rail (2-2112) and enters the respective second connecting rail (2-2123) from the second transfer rail (2-2122), under action of respective one of the first linkage mechanisms (2-30) and respective one of the second linkage mechanisms (2-40), the respective first connecting rail (2-2113) connects to the first transfer rail (2-2112) and the first protruding portion cooperates with the first recessed portion, and the respective second connecting rail (2-2123) connects to the second transfer rail (2-2122) and the second protruding portion (2-2123a) cooperates with the second recessed portion (2-61a); when the transport device (2-10) goes straight along the first transfer rail (2-2112) and the second transfer rail (2-2122) and moves in the positive direction (Y'1) of the second direction, the control component controls the first telescopic member (2-2402) located at a front end in a moving direction to extend and cooperate with the third inclined surface, so as to enable the fifth sub-link (2-51) to rotate counterclockwise, thereby releasing cooperation of the first protruding portion with the first recessed portion, and the control component controls the second telescopic member (2-3112) located at the front end in the moving direction to extend and cooperate with the sixth inclined surface (2-61b), so as to enable the eighth sub-link (2-61) to rotate counterclockwise, thereby releasing cooperation of the second protruding portion (2-2123a) with the second recessed portion (2-61a); when the transport device (2-10) goes straight along the first transfer rail (2-2112) and the second transfer rail (2-2122) and moves in a negative direction (Y'2) of the second direction, the control component controls the first telescopic member (2-2402) located at the front end in the moving direction to extend and cooperate with the fifth inclined surface, so as to enable the seventh sub-link (2-53) to rotate counterclockwise, thereby releasing cooperation of the first recessed portion with the first protruding portion, and the control component controls the second telescopic member (2-3112) located at the front end in the moving direction to extend and cooperate with the eighth inclined surface (2-63a), so as to enable the tenth sub-link (2-63) to rotate counterclockwise, thereby releasing cooperation of the second protruding portion (2-2123a) with the second recessed portion (2-61a);
when the transport device (2-10) enters the first transfer rail (2-2112) from the respective first connecting rail (2-2113) and enters the second transfer rail (2-2122) from the respective second connecting rail (2-2123), under action of the first guide member and/or the second guide member and the third guide member and/or the fourth guide member, the respective first connecting rail (2-2113) connects to the first transfer rail (2-2112) and the first protruding portion cooperates with the first recessed portion, and the respective second connecting rail (2-2123) connects to the second transfer rail (2-2122) and the second protruding portion (2-2123a) cooperates with the second recessed portion (2-61a); the control component controls the first telescopic member (2-2402) located at a rear end in the moving direction to extend and cooperate with the fourth inclined surface and enables the fifth sub-link (2-51) to rotate counterclockwise, thereby releasing cooperation of the first protruding portion with the first recessed portion, and the control component controls the second telescopic member (2-3112) located at the rear end in the moving direction to extend and cooperate with the seventh inclined surface (2-61c) and enables the eighth sub-link (2-61) to rotate counterclockwise, thereby releasing cooperation of the second protruding portion (2-2123a) with the second recessed portion (2-61a).

Numbered Clause 29. The warehousing system according to Numbered Clause 28, wherein a height at which the first swinging member is located is lower than a height at which the first protruding portion is located; a height at which the second swinging member (2-2122b2) is located is lower than a height at which the second protruding portion (2-2123a) is located.

Numbered Clause 30. The warehousing system according to any one of Numbered Clauses 22-24, wherein the first driving mechanism (2-200) further comprises a first floating member (2-209) and a second floating member (2-210), one end of the first floating member (2-209) being slidably connected to the first crossbeam (2-204) in the height direction and the other end of the first floating member (2-209) being rotatably connected to the first bracket (2-205), the first floating member (2-209) having a first accommodating groove (2-2091) provided in the height direction, a top end of the first accommodating groove (2-2091) being closed and a bottom end of the first accommodating groove (2-2091) being provided with a first opening, a first elastic member (2-2092) being provided in the first accommodating groove (2-2091), a free end of the first side wall (2-2112b) being provided with a first limiting table (2-2041b), a bottom end of the first elastic member (2-2092) being connected to the first limiting table (2-2041b) fixed to the first column (2-101) via the first opening, so that the first elastic member (2-2092) applies an elastic force to the first floating member (2-209) to press against the first track (2-211);
one end of the second floating member (2-210) being slidably connected to the first crossbeam (2-204) in the height direction and the other end of the second floating member (2-210) being rotatably connected to the second bracket (2-206), the second floating member (2-210) having a second accommodating groove (22-101) provided in the height direction, a top end of the second accommodating groove (22-101) being closed and a bottom end of the second accommodating groove (22-101) being provided with a second opening (2-2122b1), a second elastic member (22-102) being provided in the second accommodating groove (22-101), a free end of the second side wall (2-2112c) being provided with a second limiting table (2-2042b), a bottom end of the second elastic member (22-102) being connected to the second limiting table (2-2042b) via the second opening (2-2122b1), so that the second elastic member (2-2102) applies an elastic force to the second floating member (2-210) to press against the first track (2-211).

Numbered Clause 31. The warehousing system according to Numbered Clause 30, wherein the first crossbeam (2-204) comprises a first transverse portion (2-2043) perpendicular to the height direction, as well as a first side portion (2-2041) and a second side portion (2-2042) connected at a preset angle to two ends of the first transverse portion (2-2043) in a direction perpendicular to the height direction, one of the first side portion (2-2041) and the first floating member (2-209) being provided with a first slide rail (2-2041a) and the other of the first side portion (2-2041) and the first floating member (2-209) being provided with a first slide groove (2-2093) cooperating with the first slide rail (2-2041a), an extending direction of the first slide rail (2-2041a) being parallel to the height direction; one of the second side portion (2-2042) and the second floating member (2-210) being provided with a second slide rail (2-2042a) and the other of the second side portion (2-2042) and the second floating member (2-210) being provided with a second slide groove (22-103) cooperating with the second slide rail (2-2042a), an extending direction of the second slide rail (2-2042a) being parallel to the height direction; the first limiting table (2-2041b) being configured to limit the first floating member (2-209), the second limiting table (2-2042b) being configured to limit the second floating member (2-210);
the second crossbeam (2-304) comprises a second transverse portion (2-3043) perpendicular to the height direction, as well as a third side portion (2-3041) and a fourth side portion (2-3042) connected at a preset angle to two ends of the second transverse portion (2-3043) in a direction perpendicular to the height direction, an end of the third side portion (2-3041) being connected with a first segment (2-3041a), an end of the fourth side portion (2-3042) being connected with a second segment (2-3042a), both the first segment (2-3041a) and the second segment (2-3042a) being parallel to the second transverse portion (2-3043) and respectively located on extension lines of a the second transverse portion (2-3043) on sides where the first segment (2-3041a) and the second segment (2-3042a) are located respectively, the third bracket (2-305) being rotatably connected to the first segment (2-3041a), the fourth bracket (2-306) being rotatably connected to the second segment (2-3042a).

Numbered Clause 32. The warehousing system according to any one of Numbered Clauses 22-24, wherein the transport device (2-10) further comprises a lifting mechanism (2-400) and a goods pick-up mechanism (2-500) provided at the column assembly (2-100), the lifting mechanism (2-400) being connected to the goods pick-up mechanism (2-500) and driving the goods pick-up mechanism (2-500) to move up and down along the column assembly (2-100), the goods pick-up mechanism (2-500) being configured for transporting goods at different heights on the goods shelves (2-20);
the lifting mechanism (2-400) comprises at least one third drive motor (2-401) and a reduction motor (2-402), the third drive motor (2-401) being fixed at top ends of the first column (2-101) and the second column (2-102), the third drive motor (2-401) being connected to the reduction motor (2-402);
a first driven wheel (2-403) being provided at a top end of the first column (2-101), a second driven wheel (2-404) being provided at a bottom end of the first column (2-101), the first driven wheel (2-403) and the second driven wheel (2-404) being synchronous wheels or sprockets, a first synchronous belt (2-405) or a first chain being sleeved on the first driven wheel (2-403) and the second driven wheel (2-404), the goods pick-up mechanism (2-500) being fixedly connected to the first synchronous belt (2-405) or the first chain;
a third driven wheel (2-406) being provided at a top end of the second column (2-102), a fourth driven wheel (2-407) being provided at a bottom end of the second column (2-102), the third driven wheel (2-406) and the fourth driven wheel (2-407) being synchronous wheels or sprockets, a second synchronous belt (2-408) or a second chain being sleeved on the third driven wheel (2-406) and the fourth driven wheel (2-407), the goods pick-up mechanism (2-500) being fixedly connected to the second synchronous belt (2-408) or the second chain;
the first driven wheel (2-403) and the third driven wheel (2-406) each being connected to an output shaft of the reduction motor (2-402); or the first driven wheel (2-403) being connected to the output shaft of the reduction motor (2-402), and the third driven wheel (2-406) being connected to the first driven wheel (2-403) via a coupling (2-409).

Numbered Clause 33. The warehousing system according to Numbered Clause 32, wherein the first column (2-101) and/or the second column (2-102) is provided with a third slide rail (2-103), and the goods pick-up mechanism (2-500) is provided with a slider (2-504) cooperating with the third slide rail (2-103), so that the goods pick-up mechanism moves in a straight line.

Numbered Clause 34. The warehousing system according to Numbered Clause 33, wherein each of the goods shelves (2-20) is provided with a plurality of storage positions (2-213) along both the height direction and the extending direction of the aisle (2-22), a depth of the goods shelf (2-20) being a single storage position (2-213) or a plurality of storage positions (2-213), a plurality of buffer positions (2-214) being provided below lowermost storage positions (2-213) among the plurality of storage positions, the buffer positions (2-214) being configured for temporarily storing goods.

Numbered Clause 35. The warehousing system according to Numbered Clause 34, wherein the first track (2-211) is located at a top of the goods shelves (2-20) and is lower than a height at which highest storage positions (2-213) are located, the second track (2-212) is located at a bottom of the goods shelves (2-20) and is higher than a height at which the buffer positions (2-214) are located, the third slide rail (2-103) extends above a plane where the highest storage positions (2-213) are located and extends below a plane where the buffer positions (2-214) are located;
the second sub-link (2-32) comprises a first vertical segment (2-32a) extending upward, a first horizontal segment (2-32b) connected to the first vertical segment (2-32a), and a second vertical segment (2-32c) extending downward and connected to the first horizontal segment (2-32b), a distance between the first vertical segment (2-32a) and the second vertical segment (2-32c) being greater than a distance between the first column (2-101) and the second column (2-102);
the fourth sub-link (2-42) comprises a third vertical segment (2-42a) extending downward, a second horizontal segment (2-42b) connected to the third vertical segment (2-42a), and a fourth vertical segment (2-42c) extending downward and connected to the second horizontal segment (2-42b), a distance between the third vertical segment (2-42a) and the fourth vertical segment (2-42c) being greater than the distance between the first column (2-101) and the second column (2-102).

Numbered Clause 36. The warehousing system according to Numbered Clause 35, wherein the first track (2-211) and the second track (2-212) are disposed facing each other, the first linkage mechanisms (2-30) and the second linkage mechanisms (2-40) are mirror-symmetrical about a midline of a line connecting the first track (2-211) and the second track (2-212), and the third linkage mechanisms (2-50) and the fourth linkage mechanisms (2-60) are mirror-symmetrical about the midline of the line connecting the first track (2-211) and the second track (2-212).

Numbered Clause 37. The warehousing system according to any one of Numbered Clauses 17-24, wherein each of the goods shelves (2-20) comprises a plurality of third columns (2-20a) spaced apart along the first direction and the second direction, the third columns (2-20a) being connected to each other by third crossbeams (2-20b);
respective one of the first goods shelf rails (2-2111) and respective one of the second goods shelf rails (2-2121) are fixed to the third crossbeams (2-20b) on both sides of same one of the goods shelves (2-20) along the second direction Y' for the transport device (2-10) to travel and to pick-up and place goods on goods shelves (2-20) on both sides of the aisle (2-22), the transport device (2-10) being provided on an outer side of the first goods shelf rails (2-2111) and the first transfer rail (2-2112), and outer side of the second goods shelf rails (2-2121) and the second transfer rail (2-2122); or,
respective one of the first goods shelf rails (2-2111) and respective one of the second goods shelf rails (2-2121) are fixed to the third crossbeams (2-20b) on the same side of two adjacent goods shelves (2-20) for the transport device (2-10) to travel and to pick-up and place goods on goods shelves (2-20) on both sides of the aisle (2-22), the transport device (2-10) being provided on an inner side of the first goods shelf rails (2-2111) and the first transfer rail (2-2112), and an inner side of the second goods shelf rails (2-2121) and the second transfer rail (2-2122).

Numbered Clause 38. The warehousing system according to any one of Numbered Clauses 17-24, wherein the transport device (2-10) further comprises a power supply mechanism (2-600) and a battery, the power supply mechanism (2-600) comprising a power supply line (2-601), a brush plate (2-602) and a brush block, the brush plate (2-602) being connected to the brush block, the power supply line (2-601) being provided below the first goods shelf rails (2-2111) and/or the first transfer rail (2-2112), the brush plate (2-602) being slidably connected to the power supply line (2-601), the brush block being electrically connected to the battery.

Numbered Clause 39. The warehousing system according to Numbered Clause 17 or 18, wherein the transport device (2-10) further comprises a third driving member and a fourth driving member (2-24), the third driving member being connected to a rotary shaft of respective one of the first connecting rails (2-2113), for driving the rotary shaft of the respective first connecting rails (2-2113) to rotate;
the fourth driving member (2-24) being connected to a rotary shaft of respective one of the second connecting rails (2-2123), for driving the rotary shaft of the respective second connecting rail (2-2123) to rotate.

Numbered Clause 40. A transport device, wherein the transport device (2-10) is capable of traveling with track switching, the transport device (2-10) comprising a control component, a column assembly (2-100), as well as at least one set of lifting mechanism (2-400), at least one set of driving mechanism and at least one set of goods pick-up mechanism (2-500) provided at the column assembly (2-100), the lifting mechanism (2-400) being connected to the goods pick-up mechanism (2-500) and driving the goods pick-up mechanism (2-500) to move up and down along the column assembly (2-100), the goods pick-up mechanism (2-500) being configured for transporting goods at different heights on goods shelves (2-20);
the column assembly (2-100) comprises a first column (2-101) and a second column (2-102) extending along a height direction of the goods shelves (2-20) and spaced apart in a direction perpendicular to the height direction;
the driving mechanism comprises a first roller (2-202) rotatably connected to the first column (2-101), a second roller (2-203) rotatably connected to the second column (2-102), and a telescopic assembly electrically connected to the control component, the first roller (2-202) and the second roller (2-203) being configured for traveling along tracks, at least one of the first roller (2-202) and the second roller (2-203) being connected to a first drive motor (2-201), so as to drive the first roller (2-202) and the second roller (2-203) to roll and drive the column assembly (2-100) to go straight or turn;
wherein the telescopic assembly is configured for changing a connection state of the tracks.

## Claims

1. A warehousing system, comprising:
a plurality of goods shelves (2-20) spaced apart, wherein an aisle (2-22) being formed between adjacent goods shelves (2-20);
a first track (2-211) and a second track (2-212), the first track (2-211) and the second track (2-212) being spaced apart in a height direction of the goods shelves (2-20) and arranged on an outer side of the goods shelves (2-20);
wherein the first track (2-211) comprises a plurality of first goods shelf rails (2-2111) arranged along a first direction (X') and located on at least one side of same one of the goods shelves (2-20) respectively, at least one first transfer rail (2-2112) arranged along a second direction (Y') and located on at least one side of the goods shelves (2-20), and first connecting rails (2-2113) provided at at least one end of each of the first goods shelf rails (2-2111) or at at least one end of each of the at least one first transfer rail (2-2112) respectively;
each of the first connecting rails (2-2113) is movably connected to an end of the first transfer rail (2-2112), and a free end of the first connecting rail (2-2113) can connect to or disconnect from an end of respective one of the first goods shelf rails (2-2111); or, each of the first connecting rails (2-2113) is movably connected to an end of respective one of the first goods shelf rails (2-2111), and a free end of the first connecting rail (2-2113) can connect to or disconnect from an end of respective one of the at least one first transfer rail (2-2112);
the second track (2-212) comprises a plurality of second goods shelf rails (2-2121) arranged along the first direction (X') and located on at least one side of same one of goods shelves (2-20), at least one second transfer rail (2-2122) arranged along the second direction (Y') and located on at least one side of the goods shelves (2-20), and second connecting rails (2-2123) provided at at least one end of each of the second goods shelf rails (2-2121) or at at least one end of each of the at least one second transfer rail (2-2122) respectively;
each of the second connecting rails (2-2123) is movably connected to an end of the second transfer rail (2-2122), and a free end of the second connecting rail (2-2123) can connect to or disconnect from an end of respective one of the second goods shelf rails (2-2121); or, each of the second connecting rails (2-2123) is movably connected to an end of respective one of the second goods shelf rails (2-2121), and a free end of the second connecting rail (2-2123) can connect to or disconnect from an end of respective one of the at least one second transfer rail (2-2122);
wherein the first direction (X') is an extending direction of the aisle (2-22), and the second direction (Y') intersects the first direction (X').

2. The warehousing system according to claim 1, wherein the first goods shelf rails (2-2111), the first transfer rail (2-2112), the second goods shelf rails (2-2121) and the second transfer rail (2-2122) are straight tracks, and the first connecting rails (2-2113) and the second connecting rails (2-2123) are curved rails;
the first transfer rail (2-2112) comprises a first bearing surface (2-2112a) as well as a first side wall (2-2112b) and a second side wall (2-2112c) provided on both sides of the first bearing surface (2-2112a), the first side wall (2-2112b) being disposed close to the first connecting rails (2-2113), the first side wall (2-2112b) having first openings, each of the first goods shelf rails (2-2111) comprising a first swinging member rotatably connected to the first side wall (2-2112b), the first swinging member being configured to open respective one of the first openings by rotation of respective one of the first connecting rails (2-2113), a first reset member being provided between the first swinging member and the first side wall (2-2112b) for automatically closing the respective one of the first openings;
the second transfer rail (2-2122) comprises a second bearing surface (2-2122a) as well as a third side wall (2-2122b) and a fourth side wall (2-2122c) provided on both sides of the second bearing surface (2-2122a), the third side wall (2-2122b) being disposed close to the second connecting rails (2-2123), the third side wall (2-2122b) having second openings (2-2122b1), the second transfer rail (2-2122) comprising second swinging members (2-2122b2) rotatably connected to the third side wall (2-2122b), each of the second swinging members (2-2122b2) being configured to open respective one of the second openings (2-2122b1) by the rotation of respective one of the second connecting rails (2-2123), a second reset member being provided between the second swinging member (2-2122b2) and the third side wall (2-2122b) for automatically closing the respective one of the second openings (2-2122b1).

3. The warehousing system according to claim 2, wherein the warehousing system further comprises first linkage mechanisms (2-30), second linkage mechanisms (2-40) and a transport device (2-10);
one end of each of the first linkage mechanisms (2-30) is connected to the first transfer rail (2-2112), and the other end of the first linkage mechanism (2-30) is connected to respective one of the first connecting rails (2-2113); one end of each of the second linkage mechanisms (2-40) is connected to the second transfer rail (2-2122), and the other end of the second linkage mechanisms (2-40) is connected to respective one of the second connecting rails (2-2123);
the transport device (2-10) travels along the first track (2-211) and the second track (2-212), and the transport device (2-10) comprises a control component, a column assembly (2-100), as well as a first driving mechanism (2-200) and a second driving mechanism (2-300) provided at the column assembly (2-100), the column assembly (2-100) comprising a first column (2-101) and a second column (2-102) extending along the height direction of the goods shelves (2-20) and spaced apart in a direction perpendicular to the height direction;
the first driving mechanism (2-200) comprises a first roller (2-202) rotatably connected to the first column (2-101), a second roller (2-203) rotatably connected to the second column (2-102), and a first telescopic assembly (2-240) electrically connected to the control component, at least one of the first roller (2-202) and the second roller (2-203) being connected to a first drive motor (2-201);
the second driving mechanism (2-300) comprises a third roller (2-302) rotatably connected to the first column (2-101), a fourth roller (2-303) rotatably connected to the second column (2-102), and a second telescopic assembly (2-311) electrically connected to the control component, at least one of the third roller (2-302) and the fourth roller (2-303) being connected to a second drive motor (2-301);
wherein when the transport device (2-10) switches track from the first direction (X') to the second direction (Y'), the transport device (2-10) can apply a centrifugal force to respective one of the first connecting rails (2-2113) and respective one of the second connecting rails (2-2123), enabling the respective first connecting rail (2-2113) to rotate relative to the first transfer rail (2-2112) and the respective second connecting rail (2-2123) to rotate relative to the second transfer rail (2-2122), thereby connecting the respective first connecting rail (2-2113) to the first transfer rail (2-2112) and connecting the respective second connecting rail (2-2123) to the second transfer rail (2-2122); when the transport device (2-10) switches track from the second direction (Y') to the first direction (X'), under drive of the control component, the first telescopic assembly (2-240) acts on respective one of the first linkage mechanisms (2-30) to connect respective one of the first connecting rails (2-2113) to respective one of the first goods shelf rails (2-2111), and the second telescopic assembly (2-311) acts on respective one of the second linkage mechanisms (2-40) to connect respective one of the second connecting rails (2-2123) to respective one of the second goods shelf rails (2-2121).

4. The warehousing system according to claim 3, wherein each of the first linkage mechanisms (2-30) comprises a first sub-link (2-31) and a second sub-link (2-32), the first sub-link (2-31) being rotatably connected to the first transfer rail (2-2112), the first sub-link (2-31) being rotatably connected to the second sub-link (2-32), the second sub-link (2-32) being rotatably connected to respective one of the first connecting rail (2-2113), a third reset member (2-33) being provided between the first sub-link (2-31) and the second sub-link (2-32), so that after the transport device (2-10) successfully switches track, the respective first connecting rail (2-2113) automatically resets under action of the third reset member (2-33);
each of the second linkage mechanisms (2-40) comprises a third sub-link (2-41) and a fourth sub-link (2-42), the third sub-link (2-41) being rotatably connected to the second transfer rail (2-2122), the third sub-link (2-41) being rotatably connected to the fourth sub-link (2-42), the fourth sub-link (2-42) being rotatably connected to respective one of the second connecting rails (2-2123), a fourth reset member (2-43) being provided between the third sub-link (2-41) and the fourth sub-link (2-42), so that after the transport device (2-10) successfully switches track, the respective second connecting rail (2-2123) automatically resets under action of the fourth reset member (2-43).

5. The warehousing system according to claim 4, wherein the first telescopic assembly (2-240) comprises a first driving member (2-2401) and a first telescopic member (2-2402) connected to the first driving member (2-2401), a telescopic direction of the first telescopic member (2-2402) being parallel to a width direction of the first track (2-211); the second telescopic assembly (2-311) comprises a second driving member (2-3111) and a second telescopic member (2-3112) connected to the second driving member (2-3111), a telescopic direction of the second telescopic member (2-3112) being parallel to a width direction of the second track (2-212);
an end of the first sub-link (2-31) close to the first transfer rail (2-2112) has a first inclined surface (2-31a); when the transport device (2-10) moves in a positive direction (Y'1) of the second direction and needs to switch track, the control component controls the first driving member (2-2401) to drive the first telescopic member (2-2402) to cooperate with the first inclined surface (2-31a) and enable the first sub-link (2-31) to rotate clockwise, thereby connecting the respective first connecting rail (2-2113) to the first transfer rail (2-2112);
an end of the third sub-link (2-41) close to the second transfer rail (2-2122) has a second inclined surface (2-41a); when the transport device (2-10) moves in the positive direction (Y'1) of the second direction and needs to switch track, the control component controls the second driving member (2-3111) to drive the second telescopic member (2-3112) to cooperate with the second inclined surface (2-41a) and enable the third sub-link (2-41) to rotate clockwise, thereby connecting the respective second connecting rail (2-2123) to the second transfer rail (2-2122).

6. The warehousing system according to claim 5, wherein the first driving mechanism (2-200) comprises a first crossbeam (2-204), as well as a first bracket (2-205) and a second bracket (2-206) rotatably connected to two ends of the first crossbeam (2-204), the second driving mechanism (2-300) comprises a second crossbeam (2-304), as well as a third bracket (2-305) and a fourth bracket (2-306) rotatably connected to two ends of the second crossbeam (2-304); there are two first telescopic assemblies (2-240) which are respectively mounted at the first bracket (2-205) and the second bracket (2-206); there are two second telescopic assemblies (2-311) which are mounted at the third bracket (2-305) and the fourth bracket (2-306); the first crossbeam (2-204) being arranged perpendicular to the first column (2-101) and the second column (2-102), the two ends of the first crossbeam (2-204) being fixedly connected to the first column (2-101) and the second column (2-102) respectively, a first rotating shaft (2-220) of each of the first bracket (2-205) and the second bracket (2-206) being parallel to the height direction of the goods shelves (2-20), the first roller (2-202) being rotatably connected to the first bracket (2-205), the second roller (2-203) being rotatably connected to the second bracket (2-206), a second rotating shaft (2-230) of each of the first roller (2-202) and the second roller (2-203) being perpendicular to the first rotating shaft (2-220), so that the first roller (2-202) is rotatably connected to the first column (2-101) and the second roller (2-203) is rotatably connected to the second column (2-102);
the second crossbeam (2-304) being arranged perpendicular to the first column (2-101) and the second column (2-102), the two ends of the second crossbeam (2-304) being fixedly connected to the first column (2-101) and the second column (2-102) respectively, a third rotating shaft (2-309) of each of the third bracket (2-305) and the fourth bracket (2-306) being parallel to the height direction of the goods shelves (2-20), the third roller (2-302) being rotatably connected to the third bracket (2-305), the fourth roller (2-303) being rotatably connected to the fourth bracket (2-306), a fourth rotating shaft (2-310) of each of the third roller (2-302) and the fourth roller (2-303) being perpendicular to the third rotating shaft (2-309), so that the third roller (2-302) is rotatably connected to the first column (2-101) and the fourth roller (2-303) is rotatably connected to the second column (2-102).

7. The warehousing system according to claim 6, wherein the first driving mechanism (2-200) comprises a first guide member and/or a second guide member, and the second driving mechanism (2-300) comprises a third guide member and/or a fourth guide member;
the first guide member and/or the second guide member contacts an inner surface of a first outer side wall (2-211a) of the first track (2-211), to apply a centrifugal force to respective one of the first connecting rails (2-2113) when the transport device (2-10) travels to the respective first connecting rail (2-2113), the first outer side wall (2-211a) being a side wall of the first track (2-211) away from a center of respective one of the goods shelves (2-20);
the third guide member and/or the fourth guide member contacts an inner surface of a second outer side wall (2-212a) of the second track (2-212), to apply a centrifugal force to the second connecting rails (2-2123) when the transport device (2-10) travels to the respective second connecting rail (2-2123), the second outer side wall (2-212a) being a side wall of the second track (2-212) away from a center of respective one of the goods shelves (2-20).

8. The warehousing system according to claim 7, wherein the first guide member is first guide wheels (2-207) provided on both sides of the first roller (2-202), outer peripheral walls of the first guide wheels (2-207) abutting against inner walls of the first track (2-211) on both sides of the first track (2-211), the first guide wheels (2-207) each being connected to the first bracket (2-205) via a first rotary shaft (2-207a) parallel to the height direction of the goods shelves (2-20), and the first guide wheels (2-207) each being rotatably connected to the first rotary shaft (2-207a);
the second guide member is second guide wheels (2-208) provided on both sides of the second roller (2-203), outer peripheral walls of the second guide wheels (2-208) butting against the inner walls of the first track (2-211) on both sides of the first track (2-211), the second guide wheels (2-208) each being connected to the second bracket (2-206) via a second rotary shaft (2-208a) parallel to the height direction of the goods shelves (2-20), and the second guide wheels (2-208) each being rotatably connected to the second rotary shaft (2-208a);
the third guide member is third guide wheels (2-307) provided on both sides of the third roller (2-302), outer peripheral walls of the third guide wheels (2-307) abutting against inner walls of the second track (2-212) on both sides of the second track (2-212), the third guide wheels (2-307) each being connected to the third bracket (2-305) via a third rotary shaft (2-307a) parallel to the height direction of the goods shelves (2-20), and the third guide wheels (2-307) each being rotatably connected to the third rotary shaft (2-307a);
the fourth guide member is fourth guide wheels (2-308) provided on both sides of the fourth roller (2-303), outer peripheral walls of the fourth guide wheels (2-308) abutting against the inner walls of the second track (2-212) on both sides of the second track (2-212), the fourth guide wheels (2-308) each being connected to the fourth bracket (2-306) via a fourth rotary shaft (2-308a) parallel to the height direction of the goods shelves (2-20), and the fourth guide wheels (2-308) each being rotatably connected to the fourth rotary shaft (2-308a).

9. The warehousing system according to any one of claims 7-8, wherein the warehousing system further comprises third linkage mechanisms (2-50) rotatably connected to the first transfer rail (2-2112), and fourth linkage mechanisms (2-60) rotatably connected to the second transfer rail (2-2122), each of the third linkage mechanism (2-50) being located between the first sub-link and the second sub-link (2-32), each of the fourth linkage mechanism (2-60) being located between the third sub-link (2-41) and the fourth sub-link (2-42);
each of the third linkage mechanisms (2-50) comprises a fifth sub-link (2-51), a sixth sub-link (2-52) and a seventh sub-link (2-53) rotatably connected respectively, the fifth sub-link (2-51) being rotatably connected to the second side wall (2-2112c), the seventh sub-link (2-53) being rotatably connected to the second side wall (2-2112c), a connection point of the fifth sub-link (2-51) being disposed close to a connection point of the first sub-link (2-31), the fifth sub-link (2-51) being provided with a first recessed portion, the respective first connecting rail (2-2113) being provided with a first protruding portion cooperating with the first recessed portion, the second side wall (2-2112c) being provided with first clearance portions, the first protruding portion cooperating with or releasing cooperation with the first recessed portion via respective one of the first clearance portions, so as to connect the respective first connecting rail (2-2113) with the first transfer rail (2-2112) or disconnect the respective first connecting rail (2-2113) from the first transfer rail (2-2112);
each of the fourth linkage mechanism (2-60) comprises an eighth sub-link (2-61), a ninth sub-link (2-62) and a tenth sub-link (2-63) rotatably connected respectively, a connection point of the eighth sub-link (2-61) being disposed close to a connection point of the third sub-link (2-41), the eighth sub-link (2-61) being rotatably connected to the fourth side wall (2-2122c), the tenth sub-link (2-63) being rotatably connected to the fourth side wall (2-2122c), the eighth sub-link (2-61) being provided with a second recessed portion (2-61a), the respective second connecting rail (2-2123) being provided with a second protruding portion (2-2123a) cooperating with the second recessed portion (2-61a), the fourth side wall (2-2122c) being provided with second clearance portions (2-2122c1), the second protruding portion (2-2123a) cooperating with or releasing cooperation with the second recessed portion (2-61a) through respective one of the second clearance portions (2-2122c1), so as to connect the respective second connecting rail (2-2123) with the second transfer rail (2-2122) or disconnect the respective second connecting rail (2-2123) from the second transfer rail (2-2122).

10. The warehousing system according to claim 9, wherein the third linkage mechanism (2-50) further comprises a first adapter (2-54), one end of the first adapter (2-54) being rotatably connected to the second side wall (2-2112c), the other end of the first adapter (2-54) being rotatably connected to the fifth sub-link (2-51); the fourth linkage mechanism (2-60) further comprises a second adapter (2-64), one end of the second adapter (2-64) being rotatably connected to the fourth side wall (2-2122c), the other end of the second adapter (2-64) being rotatably connected to the eighth sub-link (2-61).

11. The warehousing system according to claim 10, wherein first mounting portions are provided on a side of the second side wall (2-2112c) facing away from the first side wall (2-2112b), a middle part of the fifth sub-link (2-51) being rotatably connected to one end of the sixth sub-link (2-52), an end of the fifth sub-link (2-51) provided with the first recessed portion being rotatably connected to respective one of the first mounting portions; second mounting portions (2-2122c2) are provided on a side of the fourth side wall (2-2122c) facing away from the third side wall (2-2122b), a middle part of the eighth sub-link (2-61) being rotatably connected to one end of the ninth sub-link (2-62), an end of the eighth sub-link (2-61) provided with the second recessed portion (2-61a) being rotatably connected to respective one of the second mounting portions (2-2122c2).

12. The warehousing system according to claim 11, wherein the fifth sub-link (2-51) is provided with a third inclined surface and a fourth inclined surface connected to each other arranged sequentially along a direction away from the connection point of the fifth sub-link (2-51); after the respective first connecting rail (2-2113) is connected to the first transfer rail (2-2112), the fourth inclined surface abuts against a free end of the respective first connecting rail (2-2113); the seventh sub-link is provided with a fifth inclined surface, the fifth inclined surface being disposed close to a connection point of the seventh sub-link (2-53) with the second side wall (2-2112c); the eighth sub-link (2-61) is provided with a sixth inclined surface (2-61b) and a seventh inclined surface (2-61c) connected to each other arranged sequentially along a direction away from the connection point of the eighth sub-link (2-61); after the respective second connecting rail (2-2123) is connected to the second transfer rail (2-2122), the seventh inclined surface (2-61c) abuts against a free end of the respective second connecting rail (2-2123); the tenth sub-link (2-63) is provided with an eighth inclined surface (2-63a), the eighth inclined surface (2-63a) being disposed close to a connection point of the tenth sub-link (2-63) with the fourth side wall (2-2122c);
when the transport device (2-10) enters the respective first connecting rail (2-2113) from the first transfer rail (2-2112) and enters the respective second connecting rail (2-2123) from the second transfer rail (2-2122), under action of respective one of the first linkage mechanisms (2-30) and respective one of the second linkage mechanisms (2-40), the respective first connecting rail (2-2113) connects to the first transfer rail (2-2112) and the first protruding portion cooperates with the first recessed portion, and the respective second connecting rail (2-2123) connects to the second transfer rail (2-2122) and the second protruding portion (2-2123a) cooperates with the second recessed portion (2-61a); when the transport device (2-10) goes straight along the first transfer rail (2-2112) and the second transfer rail (2-2122) and moves in the positive direction (Y'1) of the second direction, the control component controls the first telescopic member (2-2402) located at a front end in a moving direction to extend and cooperate with the third inclined surface, so as to enable the fifth sub-link (2-51) to rotate counterclockwise, thereby releasing cooperation of the first protruding portion with the first recessed portion, and the control component controls the second telescopic member (2-3112) located at the front end in the moving direction to extend and cooperate with the sixth inclined surface (2-61b), so as to enable the eighth sub-link (2-61) to rotate counterclockwise, thereby releasing cooperation of the second protruding portion (2-2123a) with the second recessed portion (2-61a); when the transport device (2-10) goes straight along the first transfer rail (2-2112) and the second transfer rail (2-2122) and moves in a negative direction (Y'2) of the second direction, the control component controls the first telescopic member (2-2402) located at the front end in the moving direction to extend and cooperate with the fifth inclined surface, so as to enable the seventh sub-link (2-53) to rotate counterclockwise, thereby releasing cooperation of the first recessed portion with the first protruding portion, and the control component controls the second telescopic member (2-3112) located at the front end in the moving direction to extend and cooperate with the eighth inclined surface (2-63a), so as to enable the tenth sub-link (2-63) to rotate counterclockwise, thereby releasing cooperation of the second protruding portion (2-2123a) with the second recessed portion (2-61a);
when the transport device (2-10) enters the first transfer rail (2-2112) from the respective first connecting rail (2-2113) and enters the second transfer rail (2-2122) from the respective second connecting rail (2-2123), under action of the first guide member and/or the second guide member and the third guide member and/or the fourth guide member, the respective first connecting rail (2-2113) connects to the first transfer rail (2-2112) and the first protruding portion cooperates with the first recessed portion, and the respective second connecting rail (2-2123) connects to the second transfer rail (2-2122) and the second protruding portion (2-2123a) cooperates with the second recessed portion (2-61a); the control component controls the first telescopic member (2-2402) located at a rear end in the moving direction to extend and cooperate with the fourth inclined surface and enables the fifth sub-link (2-51) to rotate counterclockwise, thereby releasing cooperation of the first protruding portion with the first recessed portion, and the control component controls the second telescopic member (2-3112) located at the rear end in the moving direction to extend and cooperate with the seventh inclined surface (2-61c) and enables the eighth sub-link (2-61) to rotate counterclockwise, thereby releasing cooperation of the second protruding portion (2-2123a) with the second recessed portion (2-61a).

13. The warehousing system according to claim 12, wherein a height at which the first swinging member is located is lower than a height at which the first protruding portion is located; a height at which the second swinging member (2-2122b2) is located is lower than a height at which the second protruding portion (2-2123a) is located.

14. The warehousing system according to any one of claims 1-8, wherein each of the goods shelves (2-20) comprises a plurality of third columns (2-20a) spaced apart along the first direction (X') and the second direction (Y'), the third columns (2-20a) being connected to each other by third crossbeams (2-20b);
respective one of the first goods shelf rails (2-2111) and respective one of the second goods shelf rails (2-2121) are fixed to the third crossbeams (2-20b) on the same side of two adjacent goods shelves (2-20) for a transport device (2-10) to travel and to pick-up and place goods on goods shelves (2-20) on both sides of the aisle (2-22), the transport device (2-10) traveling along the first goods shelf rails (2-2111) and the first transfer rail (2-2112), and an inner side of the second goods shelf rails (2-2121) and the second transfer rail (2-2122).

15. The warehousing system according to any one of claims 1-8, wherein a transport device (2-10) further comprises a power supply mechanism (2-600) and a battery, the power supply mechanism (2-600) comprising a power supply line (2-601), a brush plate (2-602) and a brush block, the brush plate (2-602) being connected to the brush block, the power supply line (2-601) being provided below the first goods shelf rails (2-2111) and/or the first transfer rail (2-2112), the brush plate (2-602) being slidably connected to the power supply line (2-601), the brush block being electrically connected to the battery.
